(19)

Europäisches
Patentamt

European
Patent Office

Office européen
des brevets

(11) **EP 2 944 527 B1**

(12) **EUROPEAN PATENT SPECIFICATION**

(45) Date of publication and mention
of the grant of the patent:
**28.09.2016 Bulletin 2016/39**

(51) Int Cl.:
***B60T 8/17*** *(2006.01)*

(21) Application number: **15166053.7**

(22) Date of filing: **30.04.2015**

(54) **MEASUREMENT DATA ACQUISITION SYSTEM, SADDLED VEHICLE HAVING MEASUREMENT DATA ACQUISITION SYSTEM, METHOD, AND COMPUTER PROGRAM**

MESSDATENGEWINNUNGSSYSTEM, SATTELFAHRZEUG MIT MESSDATENGEWINNUNGSSYSTEM, VERFAHREN UND COMPUTERPROGRAMM

SYSTÈME D'ACQUISITION DE DONNÉES DE MESURE, VÉHICULE À SELLE AYANT UN SYSTÈME D'ACQUISITION DE DONNÉES DE MESURE, PROCÉDÉ ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2014 JP 2014099918**

(43) Date of publication of application:
**18.11.2015 Bulletin 2015/47**

(73) Proprietor: **Yamaha Hatsudoki Kabushiki Kaisha Iwata-shi, Shizuoka-ken 438-8501 (JP)**

(72) Inventor: **Takahashi, Goh Shizuoka-ken, Shizuoka 438-8501 (JP)**

(74) Representative: **Moreland, David Marks & Clerk LLP Aurora 120 Bothwell Street Glasgow G2 7JS (GB)**

(56) References cited:
**EP-A1- 2 641 819     EP-A2- 0 476 580
EP-A2- 0 575 991     DE-A1-102007 034 843
US-A1- 2011 095 599**

EP 2 944 527 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF INVENTION**

The present invention relates to a stability control system to be applied to a vehicle, straddle-type vehicle or saddled vehicle, and a corresponding vehicle, computer program product and method.

**BACKGROUND TO INVENTION**

Some motorcycles feature stability control technology, such as a traction control system or an antilock braking system (hereinafter referred to as "ABS"). For example, generally speaking, the traction control system relies on a difference between wheel rotation speeds of the front and rear wheels to detect a spin of the rear wheel, which is a driving wheel, and controls the output of the engine. Similarly, the ABS controls the brakes based on wheel rotation speeds of the front and rear wheels.

However, if the tire outer diameter changes from its design value due to a tire exchange with a tire of a different radius, tire wear, etc then problems may occur such as misdetection of rear wheel spins, inappropriate suppression of output, or inappropriate timing of ABS intervention. Therefore, the ratio between front- and rear-wheel rotations is stored every time when certain conditions are met, and are utilized as a tire radius correction value for calculation purposes, thereby preventing misdetection of rear wheel spins.

Japanese Laid-Open Patent Publication No. 2000-127940 (hereinafter referred to as "Patent Document 1") relates to ABS control techniques. The technique of Patent Document 1 incessantly detects the wheel speed difference between the front and rear wheels, and if the wheel speed difference continues to exceed a predetermined value for a predetermined time or longer, gradually brings the wheel speed of one wheel closer to the wheel speed of the other, so as to fall within a predetermined range therefrom. This can suppress inappropriate operations, such as excessive ABS intervention due to slip rate misdetections, or lack of intervention when it is needed.

Moreover, U. S. Patent No. 7,469,975 (hereinafter referred to as "Patent Document 2") relates to a slip control technique in the case where the vehicle is inclined. In the technique of Patent Document 2, tire characteristics data including the tire lateral radius is retained, and based on a mathematical function involving the tire characteristics data and an inclination angle that is detected with a tilt sensor braking/driving force is controlled. This realizes a control that takes into account the fact that a slip signal may be distorted because of differing geometries between the front and rear wheels that arise with vehicle inclination.

In order to operate the traction control system or ABS more accurately, it is necessary to more correctly determine the tire radius or slip rate (or slip amount) at the tangential point of the tire, because the actual rotating radius of the wheel may deviate from the design value of the tire radius. This makes it necessary to correct the slip rate (or slip amount) through learning of the tire radius by using data during travel, and operate the traction control system or ABS based on such correction values.

The aforementioned technique of Patent Document 1 relates to a technique for ABS. In Patent Document 1, the speed difference between the front and rear wheels is reduced in situations where no tire slip is presumably occurring, e.g., during travel at a constant speed, as opposed to during driving/braking. In this manner, however, learning will take place also when the vehicle is inclined so as to affect the tire radius at the tangential point, e.g., when traveling on a loop or arched bridge or through a rotary. The resultant slip rate (or slip amount) may not be accurate.

Moreover, the technique of Patent Document 2 is usable for the traction control or ABS. The technique of Patent Document 2, which is directed to correcting changes in the effective tire radius that occur due to inclination of the vehicle body and the tire profile, does not aim to determine conditions for conducting tire radius learning.

Furthermore, the effective tire radius as corrected by the technique of Patent Document 2 may not even be accurate. In Patent Document 2, the tire lateral radius value in a stationary state of the tire is used as tire characteristics data. The cross-sectional shape (profile) of a tire is known to differ between the dynamic shape during travel and the static shape while the vehicle is stopped. Under static value-based control, a misdetection may occur that a slip is still occurring although it is actually not.

EP 0 575 991 describes a device for calculating a vehicle banking angle from a peripheral velocity of a front wheel of a vehicle and a difference in peripheral velocity between the front and rear wheels. The device comprises storing means for storing as data a relationship (in the form of a look up table LUT) between vehicle banking angle, peripheral velocity of the front wheel of a vehicle and a difference in peripheral velocity between the front and rear wheels. If it is decided that the brakes are not in operation, that the vehicle reference speed is between 60 and 70 km/h and that a steering angle detected by a steering angle sensor is greater than or equal to 2 degrees, then the device calculates a banking angle of the vehicle by comparing a measured current value of the peripheral velocity of the front wheel and a determined current difference in peripheral velocity between the front and rear wheels with the look up table LUT that correlates the vehicle bank angle with the peripheral velocity of the front wheel of the vehicle and the difference in peripheral velocity between the front and rear wheels in order to determine the banking angle.

## SUMMARY OF INVENTION

Various aspects of the present invention are defined in the independent claims. Some preferred features are defined in the dependent claims.

At least one embodiment of the present invention provides a stability control system which is able to solve one or more of the aforementioned problems and a vehicle, such as a straddle-type vehicle or saddled vehicle including the same.

According to a first aspect of the present invention there is a measurement data acquisition system for acquiring measurement data from or by using a test vehicle, having a first wheel and a second wheel. The measurement data acquisition system comprises: a wheel rotation speed sensor configured to acquire a first wheel rotation speed, wherein the first wheel rotation speed is a rotation speed of the first wheel. The measurement data acquisition system comprises a vehicle speed sensor configured to acquire a vehicle speed of the test vehicle. The measurement data acquisition system comprises an attitude detection unit configured to acquire a bank angle of a vehicle body of the vehicle. The measurement data acquisition system comprises an arithmetic unit configured to acquire measurement data representing a relationship between the first wheel rotation speed and the vehicle speed during travel at a predetermined bank angle and in the absence of any braking force and in the absence of any driving force. The measurement data comprises or is comprised in a correction value table that is to be installed or is installable in a predetermined or subject vehicle for use in determining a relationship between the rotation speed of a wheel of the predetermined or subject vehicle and the vehicle speed of the predetermined or subject vehicle during travel of the predetermined or subject vehicle at the predetermined bank angle.

The attitude detection unit may acquire a plurality of bank angles, e.g. in chronological transition. For each of the plurality of bank angles, the arithmetic unit may acquire measurement data, which may represent a relationship between the first wheel rotation speed and the vehicle speed.

The arithmetic unit may be configured to acquire measurement data during travel with the predetermined bank angle being substantially 0° and/or in the absence of any braking force or driving force, wherein the measurement data may represent a relationship between the first wheel rotation speed and the vehicle speed.

The arithmetic unit may be configured to acquire measurement data during travel with the predetermined bank angle being substantially 0° and in the absence of any driving force, wherein the measurement data may represent a relationship between the first wheel rotation speed and the vehicle speed.

First measurement data, e.g. of the acquired measurement data, may represent or be indicative of a relationship between the first wheel rotation speed and the vehicle speed acquired during travel in the absence of any driving force. Second measurement data, e.g. of the acquired measurement data, may represent or be indicative of a relationship between the first wheel rotation speed and the vehicle speed acquired during travel in the presence of driving force. The arithmetic unit may be configured to determine a difference between the first measurement data and the second measurement data as an influence of the driving force on the relationship between the first wheel rotation speed and the vehicle speed.

The arithmetic unit may be configured to acquire measurement data during travel with the predetermined bank angle being an angle substantially differing from 0° and in the absence of any driving force, wherein the measurement data may represent or be indicative of a relationship between the first wheel rotation speed and the vehicle speed.

First measurement data, e.g. of the acquired measurement data, may represent or be indicative of a relationship between the first wheel rotation speed and the vehicle speed acquired during travel with the predetermined bank angle being substantially 0°.

Second measurement data, e.g. of the acquired measurement data, may represent or be indicative of a relationship between the first wheel rotation speed and the vehicle speed acquired during travel with the predetermined bank angle being an angle substantially differing from 0°.

The arithmetic unit may be configured to determine a difference between the first measurement data and the second measurement data, e.g. as an influence of the bank angle on the relationship between the first wheel rotation speed and the vehicle speed.

The vehicle, e.g. the test vehicle, may have a plurality of travel modes, e.g. with different tolerable slip amounts. A different driving force may be allowed to act for each of the plurality of travel modes. The arithmetic unit may be configured to acquire the second measurement data during travel for two or more or each of the different driving forces.

The vehicle speed sensor may acquire the vehicle speed by utilizing the global positioning system (GPS).

The vehicle speed sensor may acquire a second wheel rotation speed as the vehicle speed, wherein the second wheel rotation speed may be a rotation speed of the second wheel.

The measurement data may be installable or to be installed in the predetermined or subject vehicle, e.g. together with information representing a ratio between rates of change in the effective radii of the front and rear tires in accordance with the bank angle, which may be for use in determining a relationship between the rotation speed of a wheel of the predetermined or subject vehicle and the vehicle speed of the predetermined or subject vehicle during travel of the predetermined or subject vehicle at the predetermined bank angle.

According to a second aspect of the present invention is a measurement data acquisition system for acquiring measurement data by using a test vehicle having a first wheel and a second wheel. The measurement data acquisition system comprises wheel rotation speed sensors configured to acquire a first wheel rotation speed and a second wheel rotation speed. The first wheel rotation speed and the second wheel rotation speed are respective rotation speeds of the first wheel and the second wheel. The measurement data acquisition system comprises an arithmetic unit configured to acquire measurement data representing a relationship between the first wheel rotation speed and the second wheel rotation speed obtained during travel in the absence of any driving force and in the absence of any braking force. The measurement data is acquired at least in accordance with the first wheel rotation speed. The measurement data comprises or is comprised in a correction value table that is installed or installable in a predetermined or subject vehicle for use in determining a relationship between the first wheel rotation speed and the second wheel rotation speed of the predetermined or subject vehicle, given a first wheel rotation speed of the predetermined or subject vehicle.

With the stability control system disclosed herein, the slip rate or slip amount may be calculated more accurately, whereby attitude control such as traction control or antilock braking control can be realized in a more stable manner.

According to a third aspect of the present invention is a vehicle. The vehicle comprises a brake that generates braking force. The vehicle comprises a motor that generates driving force. The vehicle comprises the measurement data acquisition system of any of any of the first and/or second aspects. The vehicle comprises a storage device configured to store acquired data.

According to a fourth aspect of the present invention is a method of acquiring measurement data from or by using a test vehicle. The test vehicle comprises a first wheel. The test vehicle comprises a second wheel. The test vehicle comprises a wheel rotation speed sensor. The test vehicle comprises a vehicle speed sensor. The test vehicle comprises an attitude detection unit. The test vehicle comprises an arithmetic unit.

The method comprises acquiring a first wheel rotation speed using the wheel rotation speed sensor. The first wheel rotation speed is a rotation speed of the first wheel.

The method comprises acquiring a vehicle speed of the test vehicle by using the vehicle speed sensor.

The method comprises acquiring a bank angle of a vehicle body of the test vehicle by using the attitude detection unit.

The method comprises, during travel at a predetermined bank angle and in the absence of any braking force and in the absence of any driving force, acquiring measurement data representing a relationship between the first wheel rotation speed and the vehicle speed by using the arithmetic unit. The measurement data comprises or is comprised in a correction value table that is installable or to be installed in a predetermined or subject vehicle for use in determining a relationship between the rotation speed of a wheel of the predetermined or subject vehicle and the vehicle speed of the predetermined or subject vehicle during travel of the predetermined or subject vehicle at the predetermined bank angle.

According to a fifth aspect of the present invention is a method of acquiring measurement data from or by using a test vehicle. The test vehicle comprises a first wheel. The test vehicle comprises a second wheel. The test vehicle comprises wheel rotation speed sensors. The test vehicle comprises an arithmetic unit.

The method comprises acquiring a first wheel rotation speed and a second wheel rotation speed by using the wheel rotation speed sensors, the first wheel rotation speed and the second wheel rotation speed being respective rotation speeds of the first wheel and the second wheel.

The method comprises, during travel in the absence of any driving force and in the absence of any braking force, acquiring measurement data representing a relationship between the first wheel rotation speed and the second wheel rotation speed by using the arithmetic unit. The measurement data comprises or is comprised in a correction value table that is installable or to be installed in a predetermined or subject vehicle for use in determining a relationship between the first wheel rotation speed and the second wheel rotation speed of the predetermined or subject vehicle given a first wheel rotation speed of the predetermined or subject vehicle. The measurement data is acquired at least in accordance with the first wheel rotation speed.

According to a sixth aspect of the present invention is a computer program to be executed or executable to acquire measurement data from or by using a test vehicle. The test vehicle comprises a first wheel. The test vehicle comprises a second wheel. The test vehicle comprises a wheel rotation speed sensor. The test vehicle comprises a vehicle speed sensor. The test vehicle comprises an attitude detection unit. The test vehicle comprises an arithmetic unit. The computer program is executed or executable by the arithmetic unit.

The computer program causes the arithmetic unit to execute the process of receiving a first wheel rotation speed, which is acquired by using the wheel rotation speed sensor. The first wheel rotation speed is a rotation speed of the first wheel.

The computer program causes the arithmetic unit to execute the process of receiving a vehicle speed of the test vehicle, which is acquired by using the vehicle speed sensor.

The computer program causes the arithmetic unit to execute the process of receiving a bank angle of a vehicle body of the test vehicle, which is acquired by using the attitude detection unit.

The computer program cause the arithmetic unit to execute the process of, during travel at a predetermined bank angle and in the absence of any braking force and in the absence of any driving force, acquiring measurement data representing a relationship between the first wheel rotation speed and the vehicle speed. The measurement data comprises or is comprised in a correction value table that is installable or to be installed in a predetermined or subject vehicle for use in determining a relationship between the rotation speed of a wheel of the predetermined or subject vehicle and the vehicle speed of the predetermined or subject vehicle during travel of the predetermined or subject vehicle at the predetermined bank angle.

According to a seventh aspect of the present invention is a computer program, which is executed or executable to acquire measurement data from or by using a test vehicle. The test vehicle comprises a first wheel. The test vehicle comprises a second wheel. The test vehicle comprises wheel rotation speed sensors. The test vehicle comprises an arithmetic unit. The computer program is executed or executable by the arithmetic unit.

The computer program causes the arithmetic unit to execute the process of receiving a first wheel rotation speed and a second wheel rotation speed, the first wheel rotation speed and the second wheel rotation speed being respective rotation speeds of the first wheel and the second wheel, which are acquired by using the wheel rotation speed sensors.

The computer program causes the arithmetic unit to execute the process of, during travel in the absence of any driving force and in the absence of any driving force braking force, acquiring measurement data representing a relationship between the first wheel rotation speed and the second wheel rotation speed. The measurement data comprises or is comprised in a correction value table that is installable or to be installed in a predetermined or subject vehicle for use in determining a relationship between the first wheel rotation speed and the second wheel rotation speed of the predetermined or subject vehicle, given a first wheel rotation speed of the predetermined or subject vehicle. The measurement data is acquired at least in accordance with the first wheel rotation speed.

These general and specific aspects may be implemented using a system, a method, and a computer program, and any combination of systems, methods, and computer programs.

It will be appreciated that features analogous to those described above in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

## BRIEF DESCRIPTION OF DRAWINGS

Embodiments of the present invention will now be described, by way of example only, with reference to the accompanying drawings, which are:

| | |
|---|---|
| **Figure 1** | a diagram showing an example of stability control technology for controlling the attitude of a motorcycle. |
| **Figure 2** | a diagram showing the construction of a motorcycle 100 equipped with a traction control system which utilizes slip amounts. |
| **Figure 3** | a diagram showing the procedure of a slip component calculation process. |
| **Figure 4** | a diagram showing a more detailed procedure of an illustrative slip amount calculation process according to the present invention. |
| **Figure 5** | a diagram showing an exemplary procedure of a tire radius learning process. |
| **Figure 6** | a diagram showing an exemplary procedure of a tire radius learning process which takes the bank angle into consideration. |
| **Figure 7** | a block diagram showing the construction of a stability control system 110 according to a first illustrative embodiment. |
| **Figure 8** | a control block diagram of the stability control system 110. |
| **Figure 9** | a diagram showing a procedure of the operation of the stability control system 110. |
| **Figure 10** | a diagram showing an exemplary procedure of a tire radius learning process which utilizes tire expansion correction values. |
| **Figure 11** | a diagram showing plotting results of each vehicle speed when in a state that is free of driving force influences and the front-rear wheel speed ratio at that vehicle speed. |

| | |
|---|---|
| **Figure 12** | a control block diagram of a stability control system 120 according to a second illustrative embodiment. |
| **Figure 13** | a diagram showing a procedure of the operation of the stability control system 120 according to the second illustrative embodiment. |
| **Figure 14** | a diagram showing tire radius correction values as updated according to learning results. |
| **Figure 15** | a block diagram showing the construction of a stability control system 130 according to a third illustrative embodiment. |
| **Figure 16** | a control block diagram concerning an arithmetic unit 30 of the stability control system 130. |
| **Figure 17** | a diagram showing a procedure of the operation of the stability control system 130. |
| **Figure 18** | a control block diagram of the ECU 10 according to a fourth illustrative embodiment. |
| **Figures 19 (a), (b), and (c)** | a diagram showing respectively a chronological relationship between the reference vehicle speed, the bank angle (inclination angle), and acquired correction values according to a fifth illustrative embodiment. |
| **Figure 20** | a block diagram showing the construction of a stability control system 160 according to a sixth illustrative embodiment. |
| **Figure 21** | a control block diagram of the stability control system 160. |
| **Figure 22** | a block diagram showing the construction of a stability control system 170 according to seventh illustrative embodiment. |
| **Figure 23** | a control block diagram of the stability control system 170. |
| **Figure 24** | a diagram showing a tangential point A at which a tire comes in contact with the ground when the vehicle body is banked. |
| **Figure 25** | a diagram showing slips (a), (b), (c), (d), and (e) that may be encompassed during travel. |
| **Figure 26** | a plot diagram of data obtained by measuring the cross-sectional shape of a tire in a stationary state. |
| **Figure 27** | a diagram showing differences between the static cross-sectional shape and the dynamic cross-sectional shape, as measured by the inventors. |
| **Figure 28** | a block diagram showing the construction of a measurement data acquisition system 180 of a motorcycle 100 according to an eighth illustrative Embodiment. |
| **Figure 29** | a diagram showing a procedure for lean correction according to the eighth illustrative Embodiment. |
| **Figure 30** | a diagram showing distinction between slip components, in connection with step S51 in Figure 29. |
| **Figure 31** | a diagram showing measurement data concerning expansion characteristics. |
| **Figure 32** | a graph providing a more simplified representation of the measurement data in Figure 31. |
| **Figure 33** | a diagram showing distinction between slip components, in connection with step S52 in Figure 29. |
| **Figure 34** | a diagram showing measurement data concerning running characteristics during travel under driving force. |
| **Figure 35** | a graph providing a more simplified representation of the measurement data in Figure 34. |
| **Figure 36** | a diagram showing distinction between slip components, in connection with step S53 in Figure 29. |
| **Figure 37** | a diagram showing measurement data concerning running characteristics during travel, including states in which the vehicle body 1 is inclined. |
| **Figure 38** | a graph providing a more simplified representation of the measurement data in Figure 37. |
| **Figures 39(a) and 39(b)** | diagrams showing results of measuring the rates of change in the effective radii of the front and rear wheels. |
| **Figures 40(a), 40(b) and 40(c)** | diagrams showing results of performing lean correction for slip amounts in braking/driving force control. |

## DETAILED DESCRIPTION OF DRAWINGS

Hereinafter, causes for the aforementioned problems of conventional techniques will be first described, and then embodiments of saddled vehicles according to the present invention will be described. Although saddled vehicles will be described as motorcycles in the present specification, this is only an example. It may be any vehicle having three or more wheels.

In the present specification, the terms "detect" and "acquire" are differentiated as follows, in principle.

(1) To "detect physical parameter *a*" means to obtain information concerning a value (measured value) of physical parameter *a* through measurement of physical parameter *a*.
(2) To "acquire physical parameter *a*" encompasses to "detect physical parameter *a*" and also to determine the value of physical parameter *a* based on information which is detected by a sensor or the like.

Moreover, "acquisition" may encompass the following operations, for example;

(2.1) calculating the value of physical parameter *a* by substituting a measured value into a predetermined arithmetic expression;
(2.2) referring to a table or a database which indicates correspondence between measured values and values of physical parameter *a* to read a value of physical parameter *a* corresponding to a measured value therefrom; and
(2.3) estimating a value of physical parameter *a* from the measured value.

For example, acquiring a yaw rate includes not only directly detecting a yaw rate by means of a yaw rate sensor, but also obtaining an estimated value of yaw rate through arithmetic operations of an output from elsewhere, e.g. from an attitude angle sensor or a velocity sensor. This similarly applies to any physical parameter other than yaw rate, e.g., bank angle.

Note that, when a wheel speed is to be detected, a count value per unit time of the electric pulses which are output from a wheel speed sensor provided near the wheel axis are usually utilized as the wheel speed, these electric pulses being output in accordance with the rotation speed of the wheel. Although the count value is proportional to the wheel speed, this proportionality constant is usually not one, and therefore the count value is not equal to the value of wheel speed itself (i.e., velocity in a tangential direction on the outer peripheral surface of the wheel). However, the respective terms in the equation for calculating a slip rate $\lambda$ or a slip amount, described later, are wheel speeds. Therefore, so long as the proportionality constant between the wheel speed and the count value is set to an identical value between the respective terms, count values may optionally be treated as wheel speeds.

In motorcycle stability control technology, such as the traction control system and ABS, it is common to use wheel rotation speeds of the front wheel and the rear wheel.

For example, the slip rate $\lambda$ of the rear wheel under driving is typically expressed by the following equation. It may also be expressed in percentages by multiplying the right-hand side of the following equation by 100.

$$\lambda=(V_r-V)/V_r$$

A slip amount can be expressed as $(V_r-V)$, for example. Hereinafter, the slip rate and the slip amount may be collectively referred to as the slip component.

Herein, V is a vehicle speed, and $V_r$ is a wheel speed of the rear wheel (driving wheel). Generally speaking, a "vehicle speed" is a moving velocity of a motorcycle with respect to the road surface. A "wheel speed" is a velocity in a tangential direction on the outer peripheral surface of a wheel, as referenced to the rotation axis of the wheel. A wheel speed is proportional to "the rotation speed (revolutions per unit time) of the wheel" and "the rotating radius of the wheel", and generally expressed as a product of the "rotational angular velocity of the wheel" and "the rotating radius of the wheel". According to the above equations, when the vehicle speed V is equal to the wheel speed $V_r$ of the rear wheel, the slip component will equal zero.

In order to determine the wheel speed of the front wheel or the rear wheel, the tire radius is utilized as a rotating radius of the wheel. A design value of the tire radius can be determined by the manufacturer. However, in actuality, the actual rotating radius of a wheel may deviate from the design value of the tire radius, because of tire air pressure variations, changes in the tangential point between the tire and the ground due to vehicle body inclination (bank), and so on. This may affect the results of slip rate and/or slip component (slip amount) calculations. Thus, it is believed that improvements in controllability could be attained by accurate evaluation of deviations from the design value.

Now, stability control technology will be described.

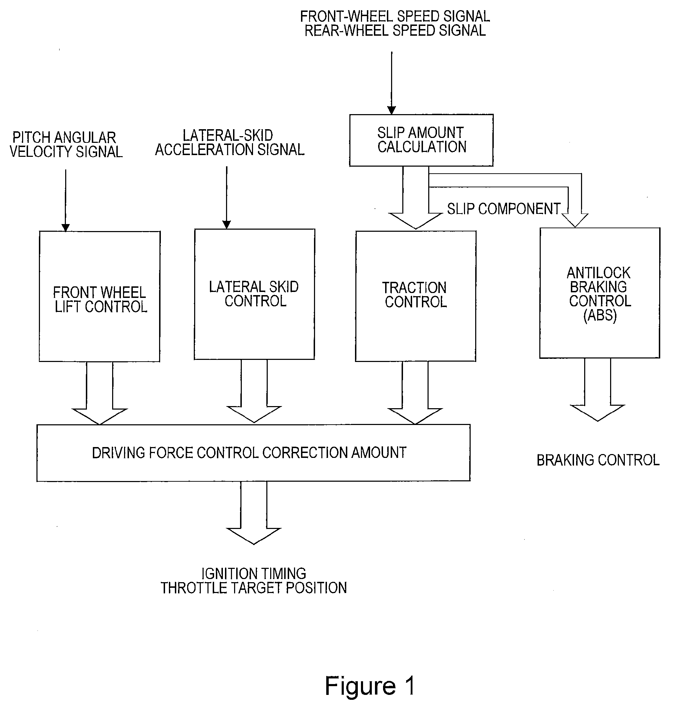

Figure 1 shows an example of stability control technology for controlling the attitude of a motorcycle. Known examples of stability control technology are front wheel lift control, lateral skid control, traction control, and antilock braking control techniques. Among these, front wheel lift control, lateral skid control, and traction control are techniques of controlling the output (driving force) of the engine to prevent tire spinning and the like and stabilize the vehicle body. On the other hand, antilock braking control is a technique of controlling the brakes to keep the rate of slip between the tire and the road surface within a predetermined range, thus simultaneously ensuring optimum braking force and steerability.

In traction control and antilock braking control, the aforementioned slip component is calculated by using a wheel speed signal of the front wheel and a wheel speed signal of the rear wheel. Then, in traction control, a correction amount for controlling the driving force is calculated based on this calculation result, and the ignition timing and throttle target position of the engine are set, thereby controlling the engine output. In antilock braking control, on the other hand, the brakes are rapidly switched between activation and non-activation, so as to maintain the slip rate in a predetermined range based on the result of slip component calculation. As a result, while ensuring optimum braking force, steerability is also ensured by preventing tire locking.

The present specification will describe a technique for accurately determining the slip component. Hereinafter, mainly traction control will be described as an example. However, it will be appreciated that the present invention may also be applicable to other techniques that utilize slip amounts and/or are dependent on the accuracy of wheel diameter.

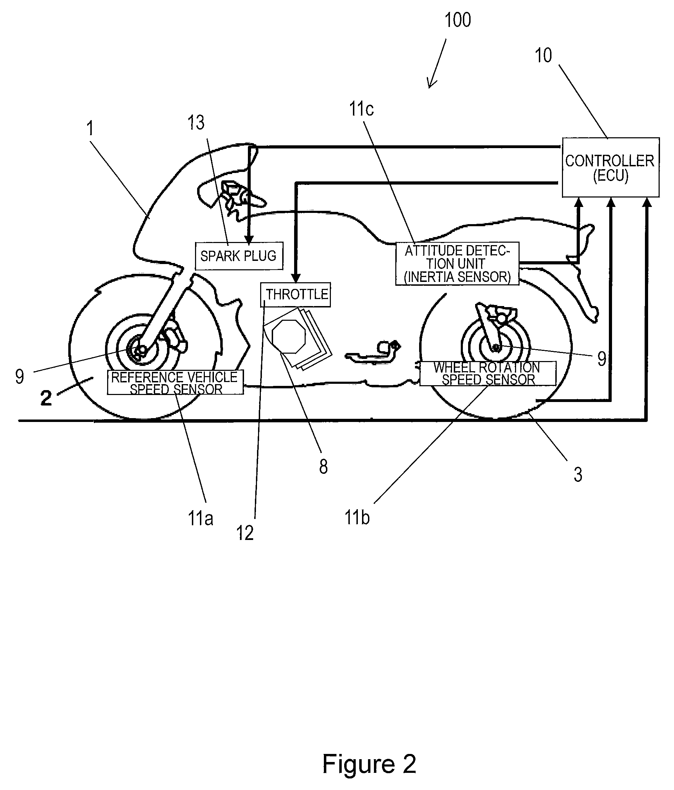

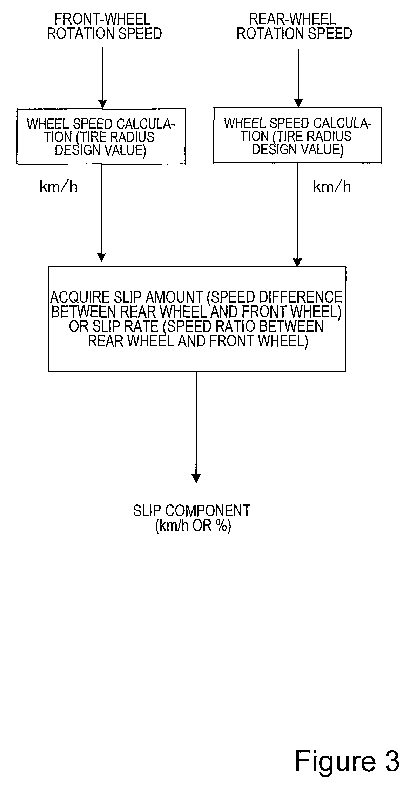

Figure 2 shows the construction of a motorcycle 100 equipped with a traction control system that utilizes slip amounts, by way of an illustrative example. Figure 3 shows the fundamental procedure of a slip component calculation process.

First, as shown in Figure 2, the vehicle, i.e., the motorcycle 100, includes a vehicle body 1, a front wheel 2, and a rear wheel 3. The front wheel 2 is attached at the front of the vehicle body 1, and the rear wheel 3 is attached at the rear of the vehicle body 1. On the vehicle body 1, an engine 8 that generates driving force and front and rear wheel brakes 9 that generate braking force are mounted. The driving force from the engine 8 is controlled by the position of a throttle 12 and the ignition timing of a spark plug 13. The braking forces from the front and rear wheel brakes 9 are controlled as their brake pressure is altered through brake lever manipulations of the rider, or by a braking/driving force adjustment unit that will be described later. Although it is contemplated that the engine 8 operates on gasoline, it may be an electric motor which operates on electric power. In other words, it may be any motor that generates driving force.

Moreover, a controller 10 (hereinafter referred to as the "ECU 10") is provided on the vehicle body 1. Although Figure 2 illustrates the controller 10 at a position away from the vehicle body 1, this is merely for convenience of illustration in order to clarify inputs and outputs to/from the controller 10. In actuality, the controller 10 is provided on the vehicle body 1.

Furthermore, a reference vehicle speed sensor 11 a and a wheel rotation speed sensor 11 b are provided on the vehicle body 1. The reference vehicle speed sensor 11 a is a sensor that detects vehicle speed information to serve as a reference. The reference vehicle speed sensor 11 a may be a sensor that detects the rotation speed of the front wheel, for example, but may be any sensor that is capable of acquiring vehicle speed, e.g. a sensor that is capable of acquiring vehicle speed via a GPS (Global Positioning System). Alternatively, an integrated value of an acceleration sensor may be acquired as vehicle speed. The wheel rotation speed sensor 11 b may be a sensor that detects rotation speed of the rear wheel as a target of, or that is subject to tire radius correction, for example.

On the metal part of the front wheel 2, a front-wheel wheel speed sensor that detects rotation speed (front-wheel rotation speed) of the front wheel 2 is provided. On the metal part of the rear wheel 3, a wheel rotation speed sensor 11 b that detects rotation speed (rear-wheel rotation speed) of the rear wheel 3 is provided. An attitude detection unit 11c that acquires an inclination angle (bank angle) of the vehicle body 1 is provided at the rear of the vehicle body 1. For example, the attitude detection unit 11c includes an angular velocity sensor and an acceleration sensor (neither of which is shown), and an arithmetic circuit that acquires attitude information through arithmetic operations based on information that is output from them. These will be described later in detail.

Output signals from the reference vehicle speed sensor 11a, the wheel rotation speed sensor 11 b, and the attitude detection unit 11c are supplied to the ECU 10.

The process shown in Figure 3 is performed in the following procedure. Upon receiving information of the front-wheel rotation speed and rear-wheel rotation speed, the ECU 10 calculates the wheel speeds of the front wheel and rear wheel by using tire radius design values. Next, the ECU 10 calculates a slip amount and/or a slip rate from the wheel speeds of the front wheel and rear wheel. As mentioned earlier, a slip amount is a difference between the wheel speeds of the rear wheel and the front wheel, whereas a slip rate is determined as a ratio between the wheel speeds of the rear wheel and the front wheel. Here, the speed of the front wheel, which is a non-driving wheel, is regarded as the vehicle speed of the motorcycle. Accordingly, the slip rate can be determined as the aforementioned λ given in the above equation. In this manner, the controller acquires a slip amount or a slip rate.

Based on the acquired slip component and the information of the bank angle of the vehicle body 1 acquired by the attitude detection unit 11c, the ECU 10 controls the driving force of the engine (not shown) by adjusting the position of the throttle 12 and/or the ignition timing of the spark plug 13. As a result, tire spinning may be prevented.

The description of a stability control system according to each embodiment presented below will also rely upon the aforementioned construction of the motorcycle 100 illustrated in Figure 2.

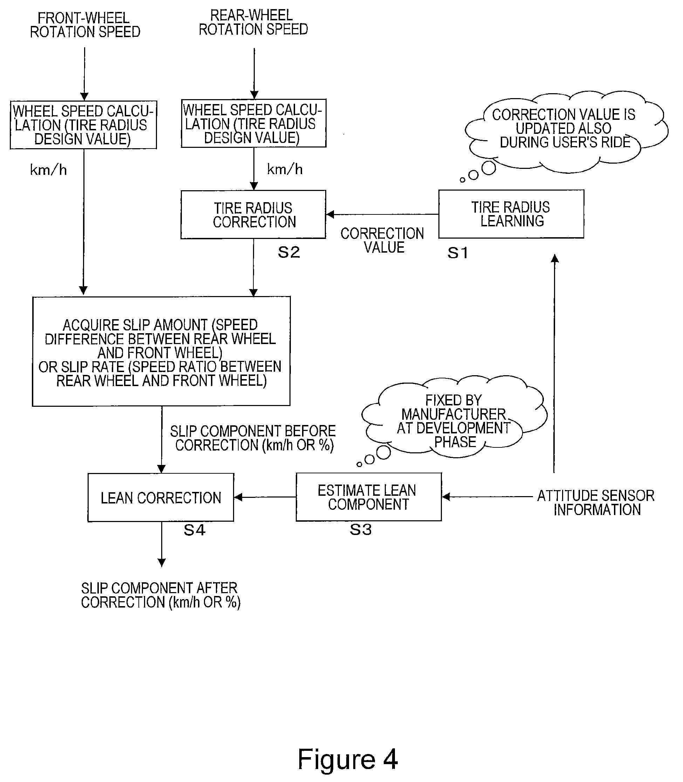

Figure 4 shows a more detailed procedure of a slip amount calculation process according to the present invention. Figure 4 further shows a tire radius correction process S1, S2 and a lean correction process S3, S4 that are performed in conjunction with the slip amount calculation process. The processes S1 to S4 shown in Figure 4 are the processes that are unique to the present invention.

As mentioned above, in the slip amount calculation process, wheel speed calculation utilizing a tire radius design value can be performed. However, in this case if an ascertained wheel speed were to be used as it is, an accurate slip component might not be obtained because the tire radius may have deviated from its design value, and so on. Therefore, the inventors have decided to perform a tire radius correction process after obtaining the wheel speed of the rear wheel, in order to obtain a more accurate rear-wheel wheel speed. Note that the target and timing of the tire radius correction process in Figure 4 are a mere example. For example, the front wheel and the rear wheel may be switched so that a tire radius correction is performed for the front wheel while relying on the rear wheel for reference vehicle speed. Alternatively, two independent tire radius corrections may be respectively performed for the front wheel and the rear wheel, while regarding GPS information or an integrated value of the acceleration sensor as the reference vehicle speed.

The ECU 10 performs tire radius learning at step S1 to determine a correction value, and corrects the tire radius at step S2. The timing of the determination of the correction value may be a period in which no slip is considered to exist, e.g., while traveling at a constant speed. However, for example, the ECU 10 grasps the degree of banking (bank angle) by using the attitude detection unit 11c, in order to restrict learning while the vehicle is banked. Learning means storing a rotational relationship (e.g., relationship in rotation speed) between the front wheel and the rear wheel as information. By using a correction value which reflects this rotational relationship, the front-wheel rotation speed and/or rear-wheel rotation speed which is acquired during actual travel is corrected. Since this correction value keeps updated even while the user is riding the vehicle, a more accurate slip component can be calculated. The reason why the rotational relationship between the front wheel and the rear wheel is mentioned above is that the present embodiment regards the wheel speed of the front wheel as the reference vehicle speed. More generally, learning means establishing and storing a relationship between the reference vehicle speed and the wheel speed.

By performing tire radius correction, it becomes possible to obtain a more accurate slip amount. However, if the vehicle body was banked at the point when the wheel speed was acquired, the slip amount will contain an influence of the lean component which is more than what the tire radius correction process can correct for. Therefore, the inventors have decided to perform a lean correction process to suppress influences of the lean component.

At step S3, the ECU 10 acquires information of the bank angle, and estimates an apparent slip (lean component) at that bank angle. The information to serve as the grounds of estimation is determined by the manufacturer, during development of the motorcycle. The subsequently-described embodiment will illustrate how measurement data for estimating a lean component is to be acquired during development of the motorcycle.

At step S4, the ECU 10 subtracts the estimated lean component from the slip component that has been determined, thereby correcting the slip component. This provides a more accurate slip component in which the influence of the lean component is corrected for.

Hereinafter, first to seventh Embodiments concerning tire radius learning corresponding to the aforementioned steps S1 and S2, the eighth Embodiment concerns lean correction corresponding to steps S3 and S4, and also a conjugated Embodiment 9, which performs both tire radius learning and lean correction, will be described.

**First Embodiment: Tire radius learning utilizing attitude information (bank angle)**

In the present embodiment, a technique of learning a relationship between the front-wheel wheel speed and the rear-wheel wheel speed in order to calculate an accurate slip component will be described.

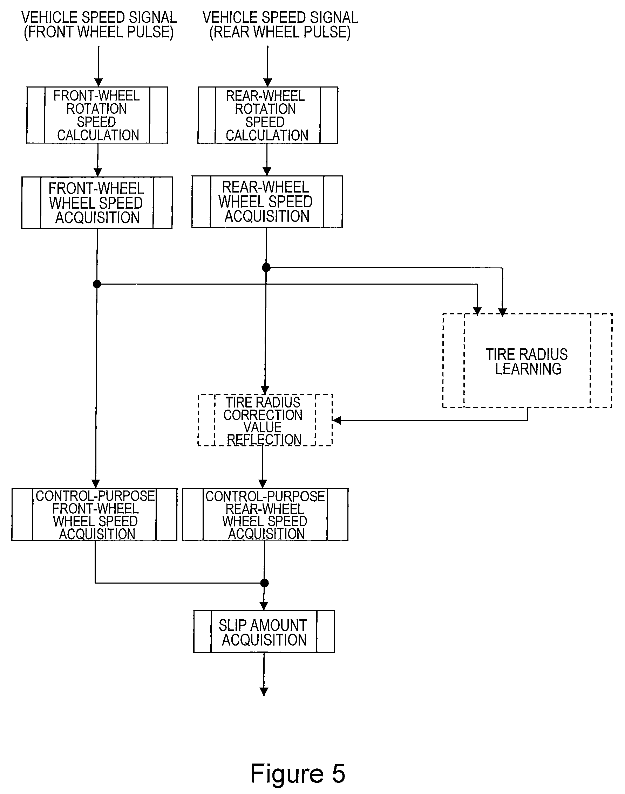

Figure 5 shows an exemplary procedure of the tire radius learning process. The processes indicated by broken lines in Figure 5 are processes that are directly related to tire radius learning. All processes in Figure 5 are executed by the aforementioned ECU 10.

At the point when a predetermined condition is satisfied, the ECU 10 calculates rotation speeds of the front wheel and rear wheel from the front wheel pulses and rear wheel pulses, e.g. respectively output from the reference vehicle speed sensor 11 a and the wheel rotation speed sensor 11 b, which are vehicle speed signals, and further acquires wheel speeds of the front wheel and rear wheel from the rotation speeds of the front wheel and rear wheel, as shown in Figure 5. Then, the ECU 10 performs tire radius learning by using the wheel speeds of the front and rear wheels that have been determined. The specific content of the process of tire radius learning may be to calculate a ratio between wheel speeds of the front and rear wheels and thereby determine a tire radius correction value, for example. The ECU 10 ascertains a tire radius correction value that is obtained as a result of learning, and corrects the rear-wheel wheel speed by using that tire radius correction value, as referenced against the front wheel.

A slip amount is calculated from a control-purpose front-wheel wheel speed and a control-purpose rear-wheel wheel speed, which are respectively calculated from the front-wheel wheel speed and the rear-wheel wheel speed after tire radius correction.

Next, the timing or condition for, performing the aforementioned tire radius learning will be described.

Tire radius learning needs to be performed while the motorcycle is in an upright state during travel at a constant speed along a straight line. The reason for this is that, if the vehicle body is inclined (banked), the banking will affect the contact radii (effective radii) of the tires. Therefore, the ECU 10 checks the following conditions, and performs the tire radius learning process by assuming that the motorcycle is upright when these conditions are satisfied:

   (a) the motorcycle is traveling within a certain vehicle speed range;
   (b) there is no acceleration/deceleration; and
   (c) condition (b) has lasted for a predetermined time or longer while satisfying condition (a).

Condition (a) above assumes a medium speed range. In low or high speed ranges, the vehicle speed calculation accuracy would be deteriorated. Condition (b) is provided because, during acceleration/deceleration, there may exist rotation speed differences that are ascribable to factors other than tire radius.

In motorcycles, the above three conditions are generally not satisfied often. The rarity of these learning conditions being met has led to reduced learning opportunities. On the other hand, the above three conditions may inadvertently be satisfied during a descent on a loop or arched bridge, thus leading to erroneous estimation of an upright state. This has allowed tire radius learning to take place even in the presence of banking.

Therefore, the inventors have decided to provide the attitude detection unit 11c in the motorcycle 100, and perform tire radius learning in accordance with the bank angle.

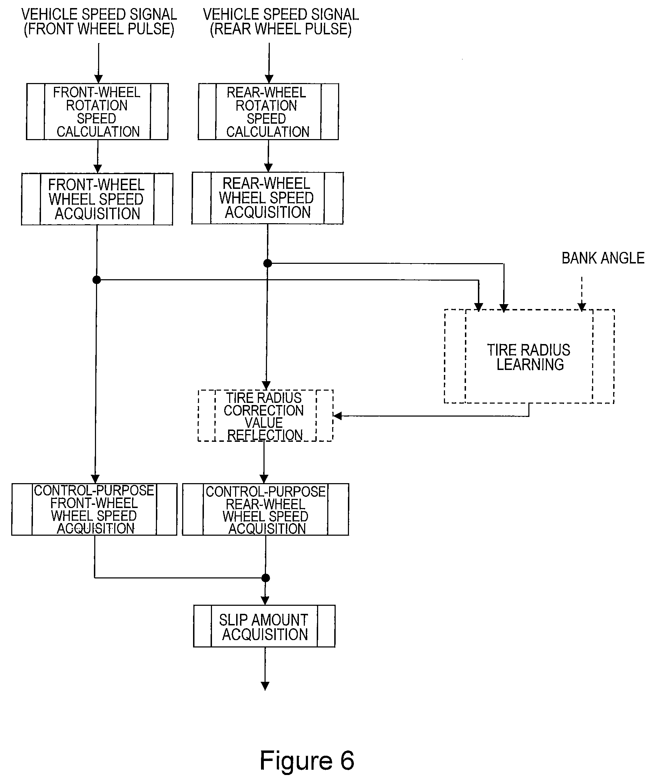

Figure 6 shows an exemplary procedure of a tire radius learning process that takes the bank angle into consideration. As is indicated by broken lines in Figure 6, bank angle information is input for tire radius learning. The ECU 10 performs tire radius learning in accordance with the bank angle, by using the wheel speeds of the front and rear wheels that are determined from the front wheel pulses and rear wheel pulses, e.g. respectively output by the reference vehicle speed sensor 11a and the wheel rotation speed sensor 11 b, which are vehicle speed signals. The details of tire radius learning are as described in connection with Figure 5.

As used herein, tire radius learning that is performed "in accordance with the bank angle" means, for example, differentiating the bank angle into a predetermined number of value zones, and performing tire radius learning for each value zone, for example. As an optional specific example, seven value zones may be assumed for the bank angle $\theta$: $\theta_n \leqq \theta < \theta_n + 10$ degrees ($\theta_n = 0, 10, 20, 30, 40, 50, 60$). In this case, "in accordance with the bank angle" means that tire radius learning is performed for each of these value zones. However, this is only an example. Learning may be performed in accordance with other numbers of and/or finer value zones or angles, or coarser value zones or angles. In the present specification, the phrase "for each different bank angle" is also synonymously used in the place of "in accordance with the bank angle".

Hereinafter, the specific construction and operation for performing the aforementioned processes will be described.

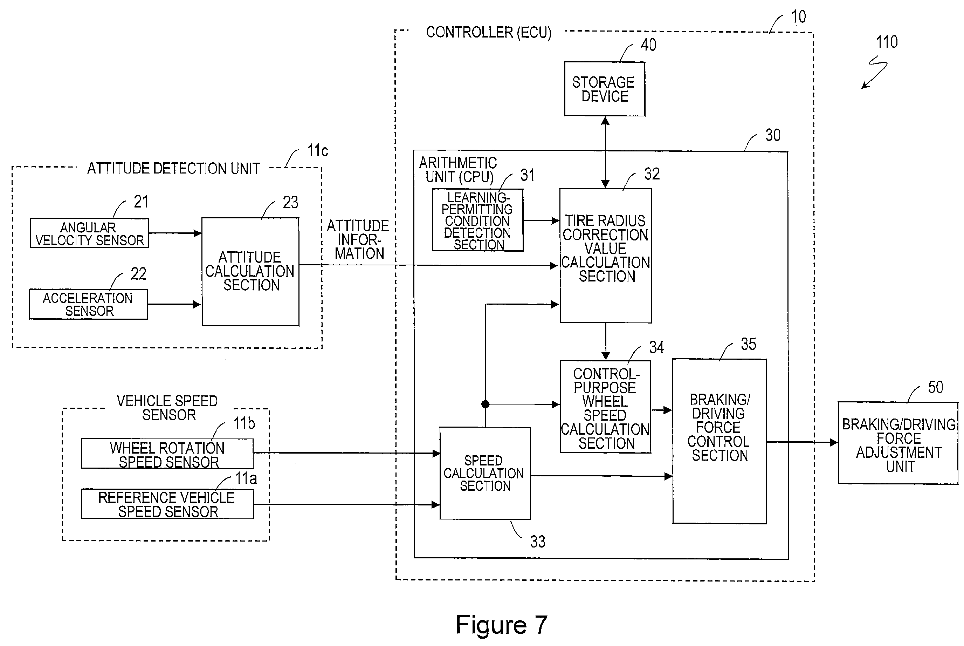

Figure 7 is a block diagram showing the construction of a stability control system 110 according to the present embodiment. The stability control system 110 changes the braking force or driving force in the motorcycle 100 as a vehicle having the front wheel 2 and the rear wheel 3.

In the present embodiment, the stability control system 110 includes the reference vehicle speed sensor 11 a, the wheel rotation speed sensor 11 b, the attitude detection unit 11c, the ECU 10, and a braking/driving force adjustment unit 50.

The reference vehicle speed sensor 11 a is a sensor that is mounted on the front wheel 2 for acquiring vehicle speed of the vehicle. The wheel rotation speed sensor 11 b is a wheel rotation speed sensor for acquiring rear-wheel rotation speed, which is the rotation speed of the rear wheel.

The attitude detection unit 11c acquires information concerning the attitude of the vehicle body 1 (attitude information). The details thereof will be described later.

The ECU 10 is a so-called computer. In the present embodiment, based on the vehicle speed (which in the present embodiment is front-wheel wheel speed) and the rear-wheel rotation speed under a travel condition in which no slip exists, the ECU 10 calculates a value representing a relationship between the rear-wheel wheel speed and the front-wheel wheel speed as a tire radius correction value for each different bank angle. As used herein, the "relationship" may be a wheel speed ratio which is calculated from a ratio between the rear-wheel wheel speed and the front-wheel wheel speed, for example. Furthermore, the ECU 10 calculates a control-purpose wheel speed by correcting the rear-wheel wheel speed based on the tire radius correction value that corresponds to the current bank angle. By using the result of this calculation, the stability control system 110 appropriately changes the braking force or driving force in the motorcycle. In the present specification, forces acting under traction control, ABS, cruise control, and the like are collectively referred to as braking/driving force.

Hereinafter, the details of the component elements of the stability control system 110 will be described.

The attitude detection unit 11c includes an angular velocity sensor 21, an acceleration sensor 22, and an attitude calculation section 23.

The angular velocity sensor 21 is a 3-axis gyro sensor, for example, that measures an angular velocity (angle/s) representing an amount of rotation per unit time with respect to each of the yaw direction, the pitch direction, and the roll direction. In other words, the angular velocity sensor 21 is able to detect yaw angular velocity, pitch angular velocity, and roll angular velocity. The acceleration sensor 22 detects longitudinal acceleration, vertical acceleration, and lateral acceleration of the vehicle body 1 of the motorcycle 100.

The attitude calculation section 23 acquires attitude information by using outputs from the angular velocity sensor 21 and the acceleration sensor 22. The attitude information is bank angle information that is acquired by using yaw angular velocity or the like, for example. The attitude information may also include information of yaw angular velocity, longitudinal acceleration, and lateral acceleration. The bank angle θ can be acquired by a known method, such as by using a Kalman filter, for example.

Next, the ECU 10 will be described.

The ECU 10 includes an arithmetic unit 30 and a storage device 40.

For example, the arithmetic unit 30 is a semiconductor integrated circuit called a central processing unit (CPU), and the storage device 40 is a semiconductor memory.

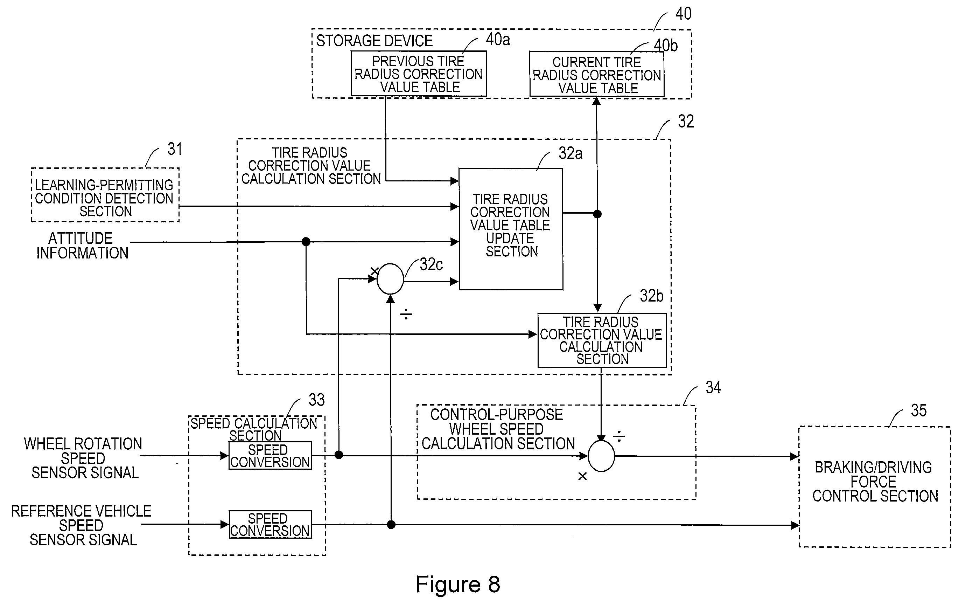

The arithmetic unit 30 includes a learning-permitting condition detection section 31, a tire radius correction value calculation section 32, a speed calculation section 33, a control-purpose wheel speed calculation section 34, and a braking/driving force control section 35. These component elements may each be implemented as a hardware circuit, or some or all of them may be regarded as functions that are realized by the operations of a CPU which executes software-based instruction. The latter would mean, for example, that the arithmetic unit 30 operating in accordance with a flowchart that represents the subsequently-described software operations functions, e.g. at one point in time, as the learning-permitting condition detection section 31, and/or at another point in time as the tire radius correction value calculation section 32. The specific operation of each component element of the arithmetic unit 30 will be described in detail with reference to Figure 8.

The storage device 40 stores information concerning tire radius correction values.

Based on the slip amount that is calculated by the ECU 10, the braking/driving force adjustment unit 50 adjusts the braking/driving force in the motorcycle 100 by controlling the position of the throttle 12, the ignition timing of the spark plug 13, the brakes, and the like.

Figure 8 is a control block diagram of the stability control system 110.

First, the learning-permitting condition detection section 31 determines whether a condition(s) for permitting tire radius learning is satisfied, and if the condition(s) is satisfied, so notifies the tire radius correction value calculation section 32. The condition(s) for permitting tire radius learning means or indicates that no tire slip exists. The learning-permitting condition detection section 31 makes its determination based on attitude information (bank angle, acceleration, etc.), amounts of change in wheel rotation speed, brake pressure, accelerator manipulation, and so on.

As an example, the learning-permitting condition(s) may comprise:

vehicle speed and/or acceleration/deceleration (acceleration) being within predetermined ranges.

If the learning-permitting condition(s) is/are satisfied, the tire radius correction value calculation section 32 receives attitude information, vehicle speed, and rear wheel vehicle speed, and calculates, for each different bank angle, a correction value with which to correct the tire radius based on vehicle speed and rear wheel vehicle speed.

For example, when the bank angle is substantially 0 degrees, and the vehicle speed and acceleration/deceleration (acceleration) are within predetermined ranges, the learning-permitting condition is satisfied. At this point, the vehicle speed (front-wheel wheel speed) and the rear-wheel wheel speed are estimated to be equal. The tire radius correction value calculation section 32 determines a ratio between the vehicle speed and the rear-wheel wheel speed, as derived from the respective signals that are output from the reference vehicle speed sensor 11 a and the wheel rotation speed sensor 11 b and from the design values of the tire radii of the front and rear wheels. If the current (rear-wheel) tire radius is equal to the design value, the aforementioned ratio will be 1. If the tire radius is deviated from the design value, the aforementioned ratio will not be 1. Accordingly, a coefficient for correcting the tire radius is determined so that the aforementioned ratio equals 1.

For example, if the ratio is $\alpha$ (=rear-wheel wheel speed/vehicle speed), the value of this ratio $\alpha$ is adopted as the tire radius correction value C. Then, the tire radius design value from which to derive a rear-wheel wheel speed may be multiplied by $1/\alpha$. Alternatively, a rear-wheel wheel speed that has been derived from the tire radius design value may be multiplied by $1/\alpha$. As a result, the (rear-wheel) tire radius or the rear-wheel wheel speed can be corrected so that the aforementioned ratio equals 1.

It is not only when the bank angle is substantially 0 degrees that the tire radius correction value calculation section 32 determines a tire radius correction value. Even when the bank angle is not 0 degrees, if the learning-permitting condition(s) is satisfied, the tire radius correction value calculation section 32 determines a tire radius correction value that ensures that the aforementioned ratio between the vehicle speed and the rear-wheel wheel speed equals 1 at that bank angle. As a result of this, a correction value for each bank angle is acquired using the process described above. The tire radius correction value calculation section 32 stores the determined tire radius correction values as a tire radius correction value table to the storage device 40. An example of the correction value table is shown below.

**Table 1**

| bank angle | 0° | 10° | 20° | 30° | 40° | 50° | 60° |
|---|---|---|---|---|---|---|---|
| correction value C | $C_0$ | $C_{10}$ | $C_{20}$ | $C_{30}$ | $C_{40}$ | $C_{50}$ | $C_{60}$ |

The tire radius correction value calculation section 32 performs the aforementioned arithmetic operations in a tire radius correction value table update section 32a. The ratio between the vehicle speed and the rear-wheel wheel speed, which is required for the aforementioned arithmetic operations, is calculated by a multiplier 32c. The multiplier 32c receives the vehicle speed (front-wheel wheel speed) and the rear-wheel wheel speed that have been determined by the speed calculation section 33 from the reference vehicle speed sensor signal and the wheel rotation speed sensor signal, calculates a ratio therebetween, and sends the calculated ratio to the tire radius correction value table update section 32a.

The storage device 40 retains at least two tire radius correction value tables. In

Figure 8, two tire radius correction value tables are retained, namely, a previous tire radius correction value table 40a and a current tire radius correction value table 40b. The reason for retaining at least two tire radius correction value tables is that, when the learning-permitting condition(s) is not satisfied, no tire radius correction value for that bank angle will be obtained. In that case, a tire radius correction value as previously obtained for that bank angle is used.

The tire radius correction value calculation section 32b receives the current attitude information (bank angle), and determines a tire radius correction value for that bank angle.

The control-purpose wheel speed calculation section 34 divides the rear wheel vehicle speed that has been determined in the speed calculation section 33 by the tire radius correction value, i.e. multiplies the rear wheel vehicle speed by an inverse of the tire radius correction value, thus correcting the rear wheel vehicle speed.

The braking/driving force control section 35 calculates a slip amount based on the corrected rear wheel vehicle speed and the vehicle speed.

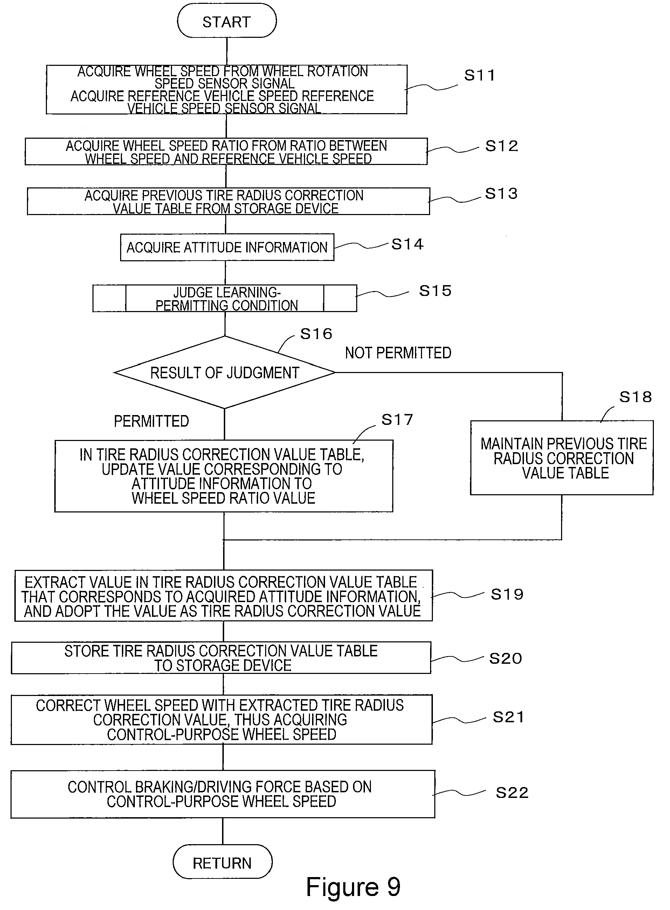

Figure 9 shows a procedure of the operation of the stability control system 110.

At step S11, the speed calculation section 33 receives a wheel rotation speed sensor signal and a reference vehicle speed sensor signal. Then, the speed calculation section 33 acquires a wheel speed from the wheel rotation speed sensor signal, and acquires a reference vehicle speed from the reference vehicle speed sensor signal.

At step S12, the multiplier 32c acquires a wheel speed ratio from a ratio between the wheel speed and the reference vehicle speed. At step S13, the tire radius correction value table update section 32a acquires a previous tire radius correction value table from the storage device 40. At step S14, the tire radius correction value table update section 32a acquires attitude information from the attitude detection unit 11c.

At step S15, the tire radius correction value table update section 32a judges the learning-permitting condition(s). If the result of judgment of step S16 indicates "permitted", the process proceeds to step S17. If it indicates "not permitted", the process proceeds to step S18.

At step S17, the tire radius correction value table update section 32a updates the value in the tire radius correction value table that corresponds to the acquired attitude information to the wheel speed ratio value. The data that is the subject of updating is retained in a memory (not shown), e.g., an internal register of the tire radius correction value table update section 32a.

At step S18, the tire radius correction value table update section 32a does not update the previous tire radius correction value table but rather maintains it, because the learning-permitting condition(s) is not satisfied and so it would be inappropriate to update the tire radius correction value.

At step S19, from within the tire radius correction value table, the tire radius correction value calculation section 32b extracts a value that corresponds to the acquired attitude information, and adopts the value as the tire radius correction value.

At step S20, the tire radius correction value table update section 32a stores the tire radius correction value table, as the "current tire radius correction value table", to the storage device 40.

At step S21, the control-purpose wheel speed calculation section 34 corrects the wheel speed with the extracted tire radius correction value, thus acquiring a control-purpose wheel speed.

At step S22, the braking/driving force control section 35 controls braking/driving force based on the control-purpose wheel speed.

Through the above processes, regardless of whether the learning-permitting condition(s) is satisfied or not, an appropriate tire radius correction value in accordance with the current bank angle is selected and extracted, for use in braking/driving force control. This realizes appropriate intervention of the traction control system, ABS, or the like, with more appropriate timing. For example, if the motorcycle 100 is making a descent on a loop or arched bridge, the vehicle body 1 may have a certain bank angle, and a tire radius correction value corresponding to that bank angle is acquired. On the other hand, when the motorcycle 100 is traveling with a bank angle of 0°, a tire radius correction value corresponding to the bank angle of 0° is acquired. Then, in accordance with the bank angle of the motorcycle 100 during travel, a previously acquired tire radius correction value is selected and adopted so as to be utilized for control-purpose wheel speed calculation, whereby appropriate intervention of the traction control system, ABS, or the like is realized.

Note that the order of steps in Figure 9 is only an example. For example, steps S13 and S14 may come between steps S11 and S12, or steps S11 and S12 may be performed after steps S13 and S14. Moreover, the process at step S20 of storing a tire radius correction value table to the storage device 40, for example, can be performed independently from steps S19, S21, and S22, such that the position of step S20 may be changed. Step S20 may be performed each time step S17 or S18 is finished, for example.

Second Embodiment: a tire radius learning which takes tire expansion into consideration

The present embodiment will illustrate a tire radius learning process that takes tire expansion, which may possibly affect the tire radius, into consideration.

Aside from the consideration of attitude information as illustrated in the first Embodiment, the inventors have also recognized the need for a tire radius correction that takes into consideration a factor that potentially influences the tire radius, i.e., a changing tire radius caused by tire expansion. Tire expansion, which increases with vehicle speed, occurs under the influence of a centrifugal force that acts from the center of the tire in the radial direction. The inventors have found that it is not necessarily the case that the tire radius correction values obtained under learning at 50 km/h are equal to the tire radius correction values obtained from learning at 150 km/h, for example.

A tire radius correction that takes tire expansion into consideration is needed particularly when the vehicle speed of the motorcycle 100 is high. For example, the first Embodiment discusses a learning-permitting condition that the vehicle speed or the like be within a certain range. Therefore, if the vehicle speed exceeds the certain range, learning should be performed under a criterion that is independent of attitude information.

Note that a changing tire radius due to tire expansion is difficult to identify based on a tire profile in a stationary state or the like. The inventors have decided to determine the tire radius correction value from a relationship between the wheel speeds of the front and rear wheels, in accordance with velocity ranges.

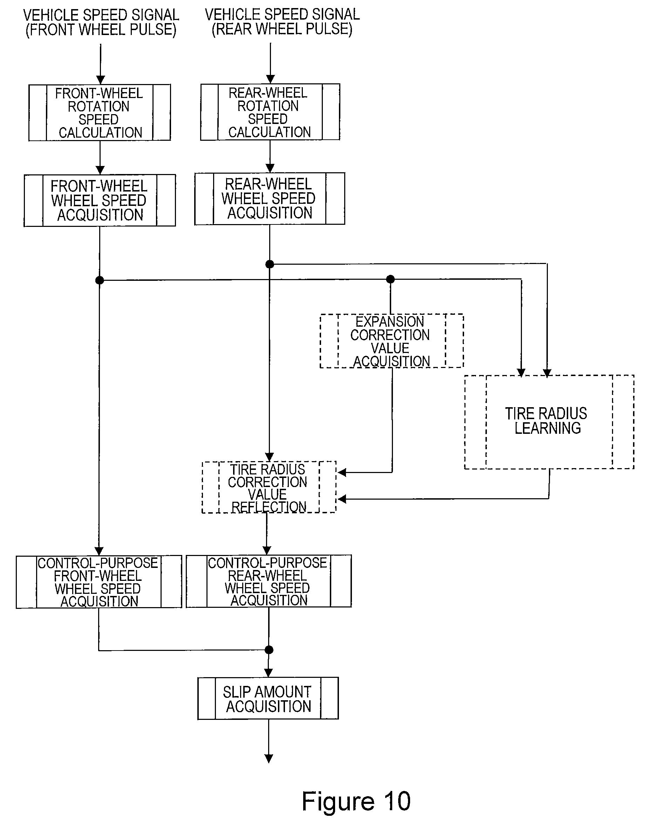

Figure 10 shows an exemplary procedure of a tire radius learning process that utilizes tire expansion correction values. The three processes indicated by broken lines are processes that are unique to the present embodiment.

As is indicated by the broken lines in Figure 10, an expansion correction value is acquired in accordance with the value of vehicle speed (front-wheel wheel speed), and this expansion correction value is utilized in the tire radius learning process and a process of allowing the expansion correction value to be reflected.

Hereinafter, a method of determining the expansion correction value will be described.

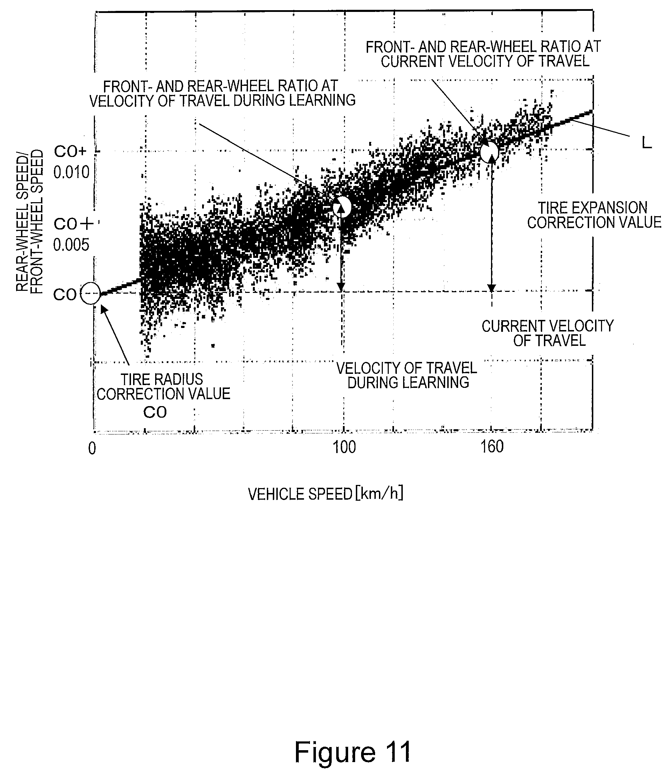

Figure 11 shows plotting results of each vehicle speed when coasting, moving or gliding in a state that is free of driving force influences and the front-rear wheel speed ratio at that vehicle speed. A state that is free of driving force influences means the clutch being disengaged (OFF). A vehicle speed of a predetermined value or more is assumed.

Figure 11 also shows a straight line L which best represents the results of plotting. It can be seen from the straight line L that the front-rear wheel speed ratio changes with speed, even in a state that is free of driving force influences. The positive gradient of the straight line L means the tire expansion changing with vehicle speed, thus causing the tire radius to change.

Figure 11 will now be described by taking the straight line L as an example.

When the vehicle speed is 0, the tire radius correction value, expressed as rear-wheel speed/front-wheel speed, is C0. It is indicated that, at a vehicle speed of about 100 km/h, the front-rear wheel speed ratio when coasting, moving or gliding in a state that is free of driving force influences can be expressed approximately as C0+0.005. It is also indicated that, at a vehicle speed of about 160 km/h, the front-rear wheel speed ratio when coasting, moving or gliding in a state that is free of driving force influences can be expressed approximately as C0+0.01.

The present specification assumes that the tire radius correction value C0 is near 1. From the results of the inventors' trials, the tire radius correction value C0 at a vehicle speed of 0 was well distributed within a range from 0.96 to 1.00. The reason for such variation in values is presumably because there was a change in the type of tire worn during travel, for example. In the present specification, at least the aforementioned range from 0.96 to 1.00 is to be considered as "near 1".

Based on the above results, the inventors have concluded that, due to tire expansion influences, the tire radius correction value increased by 0.005 at about 100 km/h, and increased by 0.01 at about 160 km/h. Thus, the inventors have decided to determine a tire expansion correction value (Q) at a specific speed by using this straight line L. In other words, a tire expansion correction value of 0.005 may be determined in advance and retained for about 100 km/h, and a tire expansion correction value of 0.01 for about 160 km/h, and so on.

The aforementioned method realizes the "expansion correction value acquisition" process shown in Figure 10. Note that a tire expansion correction value may be retained for each vehicle speed in predetermined units (e.g., in units of 1 km/h).

Next, the tire radius learning process in Figure 10 will be described.

In the present embodiment, the tire radius correction value (C0) at 0 km/h is to be learned. The tire radius correction value (C0) is obtained by subtracting, from the front-rear wheel speed ratio at a certain vehicle speed, a tire expansion correction value at that vehicle speed. A tire radius correction value (C0) at 0 km/h corresponds to a segment of the straight line L at 0 km/h in Figure 11; in other words, no matter at which vehicle speed the learning is performed, the tire radius correction value (C0) at 0 km/h is presumably equal. Since it is however possible for different tire radius correction values (C0) to be acquired at a plurality of vehicle speeds, a value obtained by averaging the tire radius correction values that are consecutively obtained for different vehicle speeds may be adopted as the tire radius correction value (C0).

Through the above tire radius learning process, a tire radius correction value (C0) at 0 km/h can be obtained.

Next, the tire radius/expansion correction value reflection process in Figure 10 will be described. This process is an operation of adding up the tire radius correction value (C0) at 0 km/h, as obtained through learning, and the tire expansion correction value (Q) that is identified from the current vehicle speed. The value (C0+Q) which is obtained through this addition operation is used as the tire radius correction value at that vehicle speed.

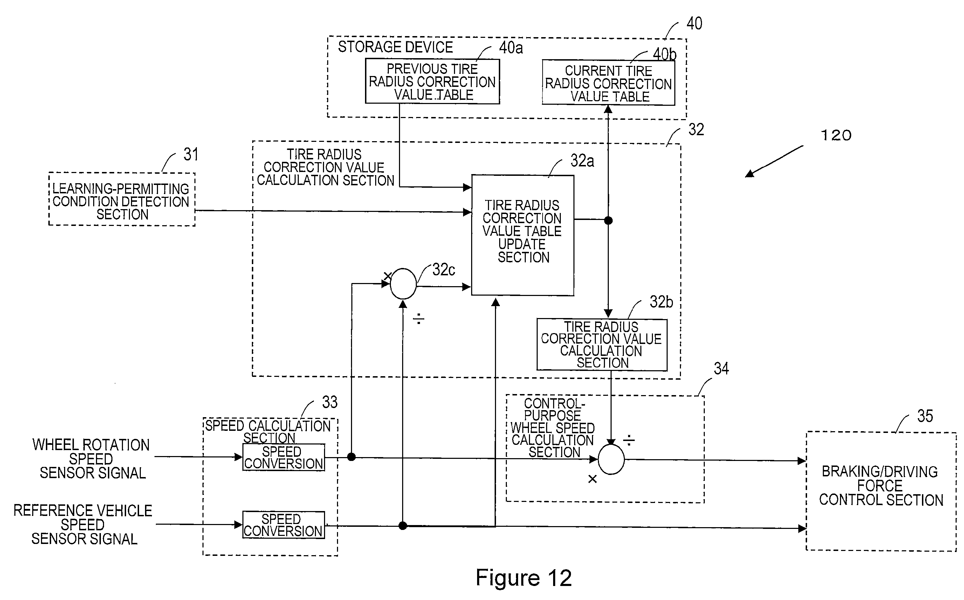

Figure 12 is a control block diagram of a stability control system 120 according to the present embodiment for executing the aforementioned processes. The difference between the control block diagram of Figure 12 and the control block diagram of Figure 8 is that, in Figure 12, the tire radius correction value table update section 32a receives reference vehicle speed information, but does not receive attitude information. A difference between the processing details is that the tire radius correction value table update section 32a in Figure 12 performs the three processes indicated by broken lines in Figure 10, instead of the processes in Figure 6. Specifically, the tire radius correction value table update section 32a performs a process of acquiring a tire expansion correction value, a process of acquiring a tire radius correction value (C0) at 0 km/h, and a tire radius/expansion correction value reflection process. However, the processes themselves are as described above, and therefore their details are omitted.

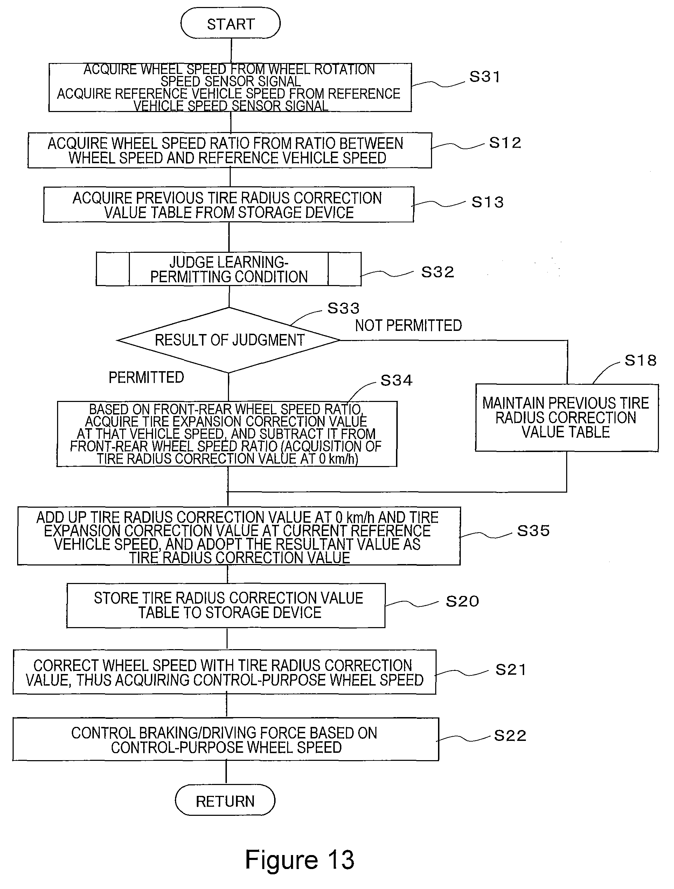

Figure 13 shows a procedure of the operation of the stability control system 120 according to the present embodiment. Those processes that are identical to processes in Figure 6 are denoted by identical step numbers, and their description is omitted. Hereinafter, steps S31 to S35 will be described.

First, at step S31, a wheel speed and a reference vehicle speed are acquired as in the process of Figure 6. Furthermore, reference vehicle speed information that is obtained from the reference vehicle speed sensor 11a is also sent to the tire radius correction value table update section 32a herein.

Step S14 in Figure 9 does not exist in Figure 13. Therefore, attitude information is no element in the learning-permitting condition judgment at steps S32 and S33. As the learning-permitting condition(s), for example, it is determined whether or not a state exists where influences of driving force and braking force are sufficiently non-existent, or whether or not the vehicle speed is equal to or greater than a predetermined threshold (e.g. 20 km/h).

At step S34, from the front-rear wheel speed ratio, the tire radius correction value table update section 32a acquires a tire expansion correction value at that vehicle speed, which is retained in advance. Then, the tire radius correction value table update section 32a subtracts the tire expansion correction value from the front-rear wheel speed ratio. The tire radius correction value table update section 32a retains the resultant value as a tire radius correction value (C0) at 0 km/h.

At step S35, the tire radius correction value table update section 32a adds up the tire radius correction value at 0 km/h and the tire expansion correction value at the current reference vehicle speed, and adopts the sum as a tire radius correction value.

The above processes realize a tire radius correction process which reduces the influences of expansion of the tire radius in accordance with the vehicle speed.

Although the present embodiment only considers tire expansion in tire radius correction, attitude information may further be considered as was described in Embodiment 1. Since the vehicle body 1 of the motorcycle 100 may be banked during high-speed travel, it is more preferable to acquire a tire radius correction value by taking the bank angle also into consideration.

**Third Embodiment: Speed of tire radius learning is increased immediately after powering ON**

The present embodiment will illustrate a tire radius learning process involving the speed with which tire radius learning is performed.

As a specific situation, a rider may have just started a motorcycle and begun traveling. In the present embodiment, the speed of correction value learning is changed in accordance with the elapsed time since start, or the traveled distance since start. More specifically, in the present embodiment, by regarding the point of time at which the rider turned the key to power on the motorcycle as the time of start (starting point), the update step (i.e., the amount of change before and after an update) of tire radius learning is increased if the elapsed time since the starting point is equal to or less than a predetermined threshold, or if the cumulative traveled distance since the starting point is equal to or less than a predetermined threshold. By increasing the update step of learning relatively early on since the time of start, the learning results are allowed to be reflected on the control as soon as possible. As a result, the rider can better grasp the behavior of the motorcycle 100, thus being able to enjoy driving the motorcycle 100 with improved controllability.

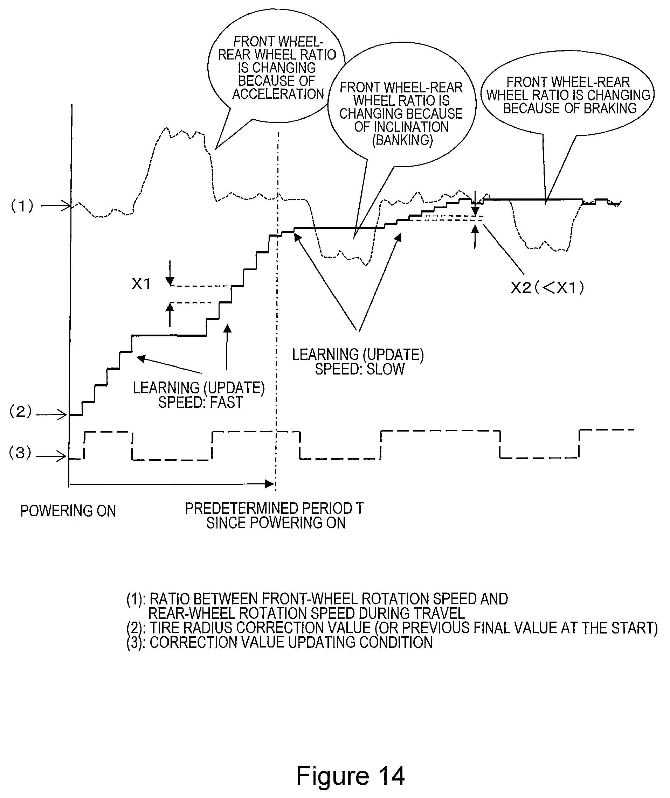

First, referring to Figure 14, a manner of updating the tire radius correction value which is realized by the present embodiment will be described.

Figure 14 shows tire radius correction values as updated according to learning results. In the figure, waveform (1) represents the ratio between the front-wheel rotation speed and the rear-wheel rotation speed during travel. Waveform (2) represents tire radius correction values as are chronologically updated. At the start, a final value which was adopted at the most recent powering OFF is adopted. Waveform (3) represents the correction value updating condition.

As will be understood from Figure 14, during a predetermined period T since powering ON of the motorcycle 100 as a starting point, the changes in the tire radius correction value indicated as waveform (2) are relatively large. However, after the lapse of the predetermined period T, the changes in the tire radius correction value are relatively small.

This difference means that the range in which the tire radius correction value is allowed to vary in a single process is altered. In the present embodiment, different restrictions are applied to the range in which an updated tire radius correction value is allowed to differ from its previous value, depending on whether it is before or after the lapse of the predetermined period T. These restrictions are applied so that the changeable range is relatively large before the lapse of the predetermined period T, but that the changeable range is relatively small after the lapse of the predetermined period T. The reason for restricting the changeable range at all is to prevent an abrupt change in the tire radius correction value in a single process. Yet under such restrictions, differences are introduced in the changes in the tire radius correction value depending on whether the predetermined period T has elapsed or not. In Figure 14, the variation (X1) before the lapse of the predetermined period T is set to be larger than the variation (X2) after the lapse of the predetermined period T.

For instance, an example is considered where the tire radius correction value that is stored in a storage device, e.g. a memory, greatly differs from a wheel speed ratio which is calculated from the current wheel speed information. Through learning, the tire radius correction value needs to be updated so as to catch up with the current wheel speed ratio. However, because the range in which the tire radius correction value is allowed to vary in a single process is restricted, the update will take place over a plurality of times. Before the lapse of the predetermined period T, since the range in which the tire radius correction value is capable of changing is set relatively large, the tire radius correction value catches up with the current wheel speed ratio more quickly, i.e., over fewer instances of learning. After the lapse of the predetermined period T, the range in which the tire radius correction value is capable of changing is set relatively small; however, by that time, the tire radius correction value will have caught up with or approached the current wheel speed ratio, so there is no problem associated with the relative smallness of the range in which the tire radius correction value is capable of changing.

By altering the changeable range of the tire radius correction value (learning update step) in a single process, it is possible to change the amount of time (or the number of processes that need to be performed) until learning catches up. This makes it possible to vary the speed of learning.

Increasing the allowed change (step) in the tire radius correction value enables an early convergence of the tire radius correction value, which will make it possible early on to obtain an appropriate slip amount or slip rate, and ensure that the traction control or ABS operates with appropriate timing and amounts of intervention. However, if the allowed change (step) in the tire radius correction value is increased excessively, drastic changes may occur in the control amounts, resulting in a possibility of unfavorably affecting riding comfort. This is why an upper limit of X1 or X2 is provided for the allowed change (step) in the tire radius correction value, thus preventing excessive changes.

For reference sake, Figure 14 indicates reasons why the correction value updating condition may not be satisfied for reasons being indicated in balloons.

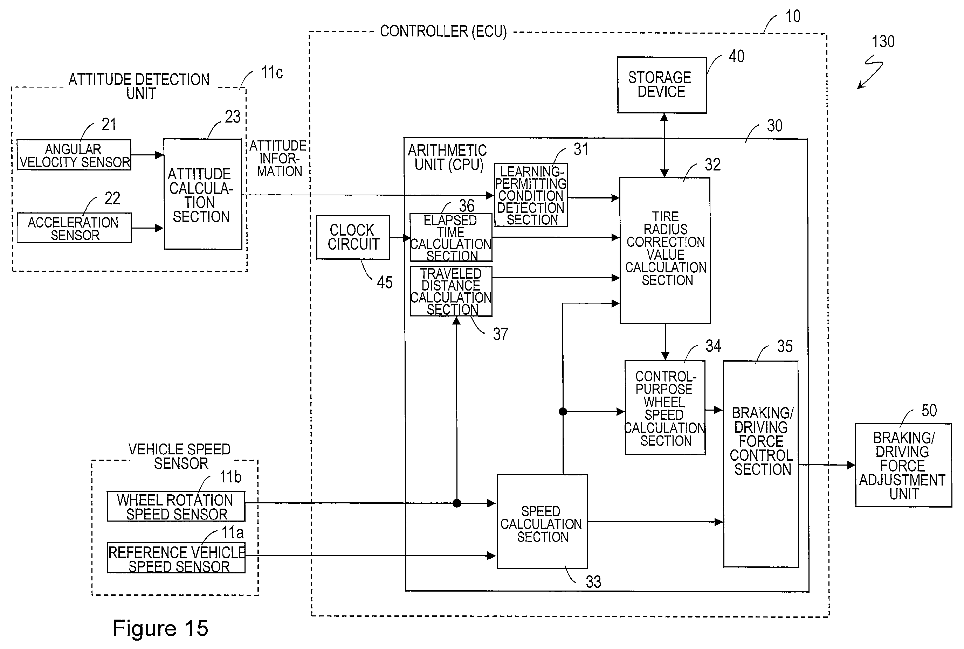

Figure 15 is a block diagram showing the construction of a stability control system 130 according to the present embodiment.

Figure 15 differs from Figure 7 in that an elapsed time calculation section 36 and a traveled distance calculation section 37 are additionally provided in the arithmetic unit 30, and that a clock circuit 45 is additionally provided. Furthermore, as will be described later, the internal construction of the tire radius correction value calculation section 32, which receives signals from the elapsed time calculation section 36 and the traveled distance calculation section 37, is also modified. Although not shown in Figure 7, a clock circuit for the CPU (which serves as the arithmetic unit 30) to operate is of course provided in the construction of Figure 7. That clock circuit may be utilized as the clock circuit 45, or a separately provided clock circuit may be utilized as the clock circuit 45. Although the elapsed time calculation section 36 and the traveled distance calculation section 37 are both illustrated for convenience of description, either one of them may suffice.

The clock circuit 45 generates a clock signal for counting points in time. In the present embodiment, the clock circuit 45 generates a clock signal from the point of time at which the motorcycle 100 is powered ON.

By using the clock signal which is output from the clock circuit 45, the elapsed time calculation section 36 counts and retains the elapsed time.

The traveled distance calculation section 37 calculates the traveled distance since the point of time at which the motorcycle 100 was powered ON.

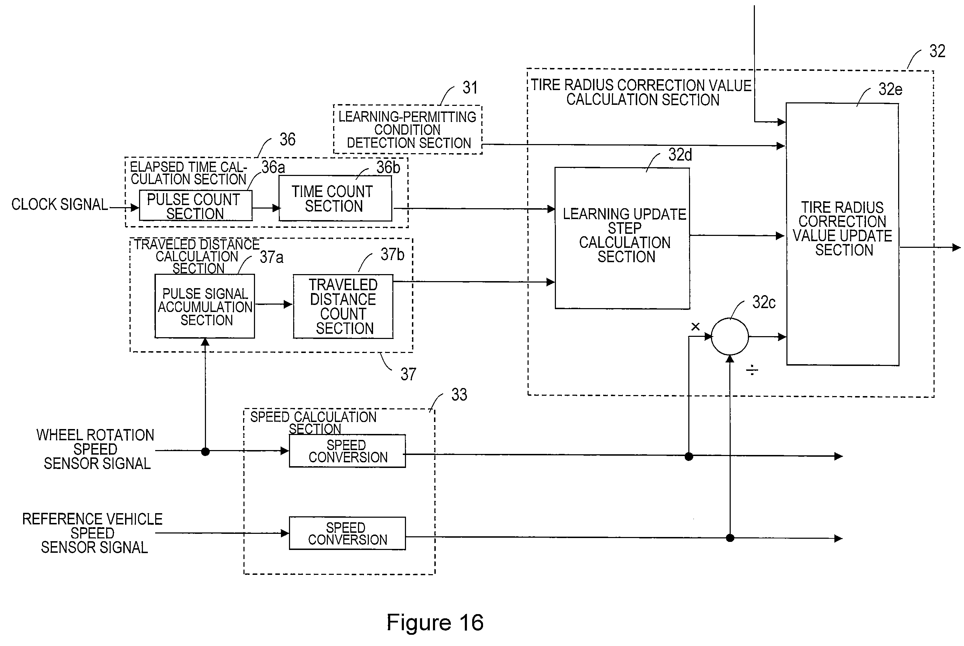

Figure 16 is a control block diagram concerning the arithmetic unit 30 of the stability control system 130. Figure 16 only shows portions which are particularly related to the present embodiment, while any other construction is illustrated in a form partially simplified from the construction of Figure 8.

The elapsed time calculation section 36 includes a pulse count section 36a and a time count section 36b. The pulse count section 36a counts pulses of a clock signal which is output from the clock circuit 45. The time count section 36b converts the number of pulses counted by the pulse count section 36a into time. For example, assuming that the clock circuit 45 is operating at f Hz, when the number of pulses counted by the pulse count section 36a equals f, the time count section 36b will have counted 1 second. Since the counts of pulses are begun from the point of time at which the motorcycle 100 is powered ON, the time which is counted by the time count section 36b means an elapsed time since the point of time at which the motorcycle 100 was powered ON.

The traveled distance calculation section 37 includes a pulse signal accumulation section 37a and a traveled distance count section 37b. The pulse signal accumulation section 37a receives and accumulates (counts) the pulses of the wheel rotation speed sensor signal from the rear wheel. The traveled distance count section 37b converts the number of pulses that has been counted by the pulse signal accumulation section 37a into distance. For example, it may be assumed that N pulses occur in the wheel rotation speed sensor signal during 1 rotation of the tire. The pulse count section 36a accumulates the number of pulses. Then, the number of pulses being equal to $N \cdot k$ would mean the rear wheel having rotated k times. Accordingly, the traveled distance count section 37b calculates a value which is k times the tire outer periphery of the rear wheel at that point. This value is the distance that has been travelled since the pulses of the wheel rotation speed sensor signal were begun to be counted, i.e., since traveling was begun.

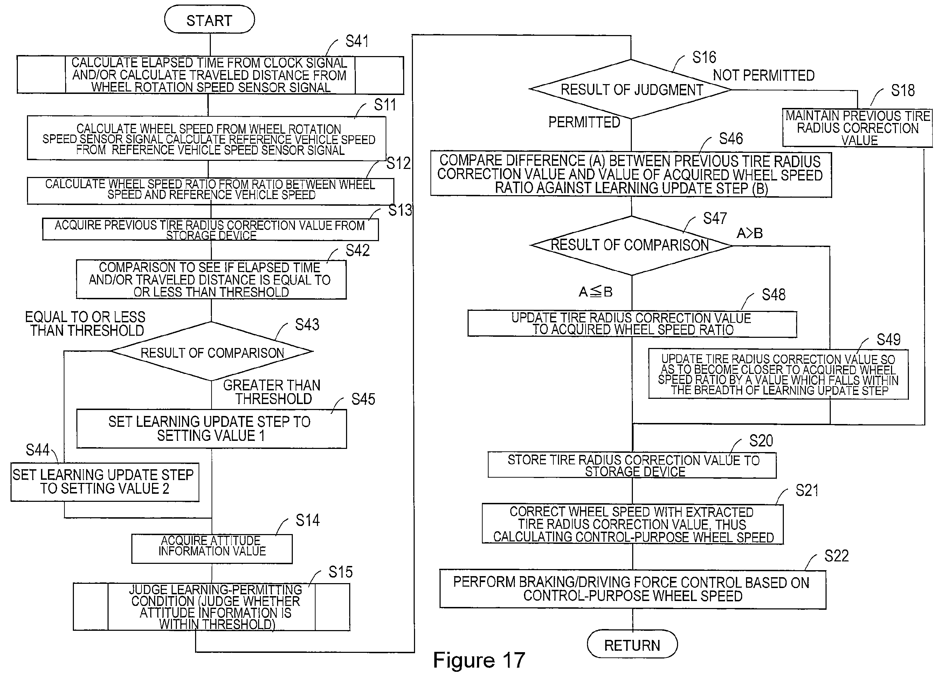

The tire radius correction value calculation section 32 includes a learning update step calculation section 32d. The learning update step calculation section 32d receives elapsed time information from the elapsed time calculation section 36, and traveled distance information from the traveled distance calculation section 37. Based on such information, the learning update step calculation section 32d determines whether or not the elapsed time since the point of time at which the motorcycle 100 was powered ON is equal to or less than a predetermined time value, or whether or not distance since the beginning of travel is equal to or less than a predetermined distance value. If it is equal to or less than the predetermined time value and/or the predetermined distance value (this will be collectively referred to as being "equal to or less than the threshold"), the learning update step calculation section 32d alters the learning update step. The learning update step is synonymous with the allowed change (step) in the tire radius correction value, which keeps changing toward a convergence value of the learning results (tire radius correction values). In other words, the learning update step calculation section 32d increases the step to enhance the speed of learning when the aforementioned threshold is not exceeded, and decreases the step to slow the speed of learning when the threshold is exceeded. This will be specifically described later with reference to Figure 17.

The tire radius correction value calculation section 32 includes a tire radius correction value update section 32e. The functions of the tire radius correction value update section 32e are substantially the same as those of the tire radius correction value table update section 32a shown in Figure 8. The difference is that a correction value table is updated by the tire radius correction value table update section 32a, whereas a single correction value is updated by the tire radius correction value update section 32e.

Figure 17 shows a procedure of the operation of the stability control system 130. In the present embodiment, it is considered that a single learning has been performed when the process from beginning (START) to end (RETURN) of Figure 17 is completed. Those processes that are identical to processes in Figure 9 are denoted by identical step numbers, and their description is omitted. Although steps S15 and S20 recite more specific conditions, no particular explanation will be offered here because they are self-explanatory.

At step S41, the elapsed time calculation section 36 calculates elapsed time from the clock signal, and the traveled distance calculation section 37 calculates traveled distance from the wheel rotation speed sensor signal.

At step S42, the learning update step calculation section 32d makes a comparison to see whether or not the elapsed time and/or traveled distance is/are equal to or less than the threshold.

At step S43, if the result of comparison is equal to or less than the threshold, the process proceeds to step S44; if it is greater than the threshold, the process proceeds to step S45.

At step S44, the learning update step calculation section 32d sets the learning update step to setting value 2. On the other hand, at step S45, the learning update step calculation section 32d sets the learning update step to setting value 1. In the present embodiment, it is assumed that setting value 1 < setting value 2. Such setting allows the speed of learning to be changed.

At step S46, the learning update step calculation section 32d determines a difference (A) between the previous tire radius correction value and the value of the wheel speed ratio acquired from the multiplier 32c, and compares the difference (A) and the learning update step (B).

At step S47, if the result of the comparison indicates A≦B, the process proceeds to step S48. If the result of comparison indicates A>B, the process proceeds to step S49.

At step S48, the tire radius correction value update section 32e updates the tire radius correction value to the acquired wheel speed ratio.

On the other hand, at step S49, the tire radius correction value update section 32e updates the tire radius correction value so as to become closer to the acquired wheel speed ratio by a value which falls within the breadth of the learning update step. For example, the tire radius correction value update section 32e may bring the tire radius correction value closer to the wheel speed ratio by a maximum value, i.e., the breadth of the learning update step.

Through the above processes, differences in the learning (update) speed are introduced as shown in Figure 14, thus allowing the tire radius correction value to converge as soon as possible.

The above illustrates an example where the tire radius correction value is updated, by up to an upper limit value which is the breadth of the learning update step, thus bringing the tire radius correction value closer to the wheel speed ratio. A minimum breadth (lower limit value) may also be defined for the learning update step. In this case, the learning update step calculation section 32d determines a difference (A) between the previous tire radius correction value and the value of the front-rear wheel speed ratio acquired from the multiplier 32c, and if the difference (A) falls between the upper limit value and the lower limit value (B), adopts the current front-rear wheel speed ratio as a new tire radius correction value. On the other hand, if the difference (A) does not fall between the upper limit value and the lower limit value (B), the learning update step calculation section 32d adopts as the new tire radius correction value a value which is obtained by change of the tire radius correction value by the upper limit value or the lower limit value.

Fourth Embodiment: Speed of tire radius learning is decreased during inclination

The present embodiment will illustrate a tire radius learning process involving the speed with which tire radius learning is performed.

A situation may be imagined where the rider is traveling on a motorcycle with the vehicle body being banked. In the present embodiment, the speed of updating the correction value is changed in accordance with the value of attitude information. More specifically, in the present embodiment, the update step of the tire radius learning is decreased while the vehicle body is banked.

The construction of the stability control system according to the present embodiment is as shown in Figure 7. However, its partial construction, i.e. the ECU 10, differs from that of the stability control system 110 according to the first Embodiment (Figure 8). Hereinafter, with reference to Figure 18, the construction of the ECU 10 of the stability control system according to the present embodiment will be described.

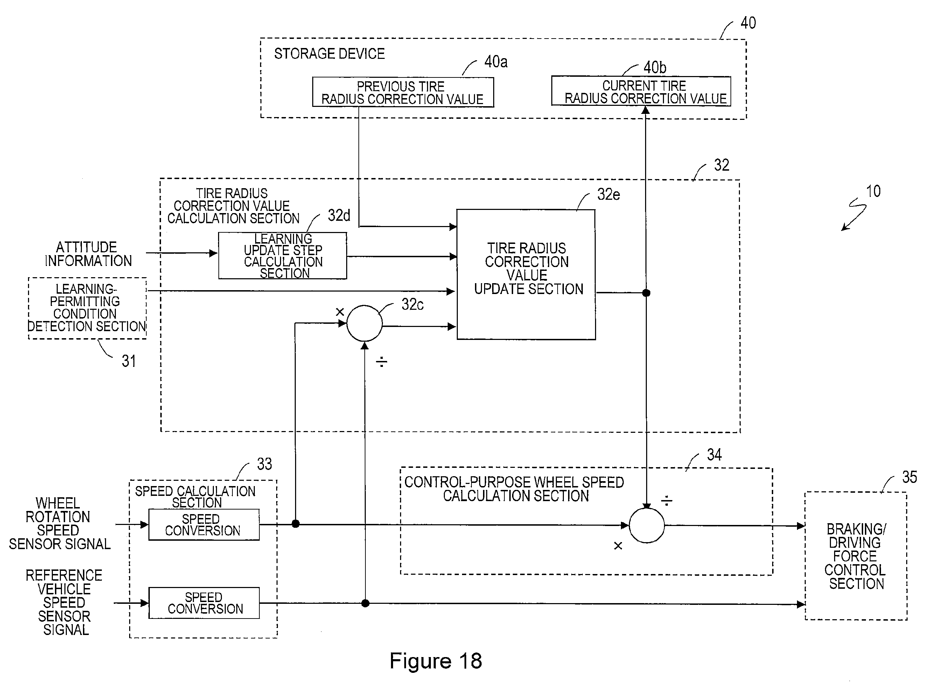

Figure 18 is a control block diagram of the ECU 10 according to the present embodiment.

Figure 18 differs from Figure 8 in that a learning update step calculation section 32d is additionally provided in the arithmetic unit 30, and that a tire radius correction value update section 32e is provided instead of the tire radius correction value table update section 32a.

Similarly to its function as described in relation to the third Embodiment, the learning update step calculation section 32d has a function of adjusting the speed of learning by using setting values. More specifically, the learning update step calculation section 32d receives attitude information regarding the vehicle body, and changes the speed of updating the correction value in accordance with the value of attitude information. In the present embodiment, while the motorcycle 100 is traveling with its vehicle body 1 inclined, the learning update step calculation section 32d employs a setting value that slows the speed of learning. On the other hand, while the motorcycle 100 is traveling without inclining the vehicle body 1, the learning update step calculation section 32d increases the speed of learning. For instance, the vehicle body 1 being inclined means a state where the bank angle is outside a threshold range, such as a range of ±10°, and the vehicle body 1 not being inclined means a state where the bank angle is with the threshold range, e.g. the range of ±10°, for example. The reason for this is that while the vehicle body is traveling in a near-upright state, the accuracy of learning can be easily kept high.

The flowchart showing a procedure of the operation of the stability control system according to the present embodiment is identical to the flowchart shown in Figure 17 except for a partial difference. Namely, while Figure 17 includes processes related to calculation and comparison of elapsed time and traveled distance (steps S42 to S45), the present embodiment does not require these. Instead of these processes, the following may be included: a process in which the learning update step calculation section 32d acquires attitude information of the vehicle body 1 from the attitude detection unit 11c, and a process in which the learning update step calculation section 32d calculates the learning update step in accordance with the value of the attitude information, i.e. magnitude of the bank angle.

Through the above processes, the speed of tire radius learning is decreased during inclination, thus suppressing learning in situations where it is difficult to ensure accuracy. This reduces the possibility that learning is performed during inclination and that the learned values therefrom are applied even during upright travel.

Fifth Embodiment: Tire radius learning is performed when upright

The fourth Embodiment illustrated an example where the speed of tire radius learning is decreased while the vehicle body is banked. Apart from the fourth Embodiment, another learning schedule may be possible where tire radius learning is not performed at all during banking. In other words, a learning schedule may be possible where tire radius learning is performed only during a period where the motorcycle is traveling substantially upright. In the present embodiment, "substantially upright" means a state where the bank angle is within a threshold range, such as a range of $\pm 10°$, for example.

The processing according to the present embodiment may include a process where the learning update step calculation section 32d of the fourth Embodiment as shown in Figure 18 acquires attitude information of the vehicle body 1 from the attitude detection unit 11c, and by relying on this attitude information, uses a setting value for causing a learning update step to be calculated only when the magnitude of the bank angle is determined to be within a threshold range, e.g. the range of $\pm 10°$, and uses a setting value that zeroes the learning update step when that range is exceeded.

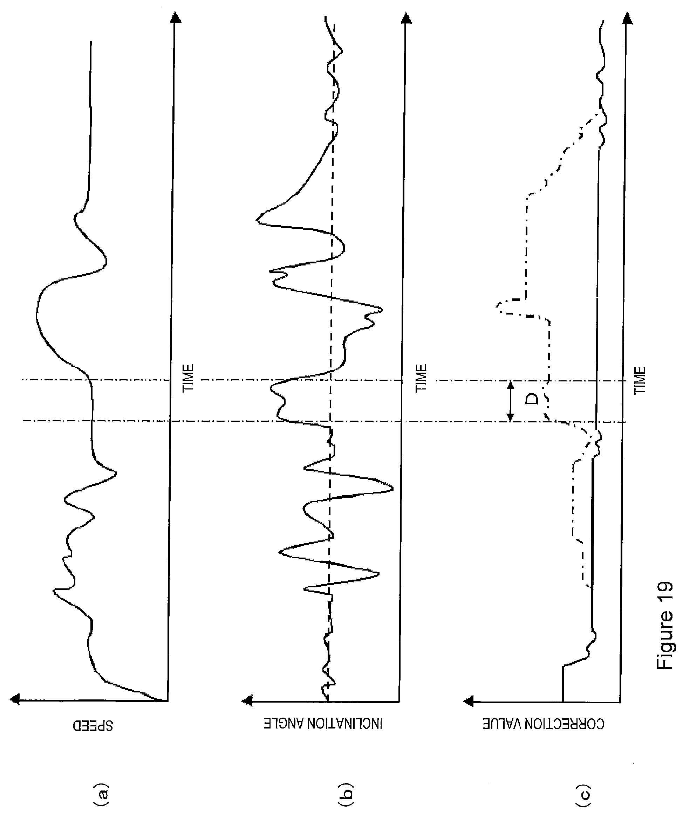

Figure 19, including (a), (b), and (c), shows a chronological relationship between the reference vehicle speed, the bank angle (inclination angle), and acquired correction values according to the present embodiment, where portion (a) shows the reference vehicle speed (front-wheel wheel speed); portion (b) shows the inclination angle; and portion (c) shows acquired correction values. The learning-permitting condition in this example is that, in a substantially upright state, the rear-wheel wheel speed and the reference vehicle speed are equal to or greater than the threshold, and that the amounts of change in the wheel speed and the reference vehicle speed are smaller than the predetermined value. As for the tire radius correction value, the wheel speed ratio is modified by using a value that is obtained as a mathematical function of reference vehicle speed and driving force.

Figure 19(c) shows two correction values, i.e., those indicated by a solid line and those indicated by a dot-dash line. The solid line represents tire radius correction values obtained through learning based on a detection of substantial uprightness which utilizes attitude information, whereas the dot-dash line represents correction values obtained through learning based only on other conditions, without utilizing attitude information.

It can be seen from (b) and (c) of Figure 19 that mislearning is avoided by detection of substantial uprightness on the basis of attitude sensor information (bank angle). The correction values represented by the solid line indicate that the correction values are changeless during a period when the bank angle is changing as shown in Figure 19(b). This means absence of tire radius learning. The reason why the correction value is slightly high at the zero point in time is that the correction value from the previous learning was maintained. Thereafter, the correction value gradually lowers, until reaching a constant value. This constant value is a correction value that ensures correspondence with a state just after a tire exchange.

On the other hand, the correction values represented by the dot-dash line in Figure 19(c) keep changing, i.e., tire radius learning continues, even during a period in which the bank angle is changing as shown in Figure 19(b). See period D, for example, which is a period when travel continues at a constant vehicle speed but with inclination. Since the learning results represented by the dot-dash line in Figure 19(c) do not utilize attitude information, the learning condition is recognized as being satisfied even though there is inclination, thus allowing learning to take place. As a result of this, the correction value changes from the previous value to higher values. This learning was performed in a situation where learning should actually not have taken place, i.e. mislearning.

As described above, in the present embodiment, the tire radius correction value in a substantially upright state is calculated and stored by utilizing attitude information. As compared with the case where tire radius learning is performed without utilizing attitude information, appropriate tire radius correction values can be acquired. Therefore, an appropriate slip amount or slip rate can be calculated when determining whether traction control, ABS, or the like should intervene or not.

In the above description, the term "mislearning" merely alludes to failure to satisfy the learning condition of the present embodiment. It is not an issue whether the learning condition of the present embodiment matches the generic conditions for performing learning. For example, even when the learning condition of the present embodiment is not satisfied, a process of performing tire radius learning for each bank angle may be possible, as has been described in the first Embodiment, for example.

**Sixth Embodiment: A variant of learning-permitting conditions**

The present embodiment will illustrate a variant concerning the learning-permitting condition(s). Specifically, learning is performed when the braking/driving force is equal to or less than the threshold, when an amount of change in the wheel speed and/or reference vehicle speed is equal to or less than the threshold, or when the wheel speed and/or reference vehicle speed is within the threshold range.

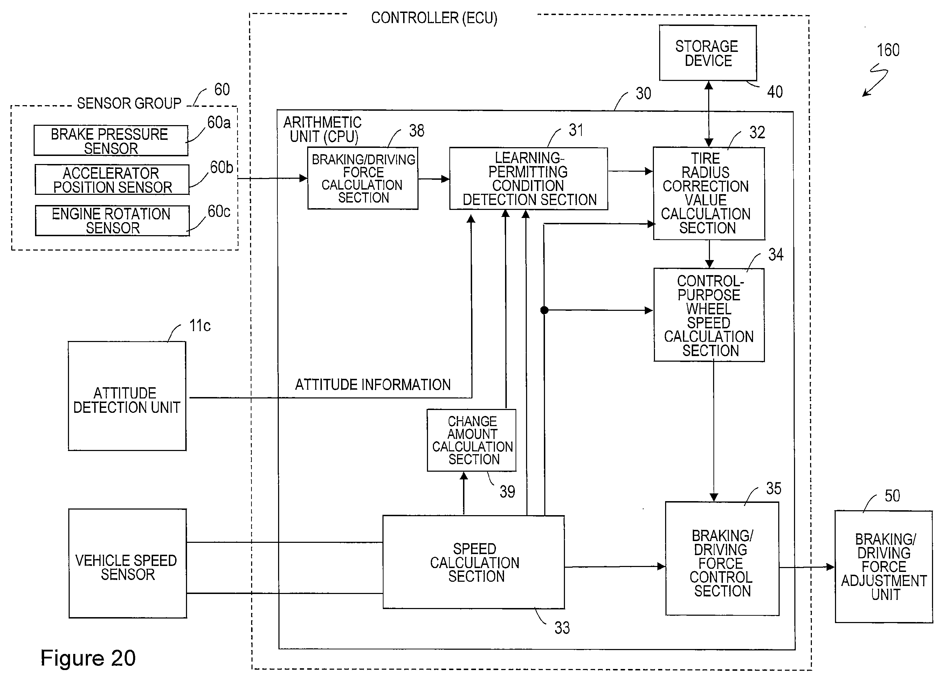

Figure 20 is a block diagram showing the construction of a stability control system 160 according to the present embodiment.

Figure 20 differs from Figure 7 in that a sensor group 60 is additionally provided, and that a braking/driving force calculation section 38 and a change amount calculation section 39 are additionally provided in the arithmetic unit 30.

The sensor group 60 includes a plurality of sensors. In the present embodiment, a brake pressure sensor 60a, an accelerator position sensor 60b, and an engine rotation sensor 60c are illustrated as an example. The brake pressure sensor 60a is a sensor which detects brake pressure. The accelerator position sensor 60b is a sensor which detects the accelerator position. The engine rotation sensor 60c is a sensor that detects revolutions of the engine. The sensors to be included in the sensor group 60 are not limited thereto.

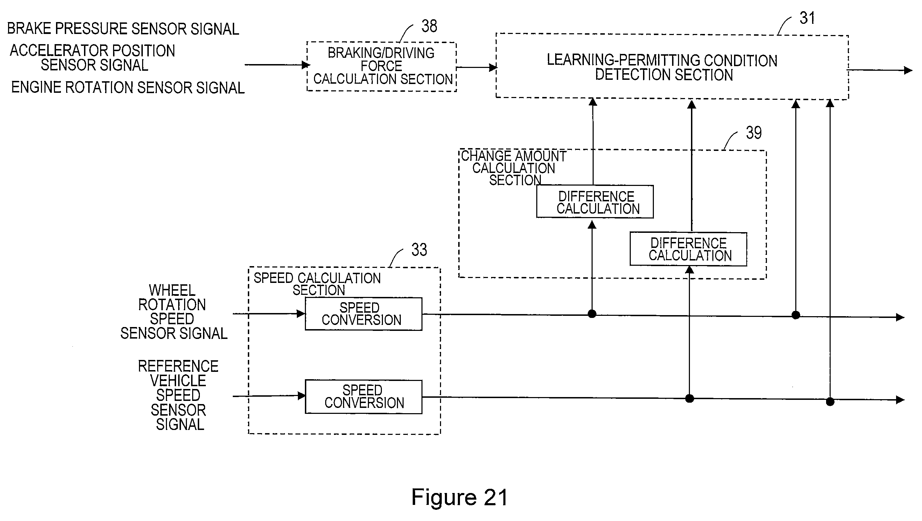

The braking/driving force calculation section 38 and the change amount calculation section 39 will be described with reference to Figure 21.

Figure 21 is a control block diagram of the stability control system 160.

The braking/driving force calculation section 38 acquires brake pressure information, accelerator position information, and engine revolutions information from, respectively, the brake pressure sensor 60a, the accelerator position sensor 60b, and the engine rotation sensor 60c. Then, based on these signals, the braking/driving force calculation section 38 calculates the braking force and driving force that are currently acting on the vehicle body.

The calculated value of braking force can be expressed as, for example:

$$Fb=2\mu \times P \times A \times r/R.$$

The respective symbols have the following meanings.

Fb: braking force
$\mu$: friction coefficient between brake pad and disk
P: hydraulic pressure
A: area of brake caliper cylinder
r: brake effective radius
R: tire radius

Although the friction coefficient $\mu$ relies on temperature and the like, an estimated braking force can be calculated from the above equation by adopting a representative value.

The calculated value of driving force can be expressed as, for example:

$$Fd=T \times K/R.$$

The respective symbols have the following meanings.

Fd: driving force
T: (estimated) torque
K: total deceleration ratio of drive transmission system from engine to driving wheel
R: tire radius

The torque T can be determined from the accelerator position and engine revolutions, by referring to a torque map which is prepared in advance. The torque map is created from performance measurement results of the engine or the like, and is generally a mathematical function of accelerator position and engine revolutions, etc. However, it may be expressed as a mathematical function of intake pressure, and may further be subjected to corrections in terms of atmospheric pressure, intake air temperature, gear-related losses, etc.

The change amount calculation section 39 determines an amount(s) of change in the rear-wheel speed and/or reference vehicle speed. The change amount calculation section 39 calculates a difference between a previous rear-wheel speed, such as the rear-wheel speed from 0.1 seconds ago, and the current rear-wheel speed, for example. Alternatively, the change amount calculation section 39 calculates a difference between a previous reference vehicle speed, such as the reference vehicle speed from 0.1 seconds ago, and the current reference vehicle speed, for example.

The learning-permitting condition detection section 31 determines whether the condition(s) for permitting tire radius learning is satisfied, and if it is satisfied, so notifies the tire radius correction value calculation section 32. Examples of the condition(s) for permitting tire radius learning may comprise one or more of each of the following:

- braking/driving force is equal to or less than a predetermined value;
- amount of change in wheel speed and/or reference vehicle speed is equal to or less than a predetermined value;
- wheel speed and/or reference vehicle speed is within a predetermined range;
- steering angle (helm angle) is within a predetermined range.

As for the helm angle, a steering angle sensor may be provided, for example, and an output signal from that sensor may be utilized for its detection.

Based on the aforementioned physical parameters, the condition(s) for permitting tire radius learning can be set, whereby an appropriate condition(s) for performing tire radius learning can be more flexibly determined. This may improve the accuracy of the tire radius correction value under necessary conditions.

Note that the change amount calculation section 39 may perform other processes in addition to the difference calculation. For example, the change amount calculation section 39 may subject the calculated difference value to a filtering process, e.g., with a linear low-pass filter. Alternatively, the speed calculation section 33 may apply a filtering process to the rear-wheel wheel speed and/or vehicle speed (front-wheel wheel speed), and the change amount calculation section 39 may use the resultant signal in calculating a difference.

**Seventh Embodiment: Variant concerning how to obtain tire radius correction value**

The present embodiment will illustrate a variant that calculates a tire radius correction value through a mathematical function of the wheel speed ratio and a value(s) representing the traveling situation. The mathematical function may be, for example, a mathematical function of braking/driving force, a mathematical function of the amount of change in the wheel speed and/or reference vehicle speed, a mathematical function of the wheel speed and/or reference vehicle speed, or a mathematical function of the value of attitude information.

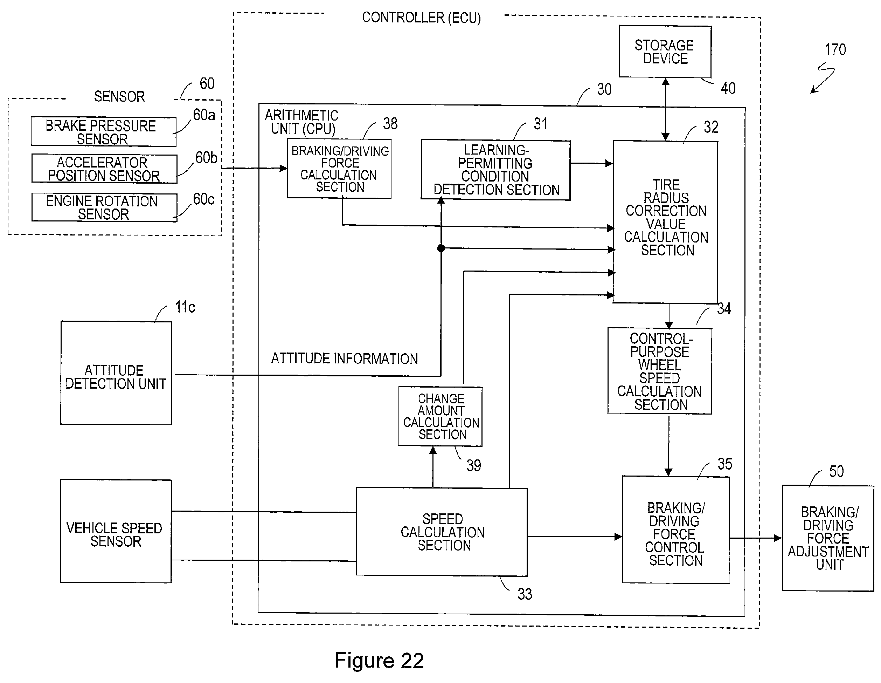

Figure 22 is a block diagram showing the construction of a stability control system 170 according to the present embodiment.

The construction of the stability control system 170 is identical to the construction of the stability control system 160 of the sixth Embodiment except for the following difference: the learning-permitting condition detection section 31 receives only attitude information in order to judge the learning-permitting condition(s), and different types of information are received by the tire radius correction value calculation section 32. As for the latter, specifically, the tire radius correction value calculation section 32 receives values representing braking and driving forces that are output from the braking/driving force control section 35, attitude information that is output from the attitude detection unit 11c, and information concerning an amount(s) of change in the rear-wheel speed and/or reference vehicle speed that is output from the change amount calculation section 39 concerning speeds.

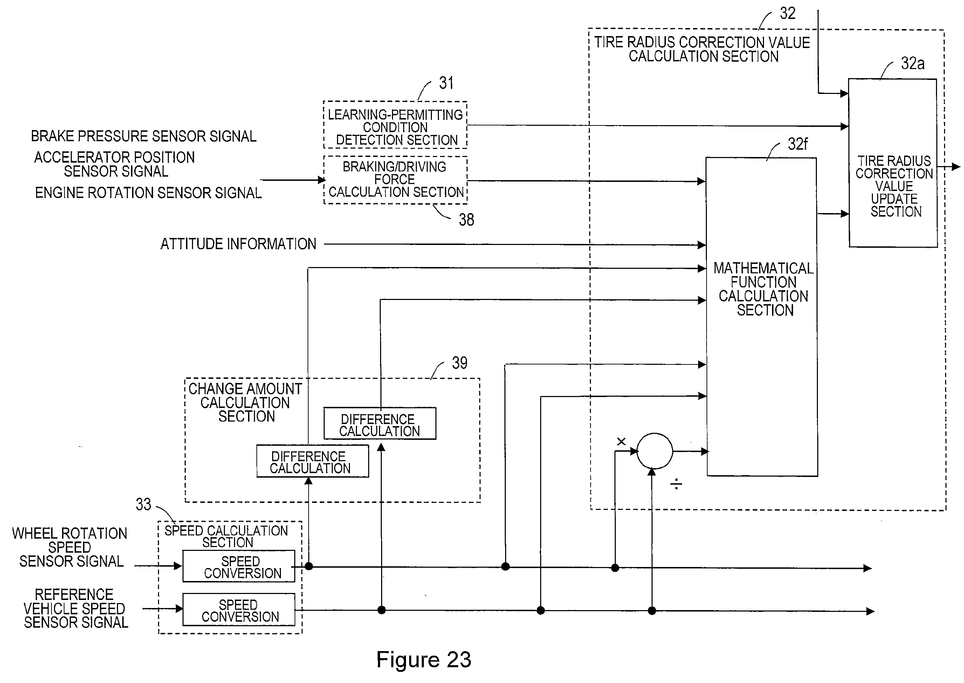

Figure 23 is a control block diagram of the stability control system 170. The tire radius correction value calculation section 32 includes a mathematical function calculation section 32f. Figure 23 only shows portions which are particularly related to the present embodiment, while any other construction is illustrated in a form partially simplified from the construction of Figure 8.

The mathematical function calculation section 32f receives values representing braking and driving forces that are output from the braking/driving force control section 35, attitude information that is output from the attitude detection unit 11c, and information concerning an amount(s) of change in the rear-wheel speed and/or reference vehicle speed that is output from the change amount calculation section 39 concerning speeds. The mathematical function calculation section 32f retains a predetermined mathematical function(s), and is able to calculate tire radius correction values by using them.

Examples of the predetermined mathematical function are as follows:

(a) a mathematical function of the front- and rear-wheel rotation speeds and braking force and/or driving force during travel;
(b) a mathematical function of the front- and rear-wheel rotation speeds and the rotation speed(s) of the front wheel and/or rear wheel during travel;
(c) a mathematical function of the front- and rear-wheel rotation speeds and an amount(s) of change in the rotation speeds of the front wheel and/or rear wheel during travel; and
(d) a mathematical function of the front- and rear-wheel rotation speeds and longitudinal acceleration as indicated by the acceleration sensor 22 during travel.

Mathematical function (a) above employs a combination of conditions in order to prevent an incorrect correction value from being set due to a slip associated with the braking/driving force, and further employs a mathematical function of braking/driving force in order to modify the tire radius correction value. Since correction values are set and modified even in a state where braking/driving force is acting, instability of the correction values due to influences of braking/driving force can be kept small.

Mathematical function (b) above is effective for suppressing influences of tire expansion. That is, when a tire radius correction value is set by using a difference or ratio between the front-wheel rotation speed and the rear-wheel rotation speed, the tire radius correction value will be affected by expansion of the tire with rotation speed or the like. Accordingly, the tire radius correction value is modified by using a mathematical function concerning the rotation speed(s) of the front wheel and/or rear wheel. As a result, instability of the tire radius correction value due to influences of tire expansion can be kept small.

Mathematical function (c) above modifies the tire radius correction value by using a mathematical function concerning the amount(s) of change in the rotation speeds of the front wheel and/or rear wheel. Since tire radius correction values are set and modified even in an accelerating and/or decelerating state, instability of the tire radius correction value due to influences of acceleration/deceleration can be kept small.

Mathematical function (d) above modifies the tire radius correction value by using a mathematical function concerning the longitudinal acceleration which is indicated by the acceleration sensor 22 mounted on the motorcycle 100. Since tire radius correction values are set and modified even in an accelerating and/or decelerating state, instability of the tire radius correction value due to influences of acceleration/deceleration can be kept small.

When applying any of the aforementioned mathematical functions, travel conditions similar to those which have been described earlier can be set. Possible travel conditions to be set include one or more of: the braking force and/or driving force is/are within a predetermined range; rotation speed(s) of the front wheel and/or rear wheel is/are within a predetermined range(s); the amount(s) of change in the rotation speeds of the front wheel and/or rear wheel is/are within a predetermined range(s); and the longitudinal acceleration is within a predetermined range.

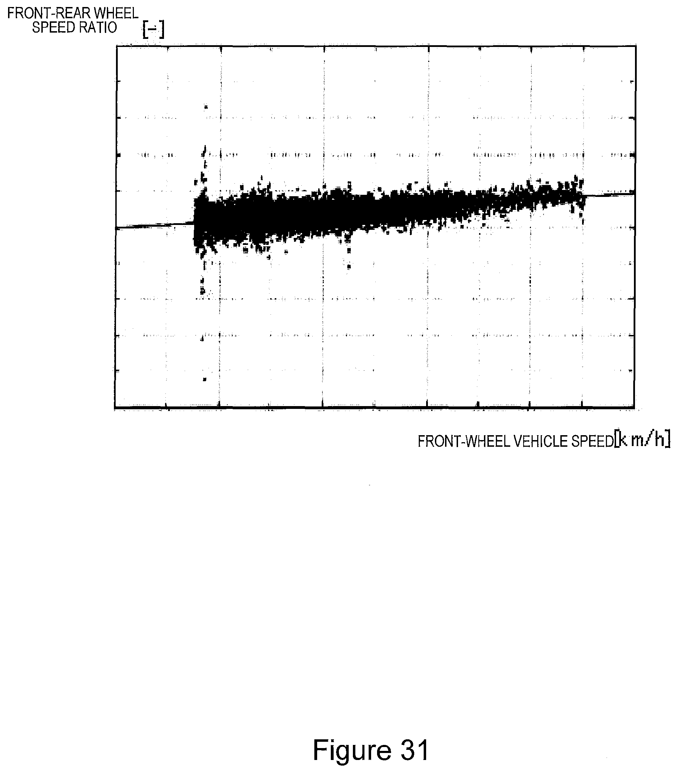

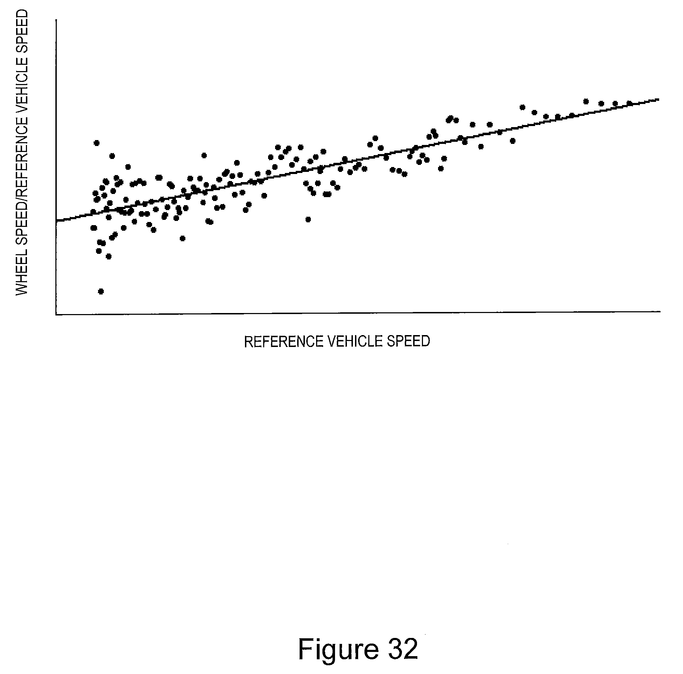

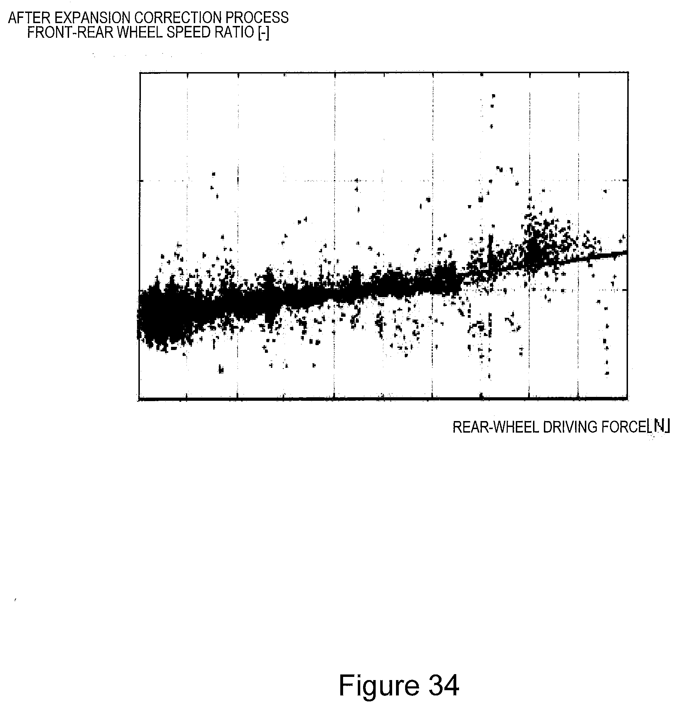

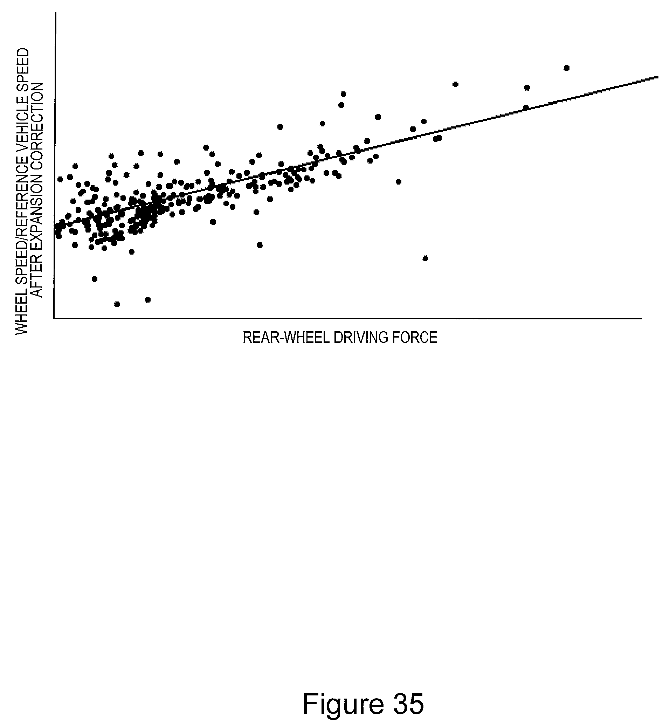

Specific examples of mathematical functions (a) and (b) above may be the drawings to be discussed in the description of an eighth Embodiment, which will be described next. Specific examples of mathematical function (a) may be the straight lines shown in FIGS. 34 and 35. Specific examples of mathematical function (b) may be the straight lines shown in Figures 31 and 32.

On the other hand, the inventors have confirmed that mathematical function (c) can be approximated by a substantially straight line. Since mathematical function (c) approximates the specific examples of mathematical function (a), specific examples of mathematical function (c) alone will be omitted from illustration. The inventors have confirmed that, in a comparison between mathematical functions (a) and (c), the method of mathematical function (a) provides better linearity. Therefore, it is considered that mathematical function (a) approximates the values more accurately.

As for mathematical function (d), the inventors believe that it offers similar tendencies to those of mathematical functions (a) and (c), because longitudinal acceleration is a physical parameter which is strongly correlated to the braking force/driving force and the amount of change in wheel speed. Since mathematical function (d) also approximates the specific examples of mathematical functions (a) and (c), specific examples of mathematical function (d) alone will be omitted from illustration.

Thus, the first to seventh Embodiments concerning tire radius correction have been described above. Two or more of the tire radius learning processes of the first to seventh Embodiments above may be combined in order to perform tire radius learning. However, there is no need to combine the tire radius learning according to the fourth Embodiment and the tire radius learning according to the fifth Embodiment and either one of them may be selectively adopted.

**Eighth Embodiment: Lean correction**

The eighth Embodiment illustrates estimation of an apparent slip (lean component) that occurs with banking of the vehicle body 1, which has been mentioned in connection with Figure 4, and lean correction concerning removal of the lean component.

First, the need for lean correction will be described in detail.

Many techniques of controlling the braking/driving force of a motorcycle, and optimizing its tire slips have been developed. In order for a tire to exhibit an effective gripping performance, a certain amount of slip is required. It is known that a maximum gripping performance is exhibited under a slip rate of approximately 5 to 20%. The appropriate slip rate is determined based on tire performance and situations of the road surface.

Desirably, a target value of the optimum slip rate for allowing the tire gripping performance to be exhibited should be set within this range. A commonly-used method of acquiring a slip rate is to calculate a slip rate from the respective rotation speeds of the front wheel and the rear wheel and the effective radii (design values) of the respective tires. However, the tire radius with which a tire comes in contact with the ground during travel may differ from the fixed effective radius. Therefore, a slip that is calculated during travel will contain not only the actual slip, but also a component which appears like a slip, caused by deviation from the design value of the tire radius, i.e. an apparent slip. Deviation from the tire design value may occur due to changes in the tangential point or the like, which in turn are ascribable to tire exchange, tire wear, expansion, deformation, or inclination (bank) of the vehicle body, for example.

In order to effect appropriate intervention of the traction control system or ABS, an accurate slip rate needs to be obtained. An apparent slip may hinder obtainment of an accurate slip rate, and therefore needs to be removed. The first to seventh Embodiments above have illustrated techniques of correcting a deviated tire radius, which is a factor causing an apparent slip, on the basis of a travel state when travel conditions are satisfied.

A change in the tangential point due to inclination (banking) of the vehicle body induces a lean component.

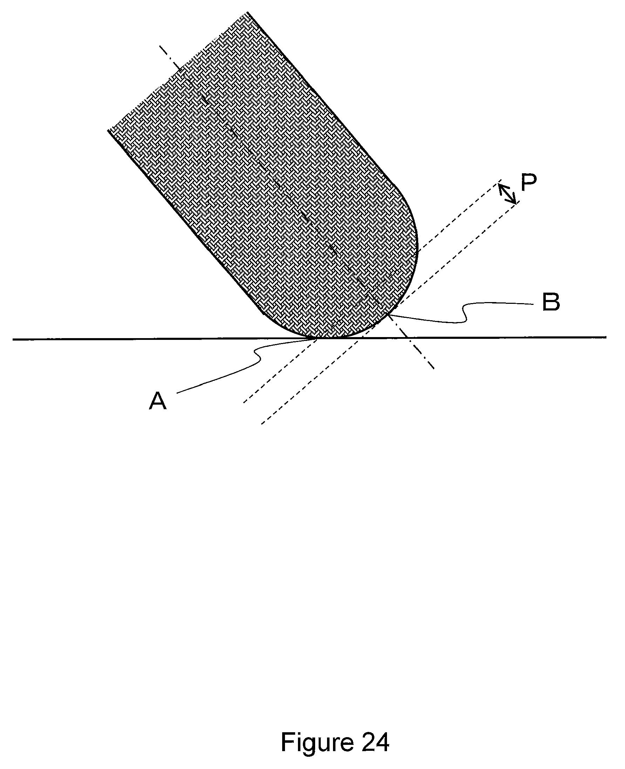

Figure 24 shows a tangential point A at which the tire comes in contact with the ground when the vehicle body is banked. The design value of the tire radius is defined as a length from the center axis of a circle shaping the unused tire to a point B on the outermost periphery, in a direction along the dot-dash line. On the other hand, the tire radius during travel is defined as the length of a line segment, from the center axis of the circle to the tangential point A, which is parallel to the dot-dash line. The amount of deviation P therebetween corresponds to the deviation of the tire radius from its design value. The amount of deviation P is a factor that is conducive to incorrect vehicle speed, incorrect front-wheel rotation speed and/or incorrect rear-wheel rotation speed, and may affect the slip rate calculation as an apparent or pseudo slip, i.e. a lean component.

The tire effective radius during travel constantly changes with situation, and the tire is always subjected to a braking force or driving force, thus experiencing a commensurate slip, which makes it difficult to actually distinguish an apparent or pseudo slip. Therefore, a method is needed which sets and evaluates a target slip as an amount that may also contain an apparent or pseudo slip.

However, it is difficult compare a target value that has been set against a theoretical slip that is required for gripping performance to be exhibited. This makes it impossible to conduct a theoretical check as to whether a tire slip controller which has been developed is in fact designed so that gripping performance of the tire can be effectively exhibited.

Therefore, in developing an optimum tire slip controller, it is necessary to distinguish how much apparent or pseudo slip is contained in the measured slip data, in order to achieve a design which allows gripping performance of the tire to be effectively exhibited.

As mentioned above, the earlier embodiments have illustrated techniques of reducing the influences of an apparent slip by correcting the tire radius that has deviated during actual travel. The following embodiment will illustrate a technique which enables a manufacturer of the motorcycle 100 to assess a lean component that may occur due to banking of the vehicle body of the motorcycle 100. By assessing a lean component, the manufacturer can ensure that the stability control system of the motorcycle 100, e.g. the traction control system or ABS, will appropriately operate irrespective of travel conditions.

As a technique of assessing a lean component, a technique of determining a lean component from the profile (lateral radius) of a tire has already been devised (e.g. Patent Document 2). It is known that the profile will differ between its dynamic values (i.e., shapes during travel) and its static value (the shape while the vehicle is stopped). Even if a lean component correction is made based on the static value, the actual data may still contain an apparent or pseudo slip, or an excessive correction may be performed. Therefore, it is more preferable to obtain a profile by measuring dynamic values from the actual travel data.

However, even in a travel state under control of the rider, the measurement data during travel will contain an apparent or pseudo slip other than a lean component, or an actual slip. This makes it difficult to measure a dynamic profile.

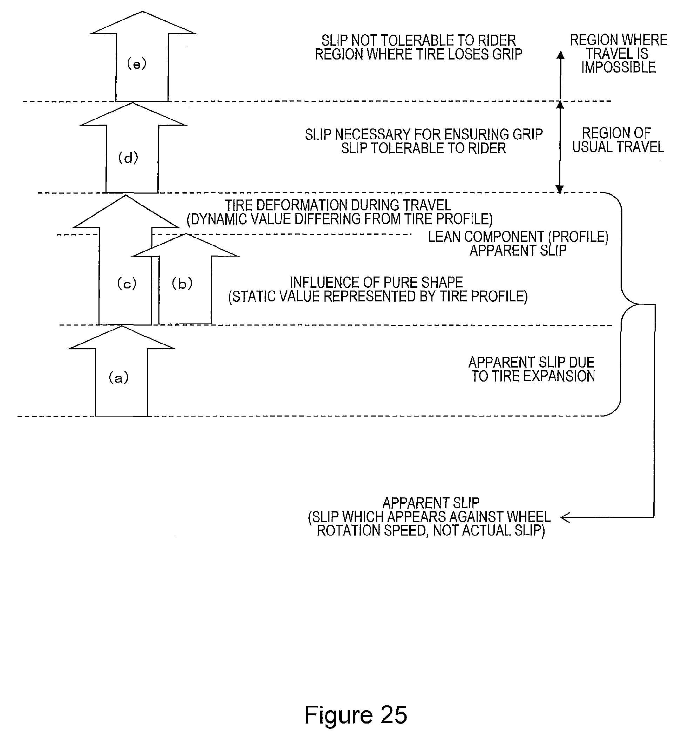

Figure 25 shows slips (a), (b), (c), (d), and (e) that may be encompassed during travel.

Slip (a) is an apparent or pseudo slip due to deformation of the tire that is caused by a centrifugal force of the tire rotation. As has been described in the second Embodiment, the tire may expand due to a centrifugal force of the wheel rotation. Although the present embodiment refers to an apparent or pseudo slip due to tire expansion as an example, this is not a limitation.

Slip (b) is an apparent or pseudo slip associated with the pure tire shape. The pure tire shape is a static (fixed) value which is represented by a cross-sectional shape (tire profile) of the tire.

Slip (c) is an apparent or pseudo slip which occurs due to various factors other than the static shape of the tire. It is an apparent slip caused by dynamic factors such as crushing, deformation, or the like of the tire that are associated with a load shift. Unlike the tire profile, this tire deformation is a dynamic value.

Slip (d) is a slip that can be tolerated by the rider, and is required for ensuring grip. Note that the tolerable slip amount may be altered by the rider. For example, in the case where it is possible to switch the operation mode concerning traction control or ABS control of the motorcycle 100 in a plurality of notches, the tolerable slip amount may be altered in accordance with each operation mode.

Slip (e) is a slip that cannot be tolerated by the rider. This slip means that the tire will lose grip and slide. The stability control system may be utilized in order to prevent occurrence of slip (e). It will be evident that appropriate intervention of the stability control system will not be possible without being able to appropriately distinguish a slip that is tolerable to the rider from a slip that is not tolerable.

Slips (a), (b), and (c) above are classified as apparent or pseudo slips, and are not actually-occurring slips. When determining a slip rate, these slip (a), (b), and (c) need to be removed.

Slip (a) can be removed by a known method, or the method of the second Embodiment described above, for example.

On the other hand, slips (b) and (c) are apparent or pseudo slips that occur with banking of the vehicle body, i.e. a lean component. The aforementioned Patent Document 2 stops short of determining slip (c), while slip (b) is determined.

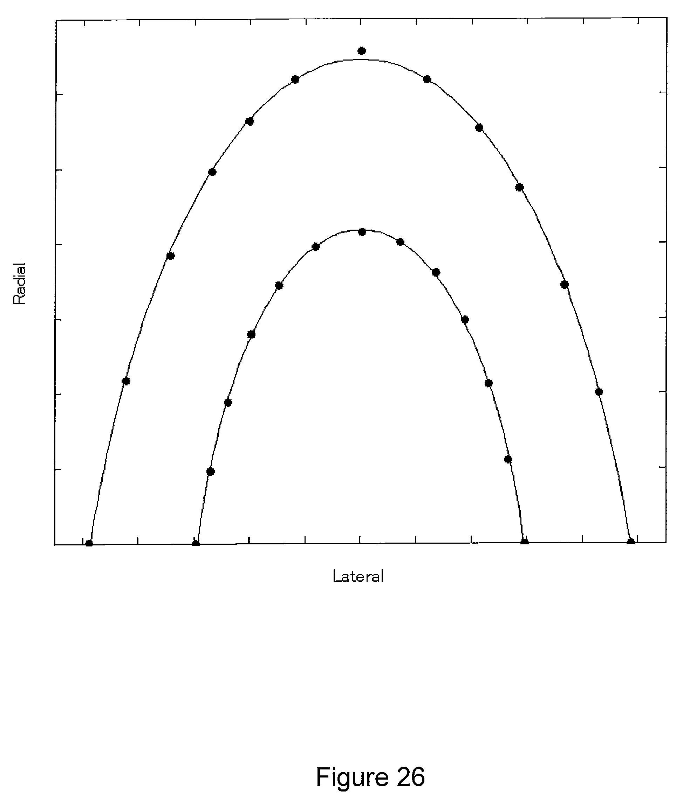

Figure 26 is a plot diagram of data obtained by measuring the cross-sectional shape of a tire in a stationary state. Each point represents a measured point. Each curve connecting the points presents an interpolated line obtained by regarding the cross-sectional shape as a circular shape. The inner curve represents a stationary cross-sectional shape of the front wheel tire, whereas the outer curve represents a stationary cross-sectional shape of the rear wheel tire.

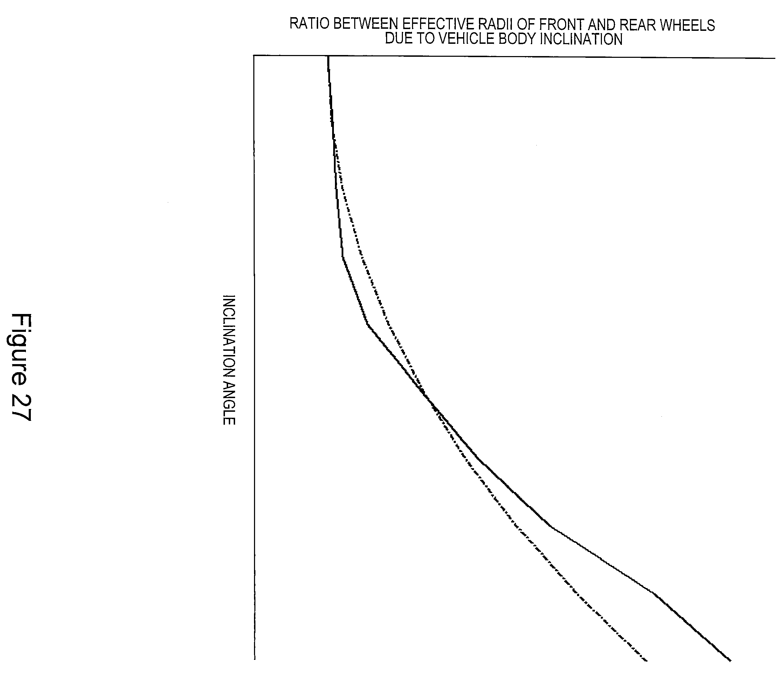

Figure 27 shows differences between the static cross-sectional shape and the dynamic cross-sectional shape, as measured by the inventors. The solid line represents the ratio between rates of change in the effective radii of the front and rear tires, as acquired from travel data. The broken line represents the ratio between rates of change in the effective radii of the front and rear tires, as acquired from the cross-sectional shape which was measured in a stationary state.

Since the solid line and the broken line do not match, it is considered that, in addition to the static cross-sectional shape, there are factors affecting the ratio between rates of change in the effective radii of the front and rear tires during travel. One possible factor may be tire deformation, for example. Thus, the inventors have concluded that it would be appropriate to extract a lean component from travel data, rather than from values in the tire drawings that only indicate the static cross-sectional shape.

Thus, the present embodiment will illustrate a technique of separating and extracting only an apparent or pseudo slip ascribable to a lean component from the actual travel data in order to obtain dynamic values of the profile.

First, the construction of a motorcycle 100 according to the present embodiment will be described. The lean correction according to the present embodiment is a process that is performed by the manufacturer of the motorcycle 100 at the development phase. Although the motorcycle 100 shown in Figure 2 has been described as a completed product after development, the motorcycle 100 in the embodiment concerning lean correction will conveniently be described as a test vehicle in the development phase.

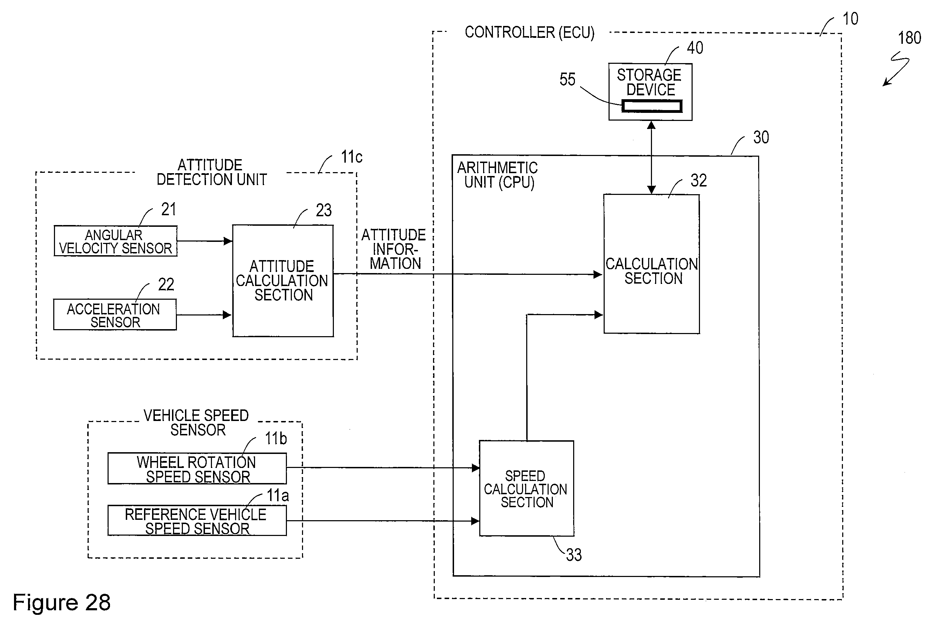

Figure 28 is a block diagram showing the construction of a measurement data acquisition system 180 of a motorcycle 100 according to the present embodiment. The construction of the measurement data acquisition system 180 is similar to the construction of the stability control system 110 described in Figure 7. Component elements of like functions will be denoted by like reference numerals, and their description will be omitted.

The measurement data acquisition system 180 does not include any construction for the stability control in the stability control system 110, e.g. the control-purpose wheel speed calculation section 34 or the braking/driving force control section 35. On the other hand, a storage device 40 of the measurement data acquisition system 180 stores measurement data 55, which are results of measurement and are to be utilized for the development of the motorcycle 100.

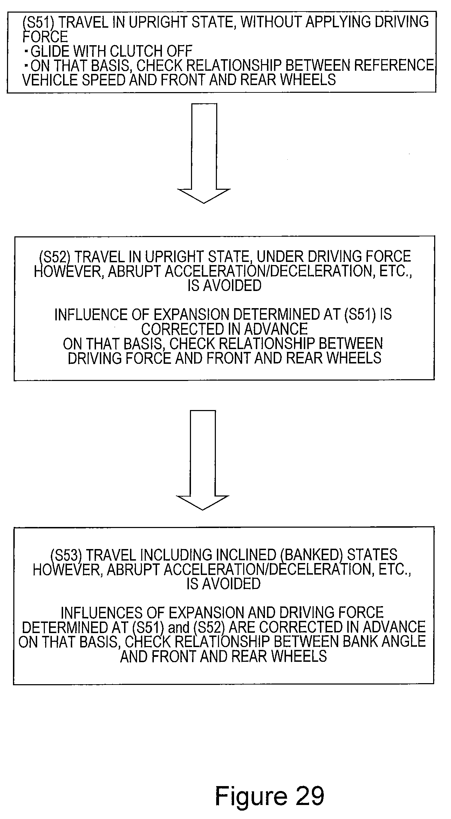

Figure 29 shows a procedure for lean correction according to the present embodiment.

First, at step S51, the rider makes the motorcycle 100 travel while keeping the vehicle body 1 in an upright state, without applying driving force. "Without applying driving force" means coasting or gliding with the clutch OFF. A relationship between the reference vehicle speed and the wheel speeds of the front and rear wheels during this coasting or gliding is acquired. In the case where the reference vehicle speed is the wheel speed of the front wheel, the wheel speed of the rear wheel may be acquired. The relationship between the reference vehicle speed and the wheel rotation speeds acquired at this point will contain influences of wheel expansion, as has been described in the second Embodiment.

Next, at step S52, the rider makes the motorcycle 100 travel with driving force, while keeping the vehicle body 1 in an upright state. However, abrupt acceleration/deceleration is avoided. Note that the tire radius correction value calculation section 32 has performed an advance tire radius correction in order to preclude the influence of expansion determined at step S51. On that basis, the relationship between the driving force and the front and rear wheels is checked. As a result, a relationship between the front and rear wheels and the driving force when a slip that is tolerated by the rider exists is acquired.

At step S53, the motorcycle 100 is made to travel, so as to include states where the rider inclines the vehicle body 1. However, abrupt acceleration/deceleration is avoided also in this case. Note that the tire radius correction value calculation section 32 has performed an advance tire radius correction in order to preclude the influence of expansion determined at step S51. Furthermore, the tire radius correction value calculation section 32 has also performed a tire radius correction concerning the influence of driving force determined at step S52. On that basis, a relationship between the bank angle and the front and rear wheels is checked. As a result, an influence due to banking of the vehicle body 1, i.e. an influence of the lean component, is determined.

Steps S51 to S53 above will each be described below in detail.

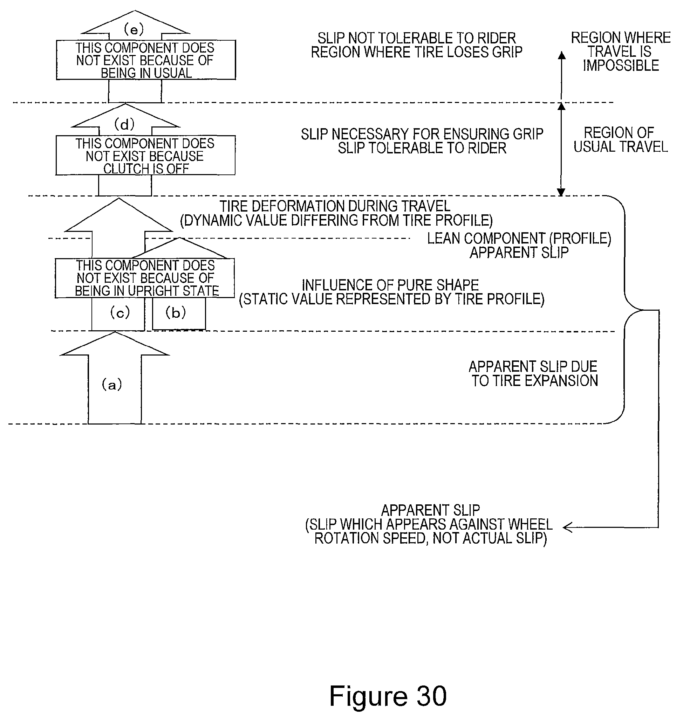

Figure 30 shows distinction between slip components concerning step S51 of Figure 29. The travel condition is that the rider makes the motorcycle 100 travel while keeping the vehicle body 1 in an upright state, without applying driving force. By uprighting the vehicle body 1, lean components (b) and (c) are prevented. Furthermore, since driving force is not applied, slip (d) for ensuring grip does not occur either. Of course, slip (e) does not occur. Therefore, the influence of slip (a), i.e., only expansion characteristics, will be contained in the relationship between the reference vehicle speed and the wheel speed that is acquired at step S51.

Figure 31 shows measurement data concerning expansion characteristics. The vertical axis represents the front-rear wheel speed ratio, and the horizontal axis represents the front-wheel vehicle speed. Figure 32 shows a graph providing a more simplified representation of the measurement data in Figure 31. For ease of understanding, the data scales on the vertical axis and horizontal axis in Figure 32 are changed from those in Figure 31. In both drawings, the vertical axis represents the ratio of rear-wheel wheel speed/reference vehicle speed, and the horizontal axis represents the reference vehicle speed. Each point indicates a piece of data that is measured in the respective trial. The straight line represents a line of approximation that best represents the points.

The front-rear wheel speed ratio is not constant, but is changing with vehicle speed. This is considered to be because the tire has expanded. By grasping in advance the relationship of the ratio of rear-wheel wheel speed/reference vehicle speed in accordance with the reference vehicle speed, it becomes possible to preclude tire expansion influences through correction. The details are as described in relation to the second Embodiment. Specifically, the tire radius can be corrected by utilizing tire expansion correction values, using the same method as in step S35 of Figure 13. The arithmetic unit 30 performs this process.

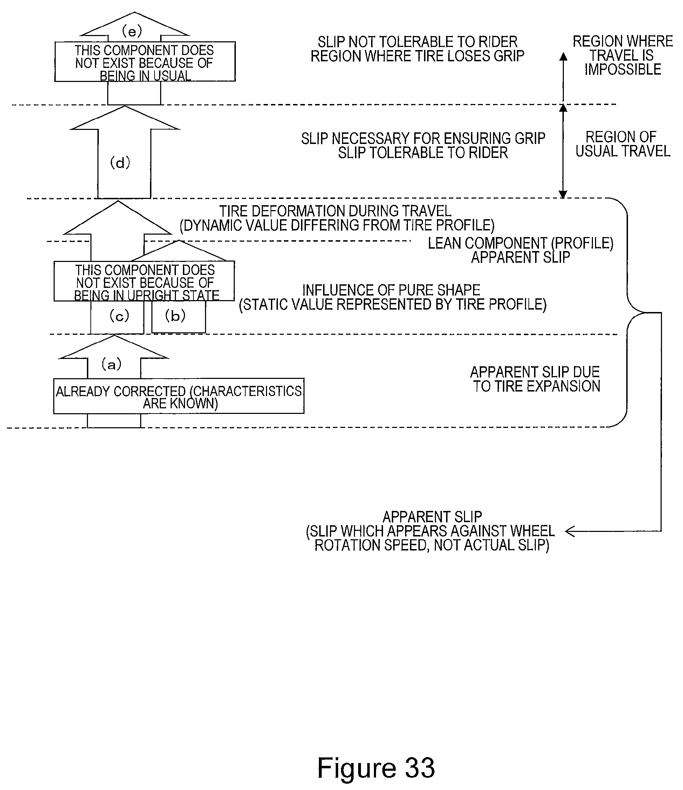

Figure 33 shows distinction between slip components, as related to step S52 in Figure 29. The travel condition is that the rider makes the motorcycle 100 travel with driving force, while keeping the vehicle body 1 in an upright state. First, slip component (a) obtained at step S51 has been corrected for such that its influence is negligible or limited. Moreover, by uprighting the vehicle body 1, lean components (b) and (c) are prevented. However, driving force is applied. Therefore, it can be said that there exists only slip (d) for ensuring grip.

Figure 34 shows measurement data concerning running characteristics during travel under driving force. The vertical axis represents the front-rear wheel speed ratio after expansion correction has been performed, and the horizontal axis represents the magnitude of rear-wheel driving force. Each point represents a piece of data that was measured in the respective trial. The straight line represents a line of approximation which best represents the points. Figure 35 is a graph providing more simplified representation of the measurement data in Figure 34. For ease of understanding, the data scales on the vertical axis and horizontal axis in Figure 35 are changed from those in Figure 34.

By applying driving force, the relationship between the wheel rotation speeds of the front and rear wheels is changed, i.e., a slip occurs. This slip is considered as a slip that is necessary for ensuring grip. By grasping in advance the relationship as to how much potential slip will occur for a given magnitude of driving force, it becomes possible to preclude through correction the influences of a slip that occurs by applying driving force.

In the case where the motorcycle 100 has a plurality of operation modes with different tolerable slip amounts, a relationship between the wheel rotation speeds of the front and rear wheels may be acquired for each of the plurality of operation modes. For example, when the motorcycle 100 is to be developed as a model that is capable of traveling both on circuits and city roads, operation modes can be set such as a racing mode for racing in clear weather, a rain mode for racing in rain, and a city mode for city roads. Different tolerable slip amounts can be respectively set for the racing mode, the rain mode, and the city mode. Moreover, different tolerable slip amounts may also be set depending on whether there is strong or weak intervention of the traction control or ABS. In order to determine such tolerances, it would be useful to acquire a relationship between the wheel rotation speeds of the front and rear wheels for each case of applying a different driving force, with respect to each of the plurality of travel modes.

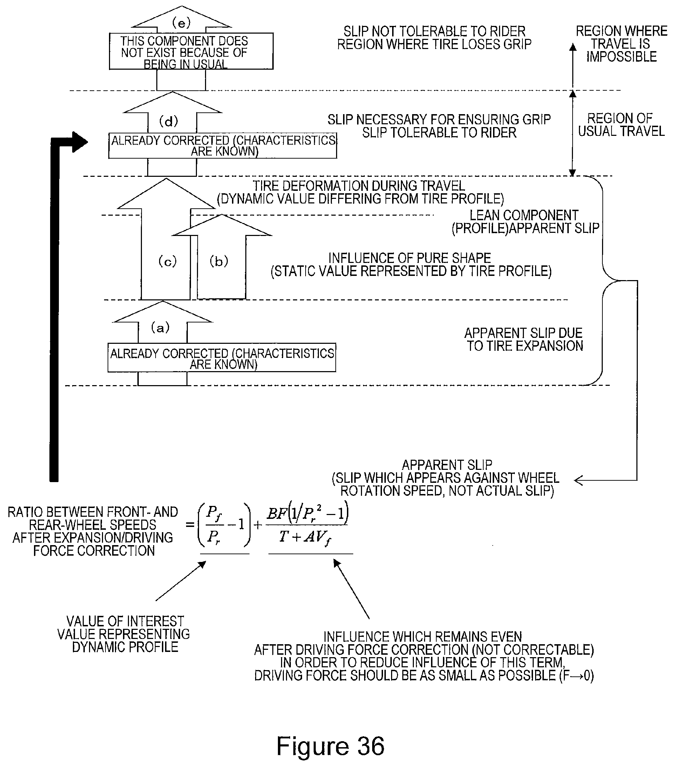

Figure 36 shows distinction between slip components, as related to step S53 in Figure 29. The travel condition is that the motorcycle 100 be made to travel, including states where the rider inclines the vehicle body 1. As mentioned above, slip component (a) no longer exists after correction. Furthermore, as for slip component (d), the influence of the ratio of wheel speed/reference vehicle speed as identified for a given rear-wheel driving force may be precluded. As a result, only a slip which occurs due to banking of the vehicle body 1 during travel, i.e., a lean component, can be identified.

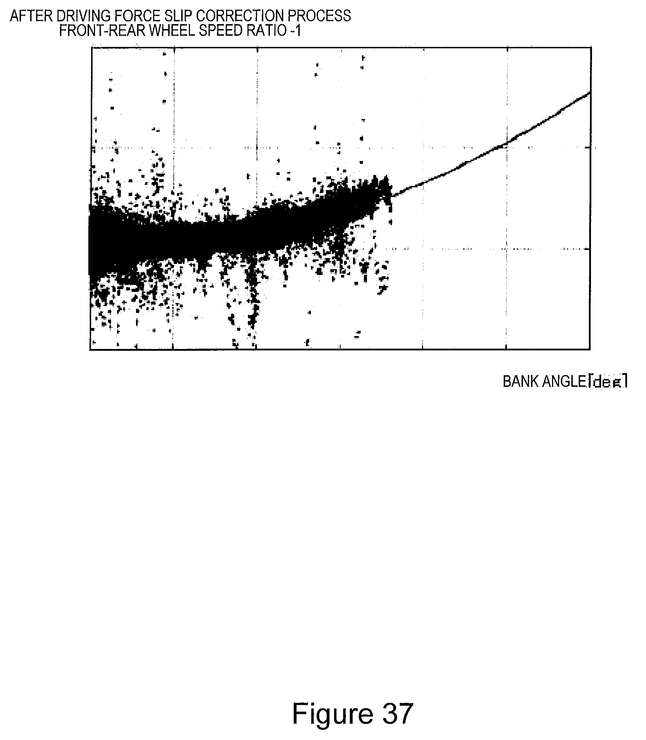

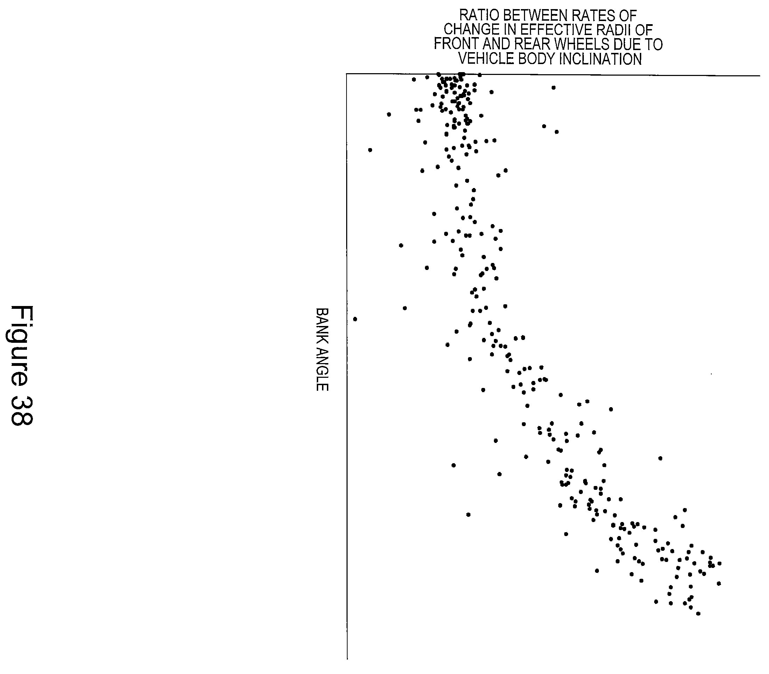

Figure 37 shows measurement data concerning running characteristics during travel, including states in which the vehicle body 1 is inclined. The vertical axis represents the value after a slip under driving force is corrected (front-rear wheel speed ratio - 1), and the horizontal axis represents the magnitude of the bank angle. Each point represents a piece of data that was measured in the respective trial. The curve represents a line of approximation which best represents the points. Figure 38 is a graph providing more simplified representation of the measurement data in Figure 37. Although in Figure 38 the vertical axis says "ratio between rates of change in effective radii of front and rear wheels due to vehicle body inclination", this expression is substantially equivalent to that of the vertical axis of Figure 37.

For example, it can be seen from Figure 38 that, as the vehicle body 1 travels while being banked, the tire effective radii are changed. It is considered that this relationship reflects only the influences of banking of the vehicle body 1. That is, this data is available for lean correction because changes in the tire effective radii of the front and rear wheels in accordance with the bank angle will affect the front- and rear-wheel speeds.

Slip component (d) in Figure 36 will be discussed more.

The inventors have confirmed that the value K of the front-rear wheel vehicle speed ratio after expansion/driving force correction is expressed by a sum of a value K1 corresponding to the dynamic profile during travel of the motorcycle 100, and a value K2 which remains even after driving force correction. The value K1 is the value which is available for lean correction. The value K2 is a mathematical function of driving force F. In order to determine the value K1 from the value K of the front-rear wheel vehicle speed ratio after expansion/driving force correction as obtained through measurement, it is necessary to bring the value K2 as close to zero as possible. In other words, it is necessary to bring the driving force close to zero.

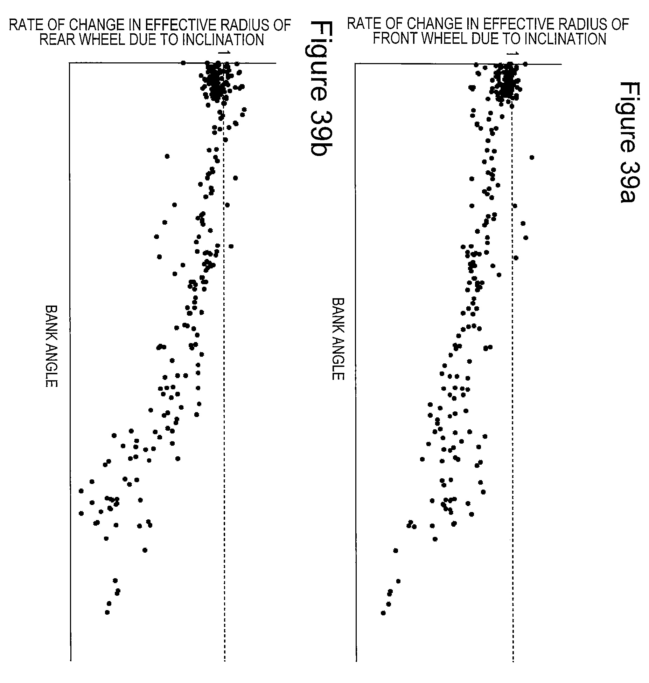

Figures 39a and 39b show results of measuring the rates of change in the effective radii of the front and rear wheels. Instead of utilizing the front-wheel wheel speed as the reference vehicle speed, in this example, a reference vehicle speed was acquired by utilizing the GPS. Then, rates of change in the effective radii were measured with respect to the front wheel and the rear wheel, in accordance with the bank angle. As compared to using the front-wheel wheel speed, calculating a reference vehicle speed by utilizing the GPS or the like and then calculating rates of change in the front and rear effective radii provides for an improved accuracy. Thus it is believed that, by obtaining the ratio between rates of change in the effective radii of the front and rear wheels from such measurement data, a more accurate ratio between rates of change in the effective radii is obtained than that in the graph of Figure 38, which is calculated by relying on the front-wheel wheel speed as the vehicle speed.

Among the two methods of calculating rates of change in the front and rear effective radii, the method that acquires a reference vehicle speed by utilizing the GPS or the like will be denoted method (A), and the method which acquires a front-wheel wheel speed as the reference vehicle speed will be denoted method (B). Method (A) can acquire more information than method (B), i.e. vehicle speed available from the GPS. Furthermore, method (A) independently provides a relationship between the vehicle speed available from the GPS and the front-wheel wheel speed and a relationship between the vehicle speed available the GPS and the rear-wheel wheel speed. Therefore, the rates of change of the effective radii of the front and rear wheels (FIGS. 39A and 39B) are independently obtained. On the other hand, method (B) is inferior in terms of the amount of information, i.e. vehicle speed available from the GPS, and it does not independently provide rates of change in the effective radii of the front and rear wheels. Therefore, it can be said that method (A) is more preferable than method (B) in terms of accuracy.

Note that the aforementioned value K2 is a value which remains even after driving force correction. Therefore, calculating the value K2 requires information of the rate of change in the effective radius of the driving wheel, i.e. the rear wheel (Figure 39B). In obtaining it, method (B) requires that driving force F be brought close to zero, as mentioned above, but method (A) does not require bringing F close to zero. From this standpoint, too, method (A) can be said to provide higher accuracy than method (B).

Information representing a ratio between rates of change in the effective radii of the front and rear tires in accordance with the bank angle is utilized as a numeric table for lean correction. This numeric table is used in the lean component estimation process of step S3 of Figure 4. Specifically, once bank angle information is acquired during travel of the motorcycle 100, this numeric table can be checked to identify a ratio between rates of change in the effective radii of the front and rear tires corresponding to the bank angle. Correcting the slip rate based on this ratio permits more accurate intervention of the stability control system, e.g., the traction control system or ABS. This slip rate correction is referred to as lean correction.

In a calculation formula for the lean component, the apparent slip rate is expressed as Pf/Pr-1. The value of Pf/Pr-1 corresponds to the vertical axis in FIGS. 37 and 38. Pf represents a front wheel speed after driving force slip correction and Pr represents a rear wheel speed after driving force slip correction. Then, the apparent slip amount is expressed as (Pf/Pr-1) • Vf. Vf represents an actual front wheel speed.

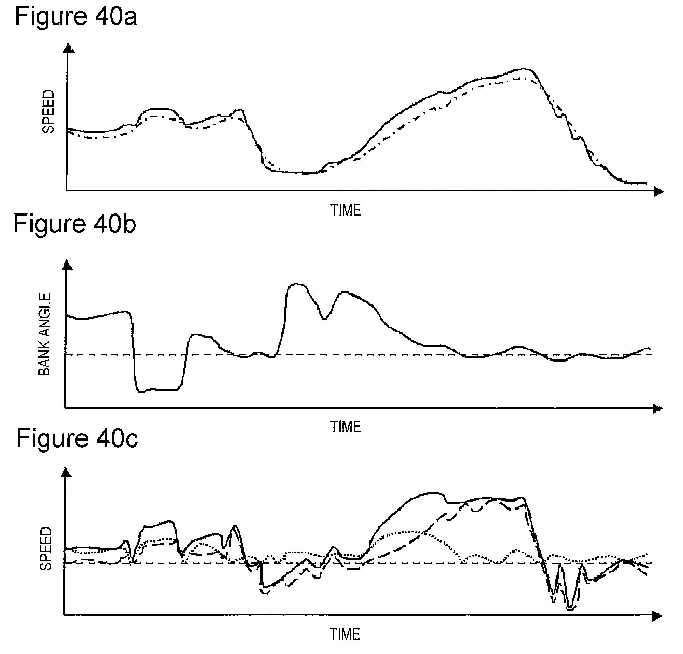

Figures 40a, 40b and 40c show results of performing lean correction for slip amounts in braking/driving force control. The horizontal axis represents time in all of these graphs. The vertical axis represents the following in the respective graphs: in Figure 40a, the rear-wheel speed (solid line) and the front-wheel speed (broken line); in Figure 40b, the bank angle of the vehicle body; and in Figure 40c, the slip amount before correction (solid line), the lean component (shorter-dashed line), and the slip amount after correction (longer-dashed line).

**Ninth Embodiment: Tire radius learning + lean correction**

As shown in Figure 4, the tire radius correction process described in first to seventh Embodiments and the lean correction process described in the eighth Embodiment can be performed in the same motorcycle 100.

For example, the stability control system 110 according to the first Embodiment illustrated in Figure 7 will be described. For the sake of lean correction, information representing a ratio between rates of change in the effective radii of the front and rear tires in accordance with the bank angle is retained in the storage device 40. After the braking/driving force control section 35 calculates a slip rate, that information may be read from the storage device 40 and a lean correction may be performed. It suffices if only a signal line is added via which the braking/driving force control section 35 can refer to the stored content in the storage device 40. The same is also true of the stability control systems of the other embodiments.

Thus, embodiments of the present invention have been described.

The above embodiments have illustrated example processes in which the bank angle is used as a physical parameter representing inclination of the vehicle body. However, the bank angle is only an exemplary physical parameter representing inclination of the vehicle body. Alternatively, yaw angular velocity or lateral acceleration may be used, for example. A motorcycle has such characteristics that it is in an inclined state whenever the vehicle body is inclined. This means that a yaw angular velocity component will occur. Therefore, yaw angular velocity can be regarded as a physical parameter representing inclination of the vehicle body. Alternatively, when the vehicle body is in an inclined state, a gravity component will be detected as lateral acceleration, or if the vehicle body is in a turning state, lateral acceleration will occur. Therefore, lateral acceleration can also be regarded as a physical parameter representing inclination of the vehicle body. Note that yaw angular velocity and lateral acceleration are physical parameters that are directly available from sensor values, thereby providing an advantage in that arithmetic operations for calculating the bank angle can be omitted. Moreover, since at least the determination as to whether the vehicle body is in an upright state or not can be made, they are more preferable for the processes of the fifth Embodiment, for example.

As for the timing of tire radius correction value learning, learning may be performed when one of the following conditions is satisfied: the condition that the vehicle speed is within a predetermined range; and the condition that the braking force and driving force that are applied to the vehicle are equal to or less than predetermined values.

One or more or all of the processes that have been described in connection with each of the above embodiments can be implemented in software (computer program) that is executed by a computer. For example, one or more or each block in Figure 5, Figure 6, etc. can be realized as one or more subroutines of a computer program. Flowcharts such as Figure 9 can be implemented as the main routine of a computer program that includes such subroutines. Such a computer program is stored in the storage device 40, and read from the storage device 40 and laid out on a RAM (not shown) as the motorcycle 100 is powered ON. Then, it is sequentially executed by the arithmetic unit (CPU) 30 of the ECU 10. Moreover, such a computer program may be distributed on the market in the form of a product recorded on a storage medium such as a CD-ROM, or transmitted through telecommunication lines such as the Internet.

The present invention can be utilized as a stability control system for a saddled vehicle. Moreover, the present invention can also be utilized as a saddled vehicle in which such a stability control system is mounted.

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the scope of the claims.

This application is based on Japanese Patent Applications No. 2014-099918 filed on May 13, 2014.

It will be appreciated that the term vehicle, straddle-type vehicle or motor vehicle used herein, and as used in the art, is meant to include the following terms also used in the art:

saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

**Claims**

1.  A measurement data acquisition system (180) for acquiring measurement data from or by using a test vehicle (100) having a first wheel (3) and a second wheel (2), the measurement data acquisition system (180) comprising:

a wheel rotation speed sensor (11 b) configured to acquire a first wheel rotation speed, wherein the first wheel rotation speed is a rotation speed of the first wheel (3);
a vehicle speed sensor (11a) configured to acquire a vehicle speed of the test vehicle (100);
an attitude detection unit (11c) configured to acquire a bank angle of a vehicle body (1) of the test vehicle (100); and
an arithmetic unit (30) configured to, during travel at a predetermined bank angle and in the absence of any braking force and in the absence of any driving force, acquire measurement data (55) representing a relationship between the first wheel rotation speed and the vehicle speed,
wherein the measurement data (55) is installable or to be installed in a predetermined or subject vehicle for use in determining a relationship between the rotation speed of a wheel of the predetermined or subject vehicle and the vehicle speed of the predetermined or subject vehicle during travel of the predetermined or subject vehicle at the predetermined bank angle.

**2.** The measurement data acquisition system (180) of claim 1, wherein,

the attitude detection unit (11c) acquires a plurality of bank angles, e.g. in chronological transition; and

for each of the plurality of bank angles, the arithmetic unit acquires measurement data (55) representing a relationship between the first wheel rotation speed and the vehicle speed.

**3.** The measurement data acquisition system (180) of claim 1, wherein during travel with the predetermined bank angle being substantially 0° and in the absence of any braking force or driving force, the arithmetic unit (30) acquires measurement data (55) representing a relationship between the first wheel rotation speed and the vehicle speed.

**4.** The measurement data acquisition system (180) of claim 3, wherein,

during travel with the predetermined bank angle being substantially 0° and in the absence of any driving force, the arithmetic unit (30) further acquires measurement data (55) representing a relationship between the first wheel rotation speed and the vehicle speed;

first measurement data (55) represents a relationship between the first wheel rotation speed and the vehicle speed acquired during travel in the absence of any driving force, and second measurement data (55) represents a relationship between the first wheel rotation speed and the vehicle speed acquired during travel in the presence of driving force; and

the arithmetic unit (30) determines a difference between the first measurement data (55) and the second measurement data (55) as an influence of the driving force on the relationship between the first wheel rotation speed and the vehicle speed.

**5.** The measurement data acquisition system (180) of claim 3, wherein,

during travel with the predetermined bank angle being an angle substantially differing from 0° and in the absence of any driving force, the arithmetic unit (30) further acquires measurement data (55) representing a relationship between the first wheel rotation speed and the vehicle speed;

first measurement data (55) represents a relationship between the first wheel rotation speed and the vehicle speed acquired during travel with the predetermined bank angle being substantially 0°;

second measurement data (55) represents a relationship between the first wheel rotation speed and the vehicle speed acquired during travel with the predetermined bank angle being an angle substantially differing from 0°; and

the arithmetic unit (30) determines a difference between the first measurement data (55) and the second measurement data (55) as an influence of the bank angle on the relationship between the first wheel rotation speed and the vehicle speed.

**6.** The measurement data acquisition system (180) of claim 4, wherein,

the test vehicle (100), has a plurality of travel modes with different tolerable slip amounts, and a different driving force is allowed to act for each of the plurality of travel modes; and

the arithmetic unit (30) acquires the second measurement data (55) during travel for two or more or each different driving force.

**7.** The measurement data acquisition system (180) of any of claims 1 to 6, wherein the vehicle speed sensor (11a) acquires the vehicle speed by utilizing the global positioning system (GPS).

**8.** The measurement data acquisition system (180) of any of claims 1 to 6, wherein the vehicle speed sensor (11 a) acquires a second wheel rotation speed as the vehicle speed, the second wheel rotation speed being a rotation speed of the second wheel (2).

**9.** The measurement data acquisition system (180) of any of claims 1 to 8, wherein the measurement data (55) is installable or to be installed in the predetermined or subject vehicle together with information representing a ratio between rates of change in the effective radii of the front and rear tires in accordance with the bank angle, for use in determining a relationship between the rotation speed of a wheel of the predetermined or subject vehicle and the vehicle speed of the predetermined or subject vehicle during travel of the predetermined or subject vehicle at the predetermined bank angle.

**10.** A measurement data acquisition system (180) for acquiring measurement data from or by using a test vehicle (100) having a first wheel (3) and a second wheel (2), the measurement data acquisition system comprising:

wheel rotation speed sensors (11a, 11b) configured to acquire a first wheel rotation speed and a second wheel rotation speed, the first wheel rotation speed and the second wheel rotation speed being respective rotation speeds of the first wheel (3) and the second wheel (2); and

an arithmetic unit (30) configured to acquire measurement data (55) representing a relationship between the first wheel rotation speed and the second wheel rotation speed, as obtained during travel in the absence of any driving force and in the absence of any braking force, the measurement data (55) being acquired at least in accordance with the first wheel rotation speed,

wherein the measurement data (55) is installable or to be installed in a predetermined or subject vehicle for use in determining a relationship between the first wheel rotation speed and the second wheel rotation speed of the predetermined or subject vehicle given a first wheel rotation speed of the predetermined or subject vehicle.

11. A test vehicle (100) comprising:

a brake (9) that generates braking force;

a motor (8) that generates driving force;

the measurement data acquisition system (180) of any of claims 1 to 10; and further

a storage device (40) configured to store acquired data (55).

12. A method of acquiring measurement data (55) from or by using a test vehicle (100) including a first wheel (3), a second wheel (2), a wheel rotation speed sensor (11 b), a vehicle speed sensor (11a), an attitude detection unit (11c), and an arithmetic unit (30), the method comprising:

acquiring a first wheel rotation speed by using the wheel rotation speed sensor (11 b), wherein the first wheel rotation speed is a rotation speed of the first wheel (3);

acquiring a vehicle speed of the test vehicle (100), by using the vehicle speed sensor (11a);

acquiring a bank angle of a vehicle body (1) of the test vehicle (100), by using the attitude detection unit (11c); and

during travel at a predetermined bank angle and in the absence of any braking force and in the absence of any driving force, acquiring measurement data (55) representing a relationship between the first wheel rotation speed and the vehicle speed by using the arithmetic unit (30), the measurement data (55) is installable or to be installed in a predetermined or subject vehicle for use in determining a relationship between the rotation speed of a wheel of the predetermined or subject vehicle and the vehicle speed of the predetermined or subject vehicle during travel of the predetermined or subject vehicle at the predetermined bank angle.

13. A method of acquiring measurement data (55) from or by using a a test vehicle (100), including a first wheel (3), a second wheel (2), wheel rotation speed sensors (11 a, 11 b), and an arithmetic unit (30), the method comprising:

acquiring a first wheel rotation speed and a second wheel rotation speed by using the wheel rotation speed sensors (11a, 11 b), the first wheel rotation speed and the second wheel rotation speed being respective rotation speeds of the first wheel (3) and the second wheel (2); and

during travel in the absence of any driving force and in the absence of any braking force, acquiring measurement data (55) representing a relationship between the first wheel rotation speed and the second wheel rotation speed by using the arithmetic unit (30), the measurement data is installable or to be installed in a predetermined or subject vehicle for use in determining a relationship between the first wheel rotation speed and the second wheel rotation speed of the predetermined or subject vehicle given a first wheel rotation speed of the predetermined or subject vehicle, the measurement data being acquired at least in accordance with the first wheel rotation speed.

14. A computer program to be executed for acquiring measurement data (55) from or by using a test vehicle (100), including a first wheel (3), a second wheel (2), a wheel rotation speed sensor (11 b), a vehicle speed sensor (11a), an attitude detection unit (11c), and an arithmetic unit (30), the computer program being executed by the arithmetic unit (30) and causing the arithmetic unit (30) to execute the processes of:

receiving a first wheel rotation speed acquired by using the wheel rotation speed sensor (11 b), wherein the first wheel rotation speed is a rotation speed of the first wheel (3);

receiving a vehicle speed of the test vehicle (100), acquired by using the vehicle speed sensor (11a);

receiving a bank angle of a vehicle body (1) of the test vehicle (100), acquired by using the attitude detection unit (11c); and

during travel at a predetermined bank angle and in the absence of any braking force and in the absence of any driving force, acquiring measurement data (55) representing a relationship between the first wheel rotation speed and the vehicle speed, the measurement data is installable or to be installed in a predetermined or subject vehicle for use in determining a relationship between the rotation speed of a wheel of the predetermined or subject vehicle and the vehicle speed of the predetermined or subject vehicle during travel of the predetermined or subject vehicle at the predetermined bank angle.

15. A computer program to be executed for acquiring measurement data from or by using a test vehicle (100), including a first wheel (3), a second wheel (2), wheel rotation speed sensors (11a, 11 b), and an arithmetic unit (30), the computer program being executed by the arithmetic unit (30) and causing the arithmetic unit (30) to execute the processes of:

receiving a first wheel rotation speed and a second wheel rotation speed, the first wheel rotation speed and the second wheel rotation speed being respective rotation speeds of the first wheel (3) and the second wheel (20) acquired by using the wheel rotation speed sensors (11a, 11 b); and
during travel in the absence of any driving force and in the absence of any braking force, acquiring measurement data (55) representing a relationship between the first wheel rotation speed and the second wheel rotation speed, the measurement data (55) is installable or to be installed in a predetermined or subject vehicle for use in determining a relationship between the first wheel rotation speed and the second wheel rotation speed of the predetermined or subject vehicle, given a first wheel rotation speed of the predetermined or subject vehicle, the measurement data (55) being acquired at least in accordance with the first wheel rotation speed.

**Patentansprüche**

1. Messdatenerfassungssystem (180) zur Erfassung von Messdaten von einem Prüffahrzeug (100) oder unter Verwendung eines Prüffahrzeugs, das über ein erstes Rad (3) und ein zweites Rad (2) verfügt, wobei das Messdatenerfassungssystem (180) umfasst:

einen Raddrehzahlsensor (11b), der konfiguriert ist, um eine erste Raddrehzahl zu erfassen, wobei es sich bei der ersten Raddrehzahl um eine Drehzahl des ersten Rades (3) handelt;
einen Fahrzeuggeschwindigkeitssensor (11a), der konfiguriert ist, um eine Fahrzeuggeschwindigkeit des Prüffahrzeugs (100) zu erfassen;
eine Lagenerfassungseinheit (11c), die konfiguriert ist, um einen Schräglagenwinkel eines Fahrzeugaufbaus (1) des Prüffahrzeugs (100) zu erfassen; und
eine arithmetische Einheit (30), die konfiguriert ist, um Messdaten (55) während der Fahrt, unter einem vorher festgelegten Schräglagenwinkel und ohne Einwirkung einer Bremskraft und ohne Einwirkung einer Antriebskraft zu erfassen, die eine Beziehung zwischen der ersten Raddrehzahl und der Fahrzeuggeschwindigkeit wiedergeben,
wobei die Messdaten (55) in einem vorher festgelegten Fahrzeug oder Fahrzeug von Interesse installierbar oder zur Installation darin vorgesehen sind, zur Verwendung bei der Bestimmung einer Beziehung zwischen der Drehzahl eines Rades des vorher festgelegten Fahrzeugs oder Fahrzeugs von Interesse und der Fahrzeuggeschwindigkeit des vorher festgelegten Fahrzeugs oder Fahrzeugs von Interesse während der Fahrt des vorher festgelegten Fahrzeugs oder Fahrzeugs von Interesse unter dem vorher festgelegten Schräglagenwinkel.

2. Messdatenerfassungssystem (180) nach Anspruch 1, wobei
die Lagenerfassungseinheit (11c) eine Vielzahl von Schräglagenwinkeln erfasst, z. B. in chronologischem Übergang; und
die arithmetische Einheit für jede der Vielzahl von Schräglagenwinkeln Messdaten (55) erfasst, die eine Beziehung zwischen der ersten Raddrehzahl und der Fahrzeuggeschwindigkeit wiedergeben.

3. Messdatenerfassungssystem (180) nach Anspruch 1, wobei die arithmetische Einheit (30) während der Fahrt, unter dem vorher festgelegten Schräglagenwinkel, der im Wesentlichen 0° beträgt, und ohne Einwirkung einer Bremskraft oder Antriebskraft Messdaten (55) erfasst, die eine Beziehung zwischen der ersten Raddrehzahl und der Fahrzeuggeschwindigkeit wiedergeben.

4. Messdatenerfassungssystem (180) nach Anspruch 3, wobei
die arithmetische Einheit (30) während der Fahrt, unter dem vorher festgelegten Schräglagenwinkel, der im Wesentlichen 0° beträgt, und ohne Einwirkung einer Antriebskraft ferner Messdaten (55) erfasst, die eine Beziehung zwischen der ersten Raddrehzahl und der Fahrzeuggeschwindigkeit wiedergeben;
erste Messdaten (55) eine Beziehung zwischen der ersten Raddrehzahl und der Fahrzeuggeschwindigkeit wiedergeben, die während der Fahrt ohne Einwirkung einer Antriebskraft erfasst werden, und zweite Messdaten (55) eine Beziehung zwischen der ersten Raddrehzahl und der Fahrzeuggeschwindigkeit wiedergeben, die während der Fahrt unter Einwirkung einer Antriebskraft erfasst werden; und

die arithmetische Einheit (30) eine Differenz zwischen den ersten Messdaten (55) und den zweiten Messdaten (55) als einen Einfluss der Antriebskraft auf die Beziehung zwischen der ersten Raddrehzahl und der Fahrzeuggeschwindigkeit bestimmt.

5. Messdatenerfassungssystem (180) nach Anspruch 3, wobei

die arithmetische Einheit (30) während der Fahrt, unter dem vorher festgelegten Schräglagenwinkel, der im Wesentlichen von 0° verschieden ist, und ohne Einwirkung einer Antriebskraft ferner Messdaten (55) erfasst, die eine Beziehung zwischen der ersten Raddrehzahl und der Fahrzeuggeschwindigkeit wiedergeben;

erste Messdaten (55) eine Beziehung zwischen der ersten Raddrehzahl und der Fahrzeuggeschwindigkeit wiedergeben, die während der Fahrt unter dem vorher festgelegten Schräglagenwinkel, der im Wesentlichen 0° beträgt, erfasst werden;

zweite Messdaten (55) eine Beziehung zwischen der ersten Raddrehzahl und der Fahrzeuggeschwindigkeit wiedergeben, die während der Fahrt unter dem vorher festgelegten Schräglagenwinkel, bei dem es sich um einen Winkel handelt, der im Wesentlichen von 0° verschieden ist, erfasst werden; und

die arithmetische Einheit (30) eine Differenz zwischen den ersten Messdaten (55) und den zweiten Messdaten (55) als einen Einfluss des Schräglagenwinkels auf die Beziehung zwischen der ersten Raddrehzahl und der Fahrzeuggeschwindigkeit bestimmt.

6. Messdatenerfassungssystem (180) nach Anspruch 4, wobei

das Prüffahrzeug (100) über eine Vielzahl von Fahrmodi mit unterschiedlichen tolerierbaren Schlupfwerten verfügt, und eine unterschiedliche Antriebskraft für jeden der Vielzahl von Fahrmodi einwirken gelassen wird; und

die arithmetische Einheit (30) die zweiten Messdaten (55) für zwei oder mehr oder jede der unterschiedlichen Antriebskräfte während der Fahrt erfasst.

7. Messdatenerfassungssystem (180) nach einem der Ansprüche 1 bis 6, wobei der Fahrzeuggeschwindigkeitssensor (11a) die Fahrzeuggeschwindigkeit unter Verwendung des globalen Positioniersystems (Global Positioning System, GPS) erfasst.

8. Messdatenerfassungssystem (180) nach einem der Ansprüche 1 bis 6, wobei der Fahrzeuggeschwindigkeitssensor (11a) eine zweite Raddrehzahl als die Fahrzeuggeschwindigkeit erfasst, wobei es sich bei der zweiten Raddrehzahl um eine Drehzahl des zweiten Rades handelt (2).

9. Messdatenerfassungssystem (180) nach einem der Ansprüche 1 bis 8, wobei die Messdaten (55) in dem vorher festgelegten Fahrzeug oder Fahrzeug von Interesse installierbar oder zur Installation darin vorgesehen sind, zusammen mit Informationen, die ein Verhältnis zwischen den Änderungsraten in den Wirkungsradien der Vorder- und Hinterräder unter Berücksichtigung des Schräglagenwinkels darstellen, zur Verwendung bei der Bestimmung einer Beziehung zwischen der Drehzahl eines Rades des vorher festgelegten Fahrzeugs oder Fahrzeugs von Interesse und der Fahrzeuggeschwindigkeit des vorher festgelegten Fahrzeugs oder Fahrzeugs von Interesse während der Fahrt des vorher festgelegten Fahrzeugs oder Fahrzeugs von Interesse unter dem vorher festgelegten Schräglagenwinkel.

10. Messdatenerfassungssystem (180) zur Erfassung von Messdaten von einem Prüffahrzeug (100) oder unter Verwendung eines Prüffahrzeugs, das über ein erstes Rad (3) und ein zweites Rad (2) verfügt, wobei das Messdatenerfassungssystem umfasst:

Raddrehzahlsensoren (11a, 11b), die konfiguriert sind, um eine erste Raddrehzahl und eine zweite Raddrehzahl zu erfassen, wobei es sich bei der ersten Raddrehzahl und der zweiten Raddrehzahl um die jeweiligen Drehzahlen des ersten Rades (3) und des zweiten Rades (2) handelt; und

eine arithmetische Einheit (30), die konfiguriert ist, um Messdaten (55) zu erfassen, die eine Beziehung zwischen der ersten Raddrehzahl und der zweiten Raddrehzahl wiedergeben, die während der Fahrt ohne Einwirkung einer Antriebskraft und ohne Einwirkung einer Bremskraft erhalten wurden, wobei die Messdaten (55) zumindest unter Berücksichtigung der ersten Raddrehzahl erfasst werden,

wobei die Messdaten (55) in einem vorher festgelegten Fahrzeug oder Fahrzeug von Interesse installierbar oder zur Installation darin vorgesehen sind, zur Verwendung bei der Bestimmung einer Beziehung zwischen der ersten Raddrehzahl und der zweiten Raddrehzahl des vorher festgelegten Fahrzeugs oder Fahrzeugs von Interesse bei einer gegebenen ersten Raddrehzahl des vorher festgelegten Fahrzeugs oder Fahrzeugs von Interesse.

**11.** Prüffahrzeug (100), umfassend:

eine Bremse (9), die eine Bremskraft erzeugt;
einen Motor (8), der Antriebskraft erzeugt;
das Messdatenerfassungssystem (180) nach einem der Ansprüche 1 bis 10; und ferner
eine Speichervorrichtung (40), die zur Speicherung der erfassten Daten (55) konfiguriert ist.

**12.** Verfahren zur Erfassung von Messdaten (55) von einem Prüffahrzeug (100) oder unter Verwendung eines Prüffahrzeugs, das ein erstes Rad (3), ein zweites Rad (2), einen Raddrehzahlsensor (11b), einen Fahrzeuggeschwindigkeitssensor (11a), eine Lagenerfassungseinheit (11c) und eine arithmetische Einheit (30) aufweist, wobei das Verfahren Folgendes umfasst:

Erfassung einer ersten Raddrehzahl unter Verwendung des Raddrehzahlsensors (11b), wobei es sich bei der ersten Raddrehzahl um eine Drehzahl des ersten Rades (3) handelt;
Erfassen einer Fahrzeuggeschwindigkeit des Prüffahrzeugs (100) unter Verwendung des Fahrzeuggeschwindigkeitssensors (11a);
Erfassen eines Schräglagenwinkels eines Fahrzeugaufbaus (1) des Prüffahrzeugs (100) unter Verwendung der Lagenerfassungseinheit (11c); und
Erfassen von Messdaten (55) während der Fahrt, unter einem vorher festgelegten Schräglagenwinkel und ohne Einwirkung einer Bremskraft und ohne Einwirkung einer Antriebskraft, die eine Beziehung zwischen der ersten Raddrehzahl und der Fahrzeuggeschwindigkeit wiedergeben, unter Verwendung der arithmetischen Einheit (30), wobei die Messdaten (55) in einem vorher festgelegten Fahrzeug oder Fahrzeug von Interesse installierbar oder zur Installation darin vorgesehen sind, zur Verwendung bei der Bestimmung einer Beziehung zwischen der Drehzahl eines Rades des vorher festgelegten Fahrzeugs oder Fahrzeugs von Interesse und der Fahrzeuggeschwindigkeit des vorher festgelegten Fahrzeugs oder Fahrzeugs von Interesse während der Fahrt des vorher festgelegten Fahrzeugs oder Fahrzeugs von Interesse unter dem vorher festgelegten Schräglagenwinkel.

**13.** Verfahren zur Erfassung von Messdaten (55) von einem Prüffahrzeug (100) oder unter Verwendung eines Prüffahrzeugs, das ein erstes Rad (3), ein zweites Rad (2), Raddrehzahlsensoren (11a, 11b) und eine arithmetische Einheit (30) aufweist, wobei das Verfahren Folgendes umfasst:

Erfassung einer ersten Raddrehzahl und einer zweiten Raddrehzahl unter Verwendung der Raddrehzahlsensoren (11a, 11b), wobei es sich bei der ersten Raddrehzahl und der zweiten Raddrehzahl um die jeweiligen Drehzahlen des ersten Rades (3) und des zweiten Rades (2) handelt; und
Erfassen von Messdaten (55) während der Fahrt, ohne Einwirkung einer Antriebskraft und ohne Einwirkung einer Bremskraft , die eine Beziehung zwischen der ersten Raddrehzahl und der zweiten Raddrehzahl wiedergeben, unter Verwendung der arithmetischen Einheit (30), wobei die Messdaten in einem vorher festgelegten Fahrzeug oder Fahrzeug von Interesse installierbar oder zur Installation darin vorgesehen sind, zur Verwendung bei der Bestimmung einer Beziehung zwischen der ersten Raddrehzahl und der zweiten Raddrehzahl des vorher festgelegten Fahrzeugs oder Fahrzeugs von Interesse bei einer ersten gegebenen Raddrehzahl des vorher festgelegten Fahrzeugs oder Fahrzeugs von Interesse und die erfassten Messdaten mindestens unter Berücksichtigung der ersten Raddrehzahl erfasst werden.

**14.** Auszuführendes Computerprogramm zur Erfassung von Messdaten (55) von einem Prüffahrzeug (100) oder unter Verwendung eines Prüffahrzeugs, das ein erstes Rad (3), ein zweites Rad (2), einen Raddrehzahlsensor (11b), einen Fahrzeuggeschwindigkeitssensor (11a), eine Lagenerfassungseinheit (11c) und eine arithmetische Einheit (30) aufweist, wobei das Computerprogramm von der arithmetischen Einheit (30) ausgeführt wird und die arithmetische Einheit (30) dazu veranlasst, folgende Vorgänge auszuführen:

Empfangen einer ersten Raddrehzahl, die unter Verwendung des Raddrehzahlsensors (11b) erfasst wurde, wobei es sich bei der ersten Raddrehzahl um eine Drehzahl des ersten Rades (3) handelt;
Empfangen einer Fahrzeuggeschwindigkeit des Prüffahrzeugs (100), die unter Verwendung des Fahrzeuggeschwindigkeitssensors (11a) erfasst wurde;
Empfangen eines Schräglagenwinkels eines Fahrzeugaufbaus (1) des Prüffahrzeugs (100), der unter Verwendung der Lagenerfassungseinheit (11c) erfasst wurde; und

Erfassen von Messdaten (55) während der Fahrt, unter einem vorher festgelegten Schräglagenwinkel und ohne Einwirkung einer Bremskraft und ohne Einwirkung einer Antriebskraft, die eine Beziehung zwischen der ersten Raddrehzahl und der Fahrzeuggeschwindigkeit wiedergeben, wobei die Messdaten in einem vorher festgelegten Fahrzeug oder Fahrzeug von Interesse installierbar oder zur Installation darin vorgesehen sind, zur Verwendung bei der Bestimmung einer Beziehung zwischen der Drehzahl eines Rades des vorher festgelegten Fahrzeugs oder Fahrzeugs von Interesse und der Fahrzeuggeschwindigkeit des vorher festgelegten Fahrzeugs oder Fahrzeugs von Interesse während der Fahrt des vorher festgelegten Fahrzeugs oder Fahrzeugs von Interesse unter dem vorher festgelegten Schräglagenwinkel.

15. Auszuführendes Computerprogramm zur Erfassung von Messdaten von einem Prüffahrzeug (100) oder unter Verwendung eines Prüffahrzeugs, das ein erstes Rad (3), ein zweites Rad (2), Raddrehzahlsensoren (11a, 11b) und eine arithmetische Einheit (30) aufweist, wobei das Computerprogramm von der arithmetischen Einheit (30) ausgeführt wird und die arithmetische Einheit (30) dazu veranlasst, folgende Vorgänge auszuführen:

Empfangen einer ersten Raddrehzahl und einer zweiten Raddrehzahl, wobei es sich bei der ersten Raddrehzahl und der zweiten Raddrehzahl um die jeweiligen Drehzahlen des ersten Rades (3) und des zweiten Rades (20) handelt, die unter Verwendung der Raddrehzahlsensoren (11a, 11b) erfasst wurden; und
Erfassen von Messdaten (55) während der Fahrt, ohne Einwirkung einer Antriebskraft und ohne Einwirkung einer Bremskraft, die eine Beziehung zwischen der ersten Raddrehzahl und der zweiten Raddrehzahl wiedergeben, wobei die Messdaten (55) in einem vorher festgelegten Fahrzeug oder Fahrzeug von Interesse installierbar oder zur Installation darin vorgesehen sind, zur Verwendung bei der Bestimmung einer Beziehung zwischen der ersten Raddrehzahl und der zweiten Raddrehzahl des vorher festgelegten Fahrzeugs oder Fahrzeugs von Interesse bei einer ersten gegebenen Raddrehzahl des vorher festgelegten Fahrzeugs oder Fahrzeugs von Interesse gegeben ist und die erfassten Messdaten (55) mindestens unter Berücksichtigung der ersten Raddrehzahl erfasst werden.

## Revendications

1. Système d'acquisition de données de mesure (180) permettant l'acquisition de données de mesure provenant d'un, ou en utilisant un véhicule d'essai (100) ayant une première roue (3) et une deuxième roue (2), le système d'acquisition des données de mesure (180) comprenant :

un capteur de vitesse de rotation de roue (11b) configuré pour acquérir une première vitesse de rotation de roue, où la première vitesse de rotation de roue est une vitesse de rotation de la première roue (3) ;
un capteur de vitesse de véhicule (11a) configuré pour acquérir une vitesse du véhicule du véhicule d'essai (100) ;
une unité de détection d'attitude (11c) configurée pour acquérir un angle d'inclinaison d'une caisse du véhicule (1) du véhicule d'essai (100) ; et
une unité arithmétique (30) configurée pour, pendant le déplacement à un angle d'inclinaison prédéterminé et en l'absence de toute force de freinage et en l'absence de toute force motrice, acquérir des données de mesure (55) représentant une relation entre la première vitesse de rotation de roue et la vitesse du véhicule,
où les données de mesure (55) peuvent être installées ou sont installées dans un véhicule prédéterminé ou un véhicule en question pour utilisation dans la détermination d'une relation entre la vitesse de rotation d'une roue du véhicule prédéterminé ou du véhicule en question et la vitesse de véhicule du véhicule prédéterminé ou du véhicule en question pendant le déplacement du véhicule prédéterminé ou du véhicule en question à l'angle d'inclinaison prédéterminé.

2. Système d'acquisition de données de mesure (180) selon la revendication 1, où
l'unité de détection d'attitude (11c) acquiert une pluralité d'angles d'inclinaison, par exemple en transition chronologique ; et
pour chacun de la pluralité des angles d'inclinaison, l'unité arithmétique acquiert des données de mesure (55) représentant une relation entre la première vitesse de rotation de roue et la vitesse du véhicule.

3. Système d'acquisition de données de mesure (180) selon la revendication 1, où pendant le déplacement avec l'angle d'inclinaison prédéterminé étant essentiellement égal à 0° et en l'absence de toute force de freinage ou de force motrice, l'unité arithmétique (30) acquiert des données de mesure (55) représentant une relation entre la première vitesse de rotation de roue et la vitesse du véhicule.

4. Système d'acquisition de données de mesure (180) selon la revendication 3, où
pendant le déplacement avec l'angle d'inclinaison prédéterminé étant essentiellement égal à 0° et en l'absence de toute force motrice, l'unité arithmétique (30) acquiert en outre des données de mesure (55) représentant une relation entre la première vitesse de rotation de roue et la vitesse du véhicule ;
les premières données de mesure (55) représentent une relation entre la première vitesse de rotation de roue et la vitesse de véhicule acquise au cours d'un déplacement en l'absence de toute force motrice, et les deuxièmes données de mesure (55) représentent une relation entre la première vitesse de rotation de roue et la vitesse de véhicule acquise au cours d'un déplacement en présence de force motrice ; et
l'unité arithmétique (30) détermine une différence entre les premières des données de mesure (55) et les deuxièmes données de mesure (55) comme influence de la force motrice sur la relation entre la première vitesse de rotation de roue et la vitesse du véhicule.

5. Système d'acquisition de données de mesure (180) selon la revendication 3, où
pendant le déplacement avec l'angle d'inclinaison prédéterminé étant essentiellement différent de 0° et en l'absence de toute force motrice, l'unité arithmétique (30) acquiert en outre des données de mesure (55) représentant une relation entre la première vitesse de rotation de roue et la vitesse du véhicule ;
les premières données de mesure (55) représentent une relation entre la première vitesse de rotation de roue et la vitesse de véhicule acquise au cours d'un déplacement avec l'angle d'inclinaison prédéterminé étant essentiellement égal à 0° ;
les deuxièmes données de mesure (55) représentent une relation entre la première vitesse de rotation de roue et la vitesse de véhicule acquise au cours d'un déplacement avec l'angle d'inclinaison prédéterminé étant essentiellement différent de 0° ; et
l'unité arithmétique (30) détermine une différence entre les premières données de mesure (55) et les deuxièmes données de mesure (55) comme influence de l'angle d'inclinaison sur la relation entre la première vitesse de rotation de roue et la vitesse du véhicule.

6. Système d'acquisition de données de mesure (180) selon la revendication 4, où
le véhicule d'essai (100) dispose d'une pluralité de modes de déplacement avec différentes quantités de patinage tolérables, et une autre force motrice peut intervenir pour chacun de la pluralité des modes de déplacement ; et
l'unité arithmétique (30) acquiert les deuxièmes données de mesure (55) pendant un déplacement pour deux ou plusieurs ou chaque force motrice différente.

7. Système d'acquisition de données de mesure (180) selon l'une quelconque des revendications 1 à 6, où le capteur de vitesse véhicule (11a) acquiert la vitesse du véhicule en utilisant le système de positionnement global (GPS).

8. Système d'acquisition de données de mesure (180) selon l'une quelconque des revendications 1 à 6, où le capteur de vitesse véhicule (11a) acquiert une deuxième vitesse de rotation de roue comme vitesse du véhicule, la deuxième vitesse de rotation de roue étant une vitesse de rotation de la deuxième roue (2).

9. Système d'acquisition de données de mesure (180) selon l'une quelconque des revendications 1 à 8, où les données de mesure (55) peuvent être installées ou sont installées dans un véhicule prédéterminé ou un véhicule en question avec des infornlations représentant un rapport entre les taux de changement au niveau des rayons effectifs des pneus avant et des pneus arrière en fonction de l'angle d'inclinaison, pour utilisation dans la détermination d'une relation entre la vitesse de rotation d'une roue du véhicule prédéterminé ou du véhicule en question et la vitesse de véhicule du véhicule prédéterminé ou du véhicule en question pendant le déplacement du véhicule prédéterminé ou du véhicule en question à l'angle d'inclinaison prédéterminé.

10. Système d'acquisition de données de mesure (180) permettant l'acquisition de données de mesure provenant d'un, ou en utilisant un véhicule d'essai (100) ayant une première roue (3) et une deuxième roue (2), le système d'acquisition des données de mesure comprenant :

des capteurs de vitesse de rotation de roue (11a, 11b) configurés pour acquérir une première vitesse de rotation de roue et une deuxième vitesse de rotation de roue, la première vitesse de rotation de roue et la deuxième vitesse de rotation de roue étant les vitesses de rotation respectives de la première roue (3) et de la deuxième roue (2) ; et
une unité arithmétique (30) configurée pour acquérir des données de mesure (55) représentant une relation entre la première vitesse de rotation de roue et la deuxième vitesse de rotation de roue, comme on les a obtenues pendant un déplacement en l'absence de toute force motrice et en l'absence de toute force de freinage, les données de mesure (55) étant acquises au moins conformément à la première vitesse de rotation de roue, où les données de mesure (55) peuvent être installées ou sont installées dans un véhicule prédéterminé ou un véhicule en question pour utilisation dans la détermination d'une relation entre la première vitesse de rotation de roue et la deuxième vitesse de rotation de roue du véhicule prédéterminé ou du véhicule en question en fonction d'une première vitesse de rotation de roue du véhicule prédéterminé ou du véhicule en question.

11. Véhicule d'essai (100) comprenant :

un frein (9) qui génère une force de freinage ;
un moteur (8) qui génère une force motrice ;
le système d'acquisition de données de mesure (180) selon l'une quelconque des revendications 1 à 10 ; et en outre
un dispositif de stockage (40) configuré pour stocker les données acquises (55).

12. Procédé d'acquisition de données de mesure (55) provenant d'un ou à l'aide d'un véhicule d'essai (100) comprenant une première roue (3), une deuxième roue (2), un capteur de vitesse de rotation de roue (11b), un capteur de vitesse véhicule (11a), une unité de détection d'attitude (11e) et une unité arithmétique (30), le procédé comprenant :

l'acquisition d'une première vitesse de rotation de roue en utilisant le capteur de vitesse de rotation de roue (11b), où la première vitesse de rotation de roue est une vitesse de rotation de la première roue (3) ;
l'acquisition d'une vitesse de véhicule du véhicule d'essai (100), en utilisant le capteur de vitesse véhicule (11a) ;
l'acquisition d'un angle d'inclinaison d'une caisse du véhicule (1) du véhicule d'essai (100), en utilisant l'unité de détection d'attitude (11c) ; et
pendant le déplacement à un angle d'inclinaison prédéterminé et en l'absence de toute force de freinage et en l'absence de toute force motrice, l'acquisition de données de mesure (55) représentant une relation entre la première vitesse de rotation de roue et la vitesse du véhicule en utilisant l'unité arithmétique (30), les données de mesure (55) peuvent être installées ou sont installées dans un véhicule prédéterminé ou un véhicule en question pour utilisation dans la détermination d'une relation entre la vitesse de rotation d'une roue du véhicule prédéterminé ou du véhicule en question et la vitesse de véhicule du véhicule prédéterminé ou du véhicule en question pendant le déplacement du véhicule prédéterminé ou du véhicule en question à l'angle d'inclinaison prédéterminé.

13. Procédé d'acquisition de données de mesure (55) provenant d'un ou à l'aide d'un véhicule d'essai (100) comprenant une première roue (3), une deuxième roue (2), des capteurs de vitesse de rotation de roue (11a, 11b) et une unité arithmétique (30), le procédé comprenant :

l'acquisition d'une première vitesse de rotation de roue et une deuxième vitesse de rotation de roue en utilisant les capteurs de vitesse de rotation de roue (11a, 11 b), la première vitesse de rotation de roue et la deuxième vitesse de rotation de roue étant les vitesses de rotation respectives de la première roue (3) et de la deuxième roue (2) ; et
pendant le déplacement en l'absence de toute force motrice et en l'absence de toute force de freinage, l'acquisition de données de mesure (55) représentant une relation entre la première vitesse de rotation de roue et la deuxième vitesse de rotation de roue en utilisant l'unité arithmétique (30), où les données de mesure peuvent être installées ou sont installées dans un véhicule prédéterminé ou un véhicule en question pour utilisation dans la détermination d'une relation entre la première vitesse de rotation de roue et la deuxième vitesse de rotation de roue du véhicule prédéterminé ou du véhicule en question en fonction d'une première vitesse de rotation de roue du véhicule prédéterminé ou du véhicule en question, les données de mesure étant acquises au moins conformément à la première vitesse de rotation de roue.

14. Programme informatique à exécuter pour l'acquisition de données de mesure (55) provenant d'un ou à l'aide d'un véhicule d'essai (100) comprenant une première roue (3), une deuxième roue (2), un capteur de vitesse de rotation de roue (11b), un capteur de vitesse véhicule (11a), une unité de détection d'attitude (11c) et une unité arithmétique (30), le programme informatique étant exécuté par l'unité arithmétique (30) et conduisant l'unité arithmétique (30) à exécuter les traitements suivants :

réception d'une première vitesse de rotation de roue acquise en utilisant le capteur de vitesse de rotation de roue (11 b), où la première vitesse de rotation de roue est une vitesse de rotation de la première roue (3) ;
réception d'une vitesse de véhicule du véhicule d'essai (100), acquise en utilisant le capteur de vitesse véhicule (11a) ;

réception d'un angle d'inclinaison d'une caisse du véhicule (1) du véhicule d'essai (100), en utilisant l'unité de détection d'attitude (11c) ; et

pendant le déplacement à un angle d'inclinaison prédéterminé et en l'absence de toute force de freinage et en l'absence de toute force motrice, acquisition de données de mesure (55) représentant une relation entre la première vitesse de rotation de roue et la vitesse du véhicule, les données de mesure peuvent être installées ou sont installées dans un véhicule prédéterminé ou un véhicule en question pour utilisation dans la détermination d'une relation entre la vitesse de rotation d'une roue du véhicule prédéterminé ou du véhicule en question et la vitesse de véhicule du véhicule prédéterminé ou du véhicule en question pendant le déplacement du véhicule prédéterminé ou du véhicule en question à l'angle d'inclinaison prédéterminé.

15. Programme informatique à exécuter pour l'acquisition de données de mesure provenant d'un ou à l'aide d'un véhicule d'essai (100) comprenant une première roue (3), une deuxième roue (2), des capteurs de vitesse de rotation de roue (11a, 11b) et une unité arithmétique (30), le programme informatique étant exécuté par l'unité arithmétique (30) et conduisant l'unité arithmétique (30) à exécuter les traitements suivants :

réception d'une première vitesse de rotation de roue et d'une deuxième vitesse de rotation de roue, la première vitesse de rotation de roue et la deuxième vitesse de rotation de roue étant les vitesses de rotation respectives de la première roue (3) et de la deuxième roue (20) acquises en utilisant les capteurs de vitesse de rotation de roue (11a, 11b) et

pendant le déplacement en l'absence de toute force motrice et en l'absence de toute force de freinage, acquisition de données de mesure (55) représentant une relation entre la première vitesse de rotation de roue et la deuxième vitesse de rotation de roue, les données de mesure (55) peuvent être installées ou sont installées dans un véhicule prédéterminé ou un véhicule en question pour utilisation dans la détermination d'une relation entre la première vitesse de rotation de roue et la deuxième vitesse de rotation de roue du véhicule prédéterminé ou du véhicule en question, en fonction d'une première vitesse de rotation de roue du véhicule prédéterminé ou du véhicule en question, les données de mesure (55) étant acquises au moins conformément à la première vitesse de rotation de roue.

Figure 1

Figure 2

FRONT-WHEEL
ROTATION SPEED

REAR-WHEEL
ROTATION SPEED

WHEEL SPEED CALCULA-
TION (TIRE RADIUS
DESIGN VALUE)

WHEEL SPEED CALCULA-
TION (TIRE RADIUS
DESIGN VALUE)

km/h

km/h

ACQUIRE SLIP AMOUNT (SPEED DIFFERENCE
BETWEEN REAR WHEEL AND FRONT WHEEL)
OR SLIP RATE (SPEED RATIO BETWEEN
REAR WHEEL AND FRONT WHEEL)

SLIP COMPONENT
(km/h OR %)

Figure 3

FRONT-WHEEL ROTATION SPEED

REAR-WHEEL ROTATION SPEED

CORRECTION VALUE IS UPDATED ALSO DURING USER'S RIDE

WHEEL SPEED CALCU-LATION (TIRE RADIUS DESIGN VALUE)

WHEEL SPEED CALCU-LATION (TIRE RADIUS DESIGN VALUE)

km/h

km/h

TIRE RADIUS CORRECTION

S2

CORRECTION VALUE

TIRE RADIUS LEARNING

S1

ACQUIRE SLIP AMOUNT (SPEED DIFFERENCE BETWEEN REAR WHEEL AND FRONT WHEEL) OR SLIP RATE (SPEED RATIO BETWEEN REAR WHEEL AND FRONT WHEEL)

SLIP COMPONENT BEFORE CORRECTION (km/h OR %)

FIXED BY MANUFACTURER AT DEVELOPMENT PHASE

LEAN CORRECTION

S4

ESTIMATE LEAN COMPONENT

S3

ATTITUDE SENSOR INFORMATION

SLIP COMPONENT AFTER CORRECTION (km/h OR %)

Figure 4

VEHICLE SPEED SIGNAL
(FRONT WHEEL PULSE)

VEHICLE SPEED SIGNAL
(REAR WHEEL PULSE)

FRONT-WHEEL
ROTATION
SPEED
CALCULATION

REAR-WHEEL
ROTATION
SPEED
CALCULATION

FRONT-WHEEL
WHEEL SPEED
ACQUISITION

REAR-WHEEL
WHEEL SPEED
ACQUISITION

TIRE RADIUS
LEARNING

TIRE RADIUS
CORRECTION
VALUE
REFLECTION

CONTROL-PURPOSE
FRONT-WHEEL
WHEEL SPEED
ACQUISITION

CONTROL-PURPOSE
REAR-WHEEL
WHEEL SPEED
ACQUISITION

SLIP AMOUNT
ACQUISITION

Figure 5

VEHICLE SPEED SIGNAL (FRONT WHEEL PULSE)

VEHICLE SPEED SIGNAL (REAR WHEEL PULSE)

FRONT-WHEEL ROTATION SPEED CALCULATION

REAR-WHEEL ROTATION SPEED CALCULATION

FRONT-WHEEL WHEEL SPEED ACQUISITION

REAR-WHEEL WHEEL SPEED ACQUISITION

BANK ANGLE

TIRE RADIUS LEARNING

TIRE RADIUS CORRECTION VALUE REFLECTION

CONTROL-PURPOSE FRONT-WHEEL WHEEL SPEED ACQUISITION

CONTROL-PURPOSE REAR-WHEEL WHEEL SPEED ACQUISITION

SLIP AMOUNT ACQUISITION

Figure 6

Figure 7

EP 2 944 527 B1

Figure 8

START

ACQUIRE WHEEL SPEED FROM WHEEL ROTATION
SPEED SENSOR SIGNAL
ACQUIRE REFERENCE VEHICLE SPEED REFERENCE
VEHICLE SPEED SENSOR SIGNAL — S11

ACQUIRE WHEEL SPEED RATIO FROM RATIO BETWEEN
WHEEL SPEED AND REFERENCE VEHICLE SPEED — S12

ACQUIRE PREVIOUS TIRE RADIUS CORRECTION
VALUE TABLE FROM STORAGE DEVICE — S13

ACQUIRE ATTITUDE INFORMATION — S14

JUDGE LEARNING-
PERMITTING CONDITION — S15

S16

RESULT OF JUDGMENT — NOT PERMITTED

PERMITTED

S17
IN TIRE RADIUS CORRECTION VALUE TABLE,
UPDATE VALUE CORRESPONDING TO
ATTITUDE INFORMATION TO
WHEEL SPEED RATIO VALUE

S18
MAINTAIN PREVIOUS TIRE
RADIUS CORRECTION
VALUE TABLE

EXTRACT VALUE IN TIRE RADIUS CORRECTION VALUE TABLE
THAT CORRESPONDS TO ACQUIRED ATTITUDE INFORMATION,
AND ADOPT THE VALUE AS TIRE RADIUS CORRECTION VALUE — S19

STORE TIRE RADIUS CORRECTION VALUE TABLE
TO STORAGE DEVICE — S20

CORRECT WHEEL SPEED WITH EXTRACTED TIRE RADIUS
CORRECTION VALUE, THUS ACQUIRING
CONTROL-PURPOSE WHEEL SPEED — S21

CONTROL BRAKING/DRIVING FORCE BASED ON
CONTROL-PURPOSE WHEEL SPEED — S22

RETURN

Figure 9

Figure 10

Figure 11

Figure 12

Figure 13

(1) ─→

FRONT WHEEL-REAR WHEEL RATIO IS CHANGING BECAUSE OF ACCELERATION

FRONT WHEEL-REAR WHEEL RATIO IS CHANGING BECAUSE OF INCLINATION (BANKING)

FRONT WHEEL-REAR WHEEL RATIO IS CHANGING BECAUSE OF BRAKING

$X1$

$X2(<X1)$

LEARNING (UPDATE) SPEED: SLOW

LEARNING (UPDATE) SPEED: FAST

(2) ─→

(3) ─→

POWERING ON

PREDETERMINED PERIOD T SINCE POWERING ON

(1): RATIO BETWEEN FRONT-WHEEL ROTATION SPEED AND
      REAR-WHEEL ROTATION SPEED DURING TRAVEL
(2): TIRE RADIUS CORRECTION VALUE (OR PREVIOUS FINAL VALUE AT THE START)
(3): CORRECTION VALUE UPDATING CONDITION

# Figure 14

Figure 15

EP 2 944 527 B1

Figure 16

Figure 17

START

CALCULATE ELAPSED TIME FROM CLOCK SIGNAL AND/OR CALCULATE TRAVELED DISTANCE FROM WHEEL ROTATION SPEED SENSOR SIGNAL — S41

CALCULATE WHEEL SPEED FROM WHEEL ROTATION SPEED SENSOR SIGNAL CALCULATE REFERENCE VEHICLE SPEED FROM REFERENCE VEHICLE SPEED SENSOR SIGNAL — S11

CALCULATE WHEEL SPEED RATIO FROM RATIO BETWEEN WHEEL SPEED AND REFERENCE VEHICLE SPEED — S12

ACQUIRE PREVIOUS TIRE RADIUS CORRECTION VALUE FROM STORAGE DEVICE — S13

COMPARISON TO SEE IF ELAPSED TIME AND/OR TRAVELED DISTANCE IS EQUAL TO OR LESS THAN THRESHOLD — S42

EQUAL TO OR LESS THAN THRESHOLD

RESULT OF COMPARISON — S43

GREATER THAN THRESHOLD

SET LEARNING UPDATE STEP TO SETTING VALUE 1 — S45

SET LEARNING UPDATE STEP TO SETTING VALUE 2 — S44

ACQUIRE ATTITUDE INFORMATION VALUE — S14

JUDGE LEARNING-PERMITTING CONDITION (JUDGE WHETHER ATTITUDE INFORMATION IS WITHIN THRESHOLD) — S15

RESULT OF JUDGMENT — S16

NOT PERMITTED

MAINTAIN PREVIOUS TIRE RADIUS CORRECTION VALUE — S18

PERMITTED

COMPARE DIFFERENCE (A) BETWEEN PREVIOUS TIRE RADIUS CORRECTION VALUE AND VALUE OF ACQUIRED WHEEL SPEED RATIO AGAINST LEARNING UPDATE STEP (B) — S46

RESULT OF COMPARISON — S47

A>B

A≤B

UPDATE TIRE RADIUS CORRECTION VALUE TO ACQUIRED WHEEL SPEED RATIO — S48

UPDATE TIRE RADIUS CORRECTION VALUE SO AS TO BECOME CLOSER TO ACQUIRED WHEEL SPEED RATIO BY A VALUE WHICH FALLS WITHIN THE BREADTH OF LEARNING UPDATE STEP — S49

STORE TIRE RADIUS CORRECTION VALUE TO STORAGE DEVICE — S20

CORRECT WHEEL SPEED WITH EXTRACTED TIRE RADIUS CORRECTION VALUE, THUS CALCULATING CONTROL-PURPOSE WHEEL SPEED — S21

PERFORM BRAKING/DRIVING FORCE CONTROL BASED ON CONTROL-PURPOSE WHEEL SPEED — S22

RETURN

10

40 STORAGE DEVICE

40a PREVIOUS TIRE RADIUS CORRECTION VALUE

40b CURRENT TIRE RADIUS CORRECTION VALUE

32 TIRE RADIUS CORRECTION VALUE CALCULATION SECTION

32e TIRE RADIUS CORRECTION VALUE UPDATE SECTION

32d LEARNING UPDATE STEP CALCULATION SECTION

32c

ATTITUDE INFORMATION

31 LEARNING-PERMITTING CONDITION DETECTION SECTION

33 SPEED CALCULATION SECTION

SPEED CONVERSION

SPEED CONVERSION

WHEEL ROTATION SPEED SENSOR SIGNAL

REFERENCE VEHICLE SPEED SENSOR SIGNAL

34 CONTROL-PURPOSE WHEEL SPEED CALCULATION SECTION

35 BRAKING/ DRIVING FORCE CONTROL SECTION

Figure 18

53

EP 2 944 527 B1

(a)

SPEED

TIME

(b)

INCLINATION ANGLE

TIME

(c)

CORRECTION VALUE

D

TIME

Figure 19

Figure 20

BRAKE PRESSURE SENSOR SIGNAL

ACCELERATOR POSITION
SENSOR SIGNAL

ENGINE ROTATION SENSOR SIGNAL

BRAKING/DRIVING
FORCE
CALCULATION SECTION

38

LEARNING-PERMITTING CONDITION
DETECTION SECTION

31

CHANGE AMOUNT
CALCULATION
SECTION

39

DIFFERENCE
CALCULATION

DIFFERENCE
CALCULATION

SPEED CALCULATION
SECTION

33

WHEEL
ROTATION
SPEED
SENSOR SIGNAL

SPEED
CONVERSION

REFERENCE
VEHICLE
SPEED
SENSOR
SIGNAL

SPEED
CONVERSION

Figure 21

EP 2 944 527 B1

Figure 22

Figure 23

Figure 24

(e)    SLIP NOT TOLERABLE TO RIDER
       REGION WHERE TIRE LOSES GRIP          REGION WHERE
                                             TRAVEL IS
                                             IMPOSSIBLE

(d)    SLIP NECESSARY FOR ENSURING GRIP      REGION OF
       SLIP TOLERABLE TO RIDER               USUAL TRAVEL

       TIRE DEFORMATION DURING TRAVEL
       (DYNAMIC VALUE DIFFERING FROM TIRE PROFILE)
                                             LEAN COMPONENT (PROFILE)
                                             APPARENT SLIP

(c)  (b)   INFLUENCE OF PURE SHAPE
           (STATIC VALUE REPRESENTED BY TIRE PROFILE)

(a)                                          APPARENT SLIP DUE
                                             TO TIRE EXPANSION

                    APPARENT SLIP
        (SLIP WHICH APPEARS AGAINST WHEEL
          ROTATION SPEED, NOT ACTUAL SLIP)

# Figure 25

Figure 26

Figure 27

Figure 28

EP 2 944 527 B1

(S51) TRAVEL IN UPRIGHT STATE, WITHOUT APPLYING DRIVING FORCE
· GLIDE WITH CLUTCH OFF
· ON THAT BASIS, CHECK RELATIONSHIP BETWEEN REFERENCE VEHICLE SPEED AND FRONT AND REAR WHEELS

(S52) TRAVEL IN UPRIGHT STATE, UNDER DRIVING FORCE
HOWEVER, ABRUPT ACCELERATION/DECELERATION, ETC., IS AVOIDED

INFLUENCE OF EXPANSION DETERMINED AT (S51) IS CORRECTED IN ADVANCE
ON THAT BASIS, CHECK RELATIONSHIP BETWEEN DRIVING FORCE AND FRONT AND REAR WHEELS

(S53) TRAVEL INCLUDING INCLINED (BANKED) STATES
HOWEVER, ABRUPT ACCELERATION/DECELERATION, ETC., IS AVOIDED

INFLUENCES OF EXPANSION AND DRIVING FORCE DETERMINED AT (S51) and (S52) ARE CORRECTED IN ADVANCE
ON THAT BASIS, CHECK RELATIONSHIP BETWEEN BANK ANGLE AND FRONT AND REAR WHEELS

Figure 29

SLIP NOT TOLERABLE TO RIDER
REGION WHERE TIRE LOSES GRIP

REGION WHERE
TRAVEL IS
IMPOSSIBLE

(e)

THIS COMPONENT DOES
NOT EXIST BECAUSE OF
BEING IN USUAL

(d)

THIS COMPONENT DOES
NOT EXIST BECAUSE
CLUTCH IS OFF

SLIP NECESSARY FOR ENSURING GRIP
SLIP TOLERABLE TO RIDER

REGION OF
USUAL TRAVEL

TIRE DEFORMATION DURING TRAVEL
(DYNAMIC VALUE DIFFERING FROM TIRE PROFILE)

LEAN COMPONENT (PROFILE)
APPARENT SLIP

THIS COMPONENT DOES
NOT EXIST BECAUSE OF
BEING IN UPRIGHT STATE

INFLUENCE OF PURE SHAPE
(STATIC VALUE REPRESENTED BY TIRE PROFILE)

(c)    (b)

(a)

APPARENT SLIP DUE
TO TIRE EXPANSION

APPARENT SLIP
(SLIP WHICH APPEARS AGAINST WHEEL
ROTATION SPEED, NOT ACTUAL SLIP)

# Figure 30

65

FRONT-REAR WHEEL
SPEED RATIO  [–]

FRONT-WHEEL VEHICLE SPEED[k m/h]

Figure 31

Figure 32

Figure 33

AFTER EXPANSION CORRECTION PROCESS
FRONT-REAR WHEEL SPEED RATIO [-]

REAR-WHEEL DRIVING FORCE [N]

Figure 34

Figure 35

(e)

THIS COMPONENT DOES
NOT EXIST BECAUSE OF
BEING IN USUAL

SLIP NOT TOLERABLE TO RIDER
REGION WHERE TIRE LOSES GRIP

REGION WHERE
TRAVEL IS
IMPOSSIBLE

(d)

ALREADY CORRECTED (CHARACTERISTICS
ARE KNOWN)

SLIP NECESSARY FOR ENSURING GRIP
SLIP TOLERABLE TO RIDER

REGION OF
USUAL TRAVEL

TIRE DEFORMATION DURING TRAVEL
(DYNAMIC VALUE DIFFERING FROM TIRE PROFILE)

LEAN COMPONENT
(PROFILE)APPARENT SLIP

(c)    (b)

INFLUENCE OF PURE SHAPE
(STATIC VALUE REPRESENTED BY TIRE PROFILE)

(a)

ALREADY CORRECTED (CHARACTERISTICS
ARE KNOWN)

APPARENT SLIP DUE
TO TIRE EXPANSION

APPARENT SLIP
(SLIP WHICH APPEARS AGAINST WHEEL
ROTATION SPEED, NOT ACTUAL SLIP)

RATIO BETWEEN FRONT- AND
REAR-WHEEL SPEEDS
AFTER EXPANSION/DRIVING
FORCE CORRECTION

$$= \left(\frac{P_f}{P_r} - 1\right) + \frac{BF\left(1/P_r^{\,2} - 1\right)}{T + AV_f}$$

VALUE OF INTEREST
VALUE REPRESENTING
DYNAMIC PROFILE

INFLUENCE WHICH REMAINS EVEN
AFTER DRIVING FORCE CORRECTION (NOT CORRECTABLE)
IN ORDER TO REDUCE INFLUENCE OF THIS TERM,
DRIVING FORCE SHOULD BE AS SMALL AS POSSIBLE (F→0)

Figure 36

AFTER DRIVING FORCE SLIP CORRECTION PROCESS
FRONT-REAR WHEEL SPEED RATIO -1

BANK ANGLE[deg]

# Figure 37

Figure 38

## Figure 39a

RATE OF CHANGE IN EFFECTIVE RADIUS OF FRONT WHEEL DUE TO INCLINATION

BANK ANGLE

## Figure 39b

RATE OF CHANGE IN EFFECTIVE RADIUS OF REAR WHEEL DUE TO INCLINATION

BANK ANGLE

## Figure 40a

## Figure 40b

## Figure 40c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000127940 A
- US 7469975 B
- EP 0575991 A
- JP 2014099918 A